# EUROPEAN PATENT APPLICATION

(11) **EP 4 582 916 A1**
(43) Date of publication of application: **09.07.2025**
(21) Application number: 23860430.0
(22) Date of filing: 30.08.2023
(51) Int. Cl.: G06F 3/0481, G06F 3/04842

(54) **INFORMATION PROCESSING DEVICE, INFORMATION PROCESSING METHOD, AND INFORMATION PROCESSING PROGRAM**

(30) Priority: 30.08.2022 JP 2022137221
(71) Applicant: Miyagawa, Hidehisa, Koganei-shi, Tokyo 184-0004 (JP)
(72) Inventor: Miyagawa, Hidehisa, Koganei-shi, Tokyo 184-0004 (JP)
(74) Representative: Dennemeyer & Associates S.A.
(86) International application number: PCT/JP2023/031590
(87) International publication number: WO 2024/048668

(57) **Abstract**

This information processing device comprises: a central element acquisition unit that acquires a central element which is central to a thought; a central element display instruction unit that instructs a user terminal to display the central element; a peripheral element acquisition unit that acquires a first peripheral element related to the central element; a peripheral element display instruction unit that instructs the user terminal to display the first peripheral element around the central element; a link acquisition unit that acquires a first link between the central element and the first peripheral element; and a link display instruction unit that instructs the user terminal to display the first link between the central element and the first peripheral element.

## Description

### Technical Field

The present invention relates to an information processing apparatus, an information processing method, and an information processing program.

### Background Art

In the above technical field, Patent Literature (hereinafter referred to as "PTL") 1 discloses a technology in which an individual's thinking pattern is displayed as a topology graph, concept-correspondence data, which are components, are disposed as coupling nodes, and the coupling nodes are connected to each other with coupling links. Further, PTL 2 discloses a technology in which, with respect to a structured thinking and discussion process, analyses, opinions, and criticisms are extracted and aggregated from a plurality of users and a relationship between elements is confirmed.

### Citation List

### Patent Literature

PTL 1
   Japanese Patent Application Laid-Open No. 2007-317070
PTL 2
   Japanese Patent Application Laid-Open No. 2013-105234

### Summary of Invention

### Technical Problem

However, the technologies described in the above literatures involve links, each of which is directed from a parent node to a child node, and do not make it possible to express a thought structure with a link(s) between a central element such as a subject or a proposition, which is central to thought, and a peripheral element(s) thereof.

An object of the present invention is to provide a technology for solving the above-described problem.

### Solution to Problem

**In** order to achieve the above-described object, an information processing apparatus according to the present invention includes:
a central element acquisition unit that acquires a central element which is central to thought;
a central element display instruction unit that issues an instruction to a user terminal to perform a display of the central element;
a peripheral element acquisition unit that acquires a first peripheral element related to the central element;
a peripheral element display instruction unit that issues an instruction to the user terminal to perform a display of the first peripheral element around the central element;
a link acquisition unit that acquires a first link between the central element and the first peripheral element; and
a link display instruction unit that issues an instruction to the user terminal to perform a display of the first link between the central element and the first peripheral element.

In order to achieve the above-described object, an information processing method according to the present invention includes:
acquiring a central element which is central to thought;
instructing a user terminal to display the central element;
acquiring a first peripheral element related to the central element;
instructing the user terminal to display the first peripheral element around the central element;
acquiring a first link between the central element and the first peripheral element; and
instructing the user terminal to display the first link between the central element and the first peripheral element.

In order to achieve the above-described object, an information processing program according to the present invention causes a computer to execute:
acquiring a central element which is central to thought;
instructing a user terminal to display the central element;
acquiring a first peripheral element related to the central element;
instructing the user terminal to display the first peripheral element around the central element;
acquiring a first link between the central element and the first peripheral element; and
instructing the user terminal to display the first link between the central element and the first peripheral element.

### Advantageous Effects of Invention

According to the present invention, it is possible to express a thought structure effectively.

### Brief Description of Drawings

FIG. 1 is a block diagram illustrating a configuration of an information processing system according to Embodiment 1;
FIG. 2A illustrates a display screen of a user terminal in an information processing system according to Embodiment 2;
FIG. 2B illustrates a display screen of the user terminal in the information processing system according to Embodiment 2;
FIG. 2C illustrates an operation outline in user terminals in the information processing system according to Embodiment 2;
FIG. 2D illustrates an outline of a subject input in a user terminal in the information processing system according to Embodiment 2;
FIG. 2E illustrates an outline of an element input in the user terminal in the information processing system according to Embodiment 2;
FIG. 2F illustrates an outline of a link input in the user terminal in the information processing system according to Embodiment 2;
FIG. 2G illustrates an outline of a registration request for a thought structure diagram in the user terminal in the information processing system according to Embodiment 2;
FIG. 2H illustrates an outline of edit instructions from a user terminal in the information processing system according to Embodiment 2;
FIG. 3A is a block diagram illustrating a configuration of an information processing system according to Embodiment 2;
FIG. 3B is a sequence diagram illustrating an operation procedure in the information processing system according to Embodiment 2;
FIG. 4 is a block diagram illustrating a functional configuration of a ShareB server as an information processing apparatus according to Embodiment 2;
FIG. 5A illustrates a configuration of a database according to Embodiment 2;
FIG. 5B illustrates a configuration of the database according to Embodiment 2;
FIG. 5C illustrates a configuration of a thought structure diagram generation table according to Embodiment 2;
FIG. 6 is a block diagram illustrating a hardware configuration of the ShareB server according to Embodiment 2;
FIG. 7 is a flowchart illustrating a processing procedure of the ShareB server according to Embodiment 2;
FIG. 8 is a flowchart illustrating a procedure of thought structure diagram generation processing according to Embodiment 2;
FIG. 9 is a block diagram illustrating a functional configuration of user terminals according to Embodiment 2;
FIG. 10 is a flowchart illustrating a processing procedure of the user terminals according to Embodiment 2;
FIG. 11A illustrates a voting operation of user terminals in an information processing system according to Embodiment 3;
FIG. 11B illustrates display screens of the user terminals due to voting in the information processing system according to Embodiment 3;
FIG. 11C illustrates display screens of the user terminals due to voting in the information processing system according to Embodiment 3;
FIG. 12A is a block diagram illustrating a configuration of the information processing system according to Embodiment 3;
FIG. 12B is a sequence diagram illustrating an operation procedure in the information processing system according to Embodiment 3;
FIG. 12C is a sequence diagram illustrating an operation procedure in the information processing system according to Embodiment 3;
FIG. 13 is a block diagram illustrating a functional configuration of a ShareB server as an information processing apparatus according to Embodiment 3;
FIG. 14A illustrates a configuration of a database according to Embodiment 3;
FIG. 14B illustrates a configuration of the database according to Embodiment 3;
FIG. 14C illustrates a configuration of a voting result aggregation table according to Embodiment 3;
FIG. 14D illustrates a configuration of a thought structure diagram modification table according to Embodiment 3;
FIG. 14E illustrates a configuration of the database according to Embodiment 3;
FIG. 14F illustrates a configuration of the voting result aggregation table according to Embodiment 3;
FIG. 15A is a flowchart illustrating a procedure of voting result display processing according to Embodiment 3;
FIG. 15B is a flowchart illustrating a procedure of voting result aggregation processing according to Embodiment 3;
FIG. 15C is a flowchart illustrating a procedure of reflection processing in a thought structure diagram according to Embodiment 3;
FIG. 15D is a flowchart illustrating a procedure of the reflection processing in the thought structure diagram according to Embodiment 3;
FIG. 16 is a block diagram illustrating a functional configuration of user terminals according to Embodiment 3;
FIG. 17 is a flowchart illustrating a processing procedure of the user terminals according to Embodiment 3;
FIG. 18 illustrates a display screen of a user terminal in an information processing system according to Embodiment 4;
FIG. 19 is a block diagram illustrating a functional configuration of a ShareB server as an information processing apparatus according to Embodiment 4;
FIG. 20A illustrates a configuration of a database according to Embodiment 4;
FIG. 20B illustrates a configuration of the database according to Embodiment 4;
FIG. 20C illustrates a configuration of a comment display table according to Embodiment 4;
FIG. 21A is a flowchart illustrating a processing procedure of the ShareB server according to Embodiment 4;
FIG. 21B is the flowchart illustrating the processing procedure of the ShareB server according to Embodiment 4;
FIG. 22 is a block diagram illustrating a functional configuration of user terminals according to Embodiment 4;
FIG. 23 is a flowchart illustrating a processing procedure of the user terminals according to Embodiment 4;
FIG. 24A illustrates a display screen of a user terminal in an information processing system according to Embodiment 5;
FIG. 24B illustrates another display screen of a user terminal in the information processing system according to Embodiment 5;
FIG. 24C illustrates other display screens of the user terminal in the information processing system according to Embodiment 5;
FIG. 24D illustrates another display screen of the user terminal in the information processing system according to Embodiment 5;
FIG. 25A illustrates a voting operation of user terminals in an information processing system according to Embodiment 6;
FIG. 25B is a sequence diagram illustrating an operation procedure of voting in the information processing system according to Embodiment 6;
FIG. 26A illustrates a configuration of a database according to Embodiment 6;
FIG. 26B illustrates a configuration of the database according to Embodiment 6;
FIG. 26C illustrates a configuration of the database according to Embodiment 6;
FIG. 26D is a flowchart illustrating a procedure of voting result display processing according to Embodiment 6;
FIG. 26E is a flowchart illustrating a procedure of voting result aggregation processing on whether an element according to Embodiment 6 is appropriate/inappropriate;
FIG. 27A illustrates a voting operation of user terminals in an information processing system according to Embodiment 7;
FIG. 27B illustrates a configuration of a database according to Embodiment 7;
FIG. 27C illustrates a configuration of the database according to Embodiment 7;
FIG. 27D is a flowchart illustrating a procedure of voting result aggregation processing according to Embodiment 7;
FIG. 28A illustrates a display screen of a user terminal in an information processing system according to Embodiment 8;
FIG. 28B illustrates a link generation table according to Embodiment 8;
FIG. 28C is a flowchart illustrating a processing procedure of an information processing apparatus according to Embodiment 8;
FIG. 29 illustrates a display screen of a user terminal in an information processing system according to Embodiment 9;
FIG. 30 illustrates a display screen of a user terminal in an information processing system according to Embodiment 10;
FIG. 31 illustrates a display screen of a user terminal in an information processing system according to Embodiment 11;
FIG. 32 illustrates a display screen of a user terminal in an information processing system according to Embodiment 12;
FIG. 33 illustrates a display screen of a user terminal in an information processing system according to Embodiment 13;
FIG. 34A illustrates a display screen of a user terminal in an information processing system according to Embodiment 14;
FIG. 34B illustrates a display screen of the user terminal in the information processing system according to Embodiment 14;
FIG. 34C illustrates a display screen of the user terminal in the information processing system according to Embodiment 14;
FIG. 35A illustrates a display screen of a user terminal in an information processing system according to Embodiment 15;
FIG. 35B illustrates a display screen of the user terminal in the information processing system according to Embodiment 15;
FIG. 35C illustrates a display screen of the user terminal in the information processing system according to Embodiment 15;
FIG. 36A illustrates a display screen of a user terminal in an information processing system according to Embodiment 16;
FIG. 36B illustrates a display screen of the user terminal in the information processing system according to Embodiment 16;
FIG. 36C illustrates a display screen of the user terminal in the information processing system according to Embodiment 16;
FIG. 37A illustrates a display screen of a user terminal in an information processing system according to Embodiment 17;
FIG. 37B illustrates a display screen of the user terminal in the information processing system according to Embodiment 17;
FIG. 38 is a block diagram illustrating a functional configuration of an information processing apparatus according to Embodiment 18;
FIG. 39 illustrates a configuration of a thought structure diagram generation table according to Embodiment 18;
FIG. 40A is a flowchart illustrating a processing procedure of an information processing apparatus according to Embodiment 18;
FIG. 40B is a flowchart illustrating processing procedures of the information processing apparatus according to Embodiment 18;
FIG. 41A is a table summarizing functions related to the thought structure diagram and specific contents thereof according to the embodiments of the present invention;
FIG. 41B is a table summarizing functions related to the thought structure diagram and specific contents thereof according to the embodiments of the present invention;
FIG. 42 is a table summarizing other functions of the information processing system and specific contents thereof according to the embodiments of the present invention;
FIG. 43 is a table summarizing other functions of the information processing system and specific contents thereof according to the embodiments of the present invention;
FIG. 44 is a table summarizing other functions of the information processing system and specific contents thereof according to the embodiments of the present invention;
FIG. 45 is a table summarizing other functions of the information processing system and specific contents thereof according to the embodiments of the present invention; and
FIG. 46 is a table summarizing other functions of the information processing system and specific contents thereof according to the embodiments of the present invention.

### Description of Embodiments

Hereinafter, exemplary embodiments of the present invention will be described in detail with reference to the drawings. Note that, the components described in the following embodiments are merely examples, and the technical scope of the present invention is not intended to be limited to only these components. Note that, the term "thought structure diagram" used in the specification refers to an information correlation diagram in which a peripheral element for thinking about a central element, which is a specific subject or proposition, is connected with a link indicating a relationship between the central element and the peripheral element. Here, an "element" is used as a concept that includes all things that can be recognized by humans, regardless of whether tangible or intangible, and is not limited to news, statistics, dictionaries, wiki content, moving images, audio data, posts on social media, persons, living organisms, events, all kinds of substances, concepts, ideas, words, and real or fictional existences. Further, a thought structure diagram itself can be an "element", and it is possible to create a much larger thought structure diagram that is hierarchized. Further, a central element, which is a "subject" or a "proposition", expresses a topic or problem which is central to thought. Further, a "peripheral element" expresses a material or information that serves as food for thought materials for leading to a "central element". For example, as a peripheral element, news in an external site, wiki, images, and the like can be imported by inputting a URL. A "link" expresses a connection indicating a relationship between a central element and a peripheral element, or a relationship between peripheral elements. Note that, when a certain "peripheral element" is taken up as a topic or problem which is central to thought, the "peripheral element" can be changed to a "central element". Further, a proposition is a content expressed by a declarative sentence that is either true or false, and a subject is an object that the sentence is about.

### [Embodiment 1]

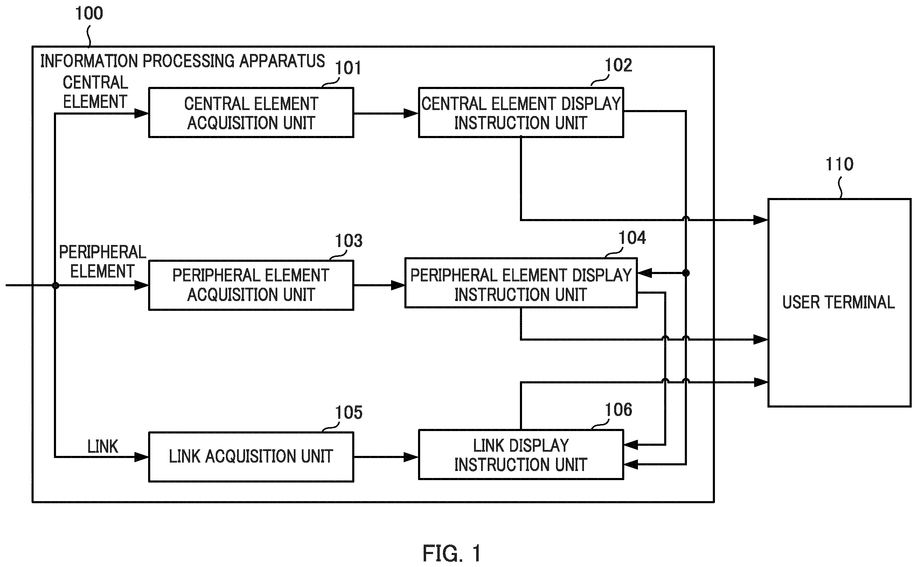

Information processing apparatus 100 as Embodiment 1 of the present invention will be described with reference to FIG. 1. Information processing apparatus 100 is an apparatus for expressing a thought structure.

As illustrated in FIG. 1, information processing apparatus 100 includes central element acquisition unit 101, central element display instruction unit 102, peripheral element acquisition unit 103, peripheral element display instruction unit 104, link acquisition unit 105, and link display instruction unit 106. Central element acquisition unit 101 acquires a central element as a graphic element which is central to thought. Central element display instruction unit 102 instructs user terminal 110 to display the central element. Peripheral element acquisition unit 103 acquires a peripheral element as a graphic element related to the central element. Peripheral element display instruction unit 104 instructs user terminal 110 to display the peripheral element around the central element. Link acquisition unit 105 acquires a link between the central element and the peripheral element. Link display instruction unit 106 instructs user terminal 110 to display the link between the central element and the peripheral element.

According to the present embodiment, it is possible to visualize a thought structure effectively.

### [Embodiment 2]

Next, an information processing system according to Embodiment 2 of the present invention will be described. In the present embodiment, a configuration and a processing procedure for generating a thought structure diagram by repeatedly inputting central element data, peripheral element data, and link data through a display screen of a user terminal will be described. Further, editing of the generated thought structure diagram will be described. Note that, in the present embodiment, an example is supposed in which "medieval Europe" is disposed as the subject as the central element, and "heliocentrism", "Renaissance", and "Reformation" are disposed as peripheral elements thereof. Then, the generation and publication/sharing of a thought structure diagram centered on a proposition "Heliocentrism is correct!", which is further a peripheral element of "heliocentrism" that is one of the peripheral elements, will be described, where the thought structure diagram is displayed by zooming in on the proposition "Heliocentrism is correct!". However, the present invention is not limited the present example. That is, in the present example, "Heliocentrism is correct!" (proposition), which is one peripheral element in the second hierarchy, is treated as the subject. As described above, a thought structure diagram may include a plurality of elements each of which can be a subject or a proposition.

### <Display Screen of User Terminal>

### (Overall Thought Structure Diagram)

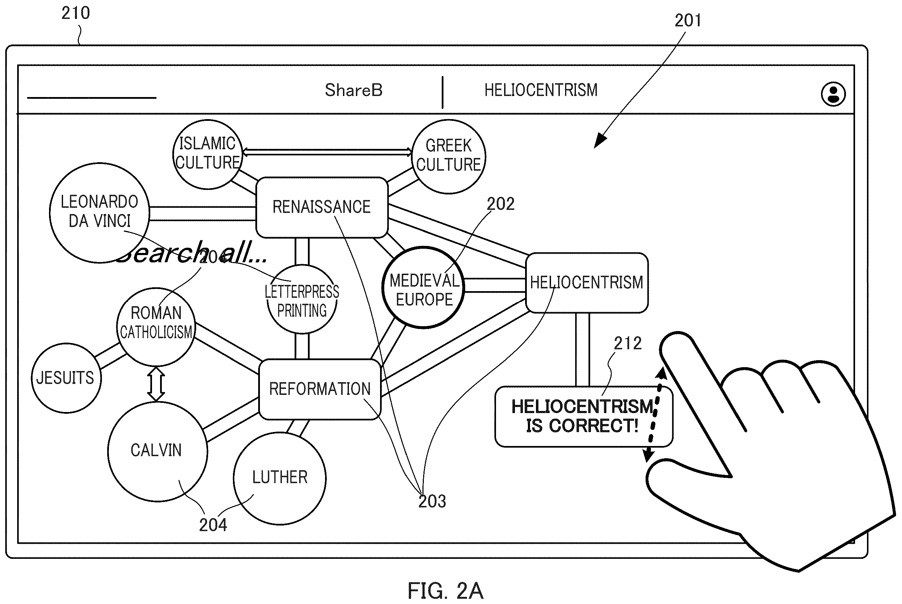

FIG. 2A illustrates display screen 201 of user terminal 210 according to the present embodiment. Display screen 201 is also referred to as a canvas, and is expressed in such a manner that a thought structure can be understood at a glance by arranging various elements via links.

Display screen 201 includes "medieval Europe" as subject 202 that is one central element which is central to thought. Then, as subjects 203 that are three peripheral elements thereof, there are "heliocentrism", "Renaissance", and "Reformation". These subjects 203 are also linked to each other or through peripheral element(s) 204 (for example, element "letterpress printing"). One of subjects 203, "heliocentrism", is linked to proposition 212 "Heliocentrism is correct!" as a peripheral element. Here, by zooming in on proposition 212 "Heliocentrism is correct!", a thought structure diagram with the proposition "Heliocentrism is correct!" as the central element appears. In the present embodiment, as described above, one thought structure diagram itself becomes an "element", and it is possible to create a much larger thought structure diagram that is hierarchized.

### (Thought Structure Diagram Handled in Present Embodiment)

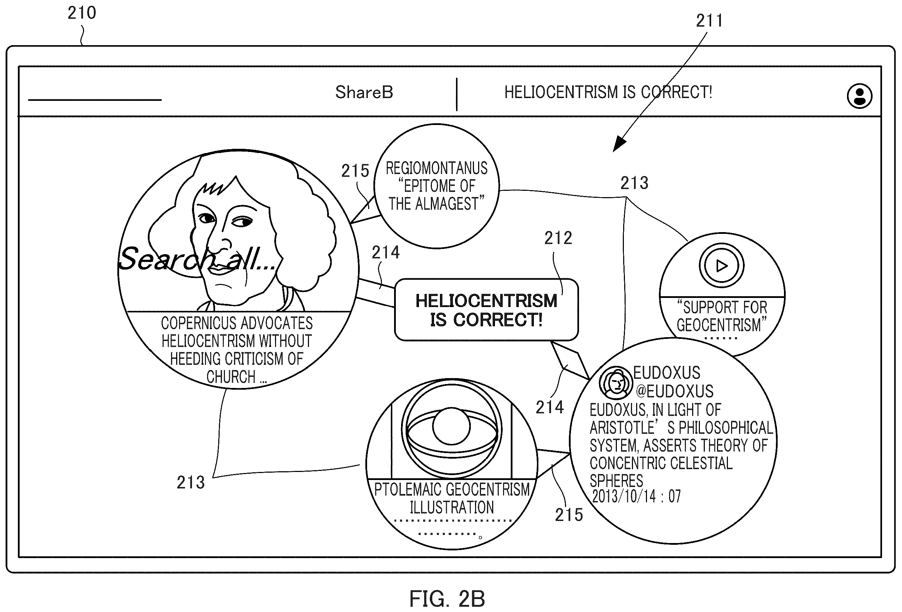

FIG. 2B illustrates display screen 211 of user terminal 210 in the information processing system according to the present embodiment. Display screen 211 is a thought structure centered on proposition 212 "Heliocentrism is correct", which is one peripheral element on display screen 201.

Display screen 211 of user terminal 210 of a user who generates a thought structure diagram displays a thought structure diagram including proposition 212 as the central element which is central to thought, a plurality of peripheral elements 213 related to proposition 212, links 214 each of which connects proposition 212 and peripheral element 213, and links 215 each of which connects a plurality of peripheral elements 213. Note that, links 214 and 215 include links indicated by an arrow (triangle □ ), a link indicated by a rectangle (□), and a link indicated by a rhombus (□). The link indicated by an arrow (triangle □ ) represents an orientation of a causal relationship (parent-child relationship), that is, a relationship in which one side acts on the other side, but the reverse is not possible. The link indicated by a rectangle (□) represents a relationship in which there is no causal relationship or in which there is no superiority or inferiority of information, but information may act on each other. The link indicated by a rhombus (□) represents an opposition relationship or conflicting information. Note that, the shapes of the links on display screen 211 are examples, and may be changed due to differences in the expression criteria in the thought structure diagram or voting results to be described later.

On display screen 211, proposition 212 as the central element is "Heliocentrism is correct!", and as peripheral elements 213 linked to proposition 212, for example, "Copernicus" as a peripheral element that supports proposition 212 is linked to proposition 212 with a rectangle without a causal relationship. On the other hand, "Eudoxus" as a peripheral element that does not support proposition 212 is linked to proposition 212 with a rhombus (□)-opposition link. However, "Eudoxus" may be linked to proposition 212 with a rectangle without a causal relationship. Further, as peripheral element 213 that is linked to peripheral element 213, for example, "Ptolemaic geocentrism" as a peripheral element that supports the peripheral element "Eudoxus" is linked to "Eudoxus" with a triangle with a causal relationship. Note that, proposition 212 "Heliocentrism is correct!" is a proposition that asks "Yes" or "No", but may also be a proposition that asks "heliocentrism" or "geocentrism" with "What is the true appearance of this universe?", for example.

Note that, on display screen 211, the size of a shape representing peripheral element 213 indicates the degree of influence of peripheral element 213 on proposition 212 as the central element, which is considered by the user who generates the thought structure diagram, and the larger the size, the greater the influence (in Embodiment 3 to be described later, the number of votes further affects). Further, the influence of a peripheral element on the central element can be indicated by the opacity of the peripheral element rather than how large the size of the peripheral element is. Note that, the display method is not limited to the size or the opacity, and a display method in which the user can easily visually grasp the configuration of the thought structure diagram and/or the influence of a peripheral element on the central element is used. For example, elements may be displayed with broken lines or the colors thereof may be changed.

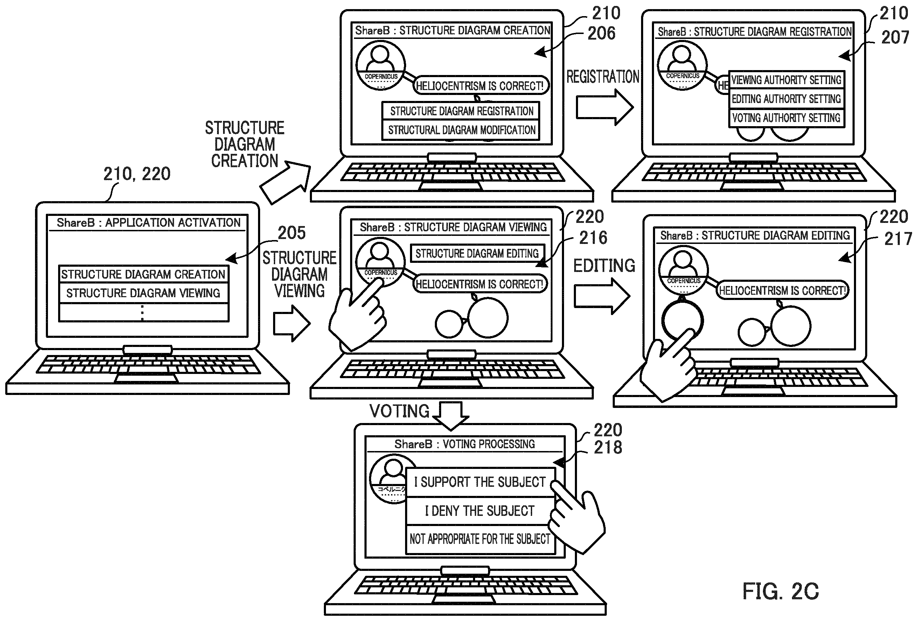

Hereinafter, an operation outline through user terminals 210 and 220 in the present embodiment will be described with reference to FIG. 2C. Note that, for convenience, user terminal 210 that creates a thought structure diagram and user terminal 220 on which the thought structure diagram is viewed will be described separately, but the same user terminal may be used for both purposes.

Display screen 205 in user terminals 210 and 220 is a menu displayed when an application of the present embodiment is activated. The menu includes structure diagram creation and structure diagram viewing. When the user selects the structure diagram creation, display screen 205 transitions to creation screen 206 for structure diagrams. On the other hand, when the user selects the structure diagram viewing, display screen 205 transitions to viewing screen 216 for structure diagrams when the user has the viewing authority.

When the user creates a structure diagram on creation screen 206, a menu for structure diagram registration and structure diagram modification is displayed on creation screen 206. When the user selects the structure diagram registration, creation screen 206 transitions to registration screen 207 for structure diagrams, and a menu for viewing authority setting, editing authority setting, and voting authority setting is displayed. In a case where authority setting is necessary, at least one of the viewing authority setting, the editing authority setting, and the voting authority setting is selected, and the authority setting is accepted. Note that, the voting authority setting is the authority setting related to

### Embodiment 3.

On viewing screen 216, the structure diagram to be viewed is displayed, and a menu for structure diagram editing is displayed. When the user selects the structure diagram editing on viewing screen 216, viewing screen 216 transitions to editing screen 217 when the user has the editing authority. On editing screen 217, editing by the user is accepted.

On the other hand, when the user selects one element on viewing screen 216, viewing screen 216 transitions to voting screen 218 on which a vote with respect to each element (subject/proposition, peripheral element, link) is accepted when the user has the voting authority. For example, in voting on a peripheral element, a selection by the user among "I support the subject" (subject support), "I deny the subject" (subject denial), or "not appropriate for the subject" (inappropriate element) is accepted.

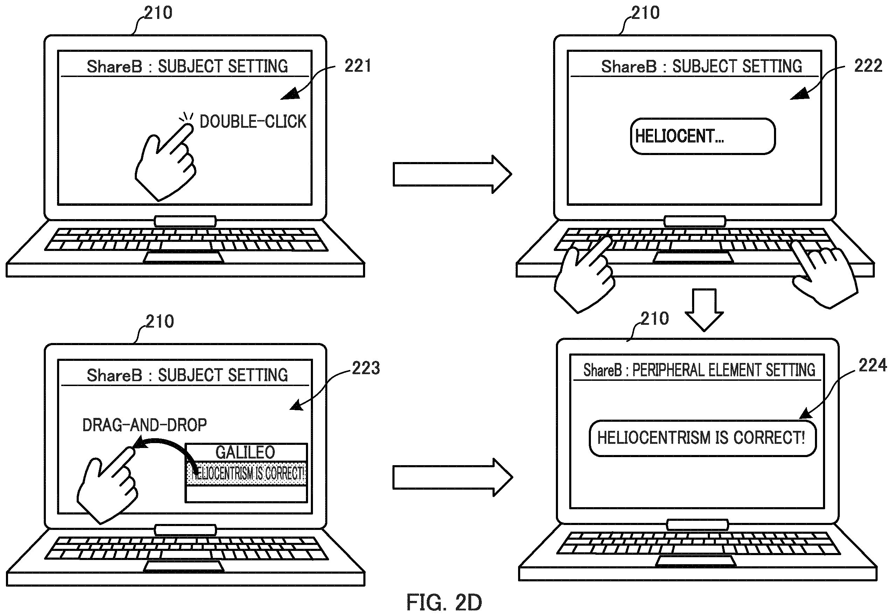

Next, an operation procedure in which the user generates a thought structure diagram on the display screen of user terminal 210 will be described with reference to FIGS. 2D to 2G. Note that, FIGS. 2D to 2F illustrate a case where user terminal 210 is a personal computer, but user terminal 210 may be a portable terminal such as a tablet or a smartphone. Further, in order to describe the operations clearly, the operations are illustrated as those on a touch screen, but it is obvious that the same operations can be performed by cursor operations using a mouse and a keyboard.

### (Outline of Subject Input)

FIG. 2D illustrates an outline of an input of a subject as the central element in user terminal 210 in the information processing system according to the present embodiment. The input of a subject includes, for example, the following two procedures, but the present invention is not limited thereto.

One procedure is a procedure of display screen 221 → display screen 222 → display screen 224. When a "ShareB application" is activated (or when a connection to a ShareB server is performed via a browser), display screen 221 is displayed and a subject setting mode (central element setting mode) is set. Here, for example, when display screen 221 is double-clicked, the "ShareB application" opens an input section for the subject in the center of the screen as in display screen 222. When subject data is keyed in on display screen 222, "Heliocentrism is correct!" is determined and displayed as the subject, and display screen 222 transitions to a display screen for an element setting mode, as in display screen 224. Note that, the input of subject data is not limited to the key input, and may be, for example, a copy input of a display sentence in another application.

The other procedure is a procedure of display screen 223 → display screen 224. When the "ShareB application" is activated (or when a connection to the ShareB server is performed via a browser), display screen 223 is displayed and the subject setting mode is set. Here, for example, when "drag-and-drop" for a display sentence in another application is performed to a screen blank portion of display screen 223, the display sentence "Heliocentrism is correct!" is determined and displayed as the subject, and display screen 223 transitions to the display screen for the element setting mode, as in display screen 224.

### (Outline of Element Input)

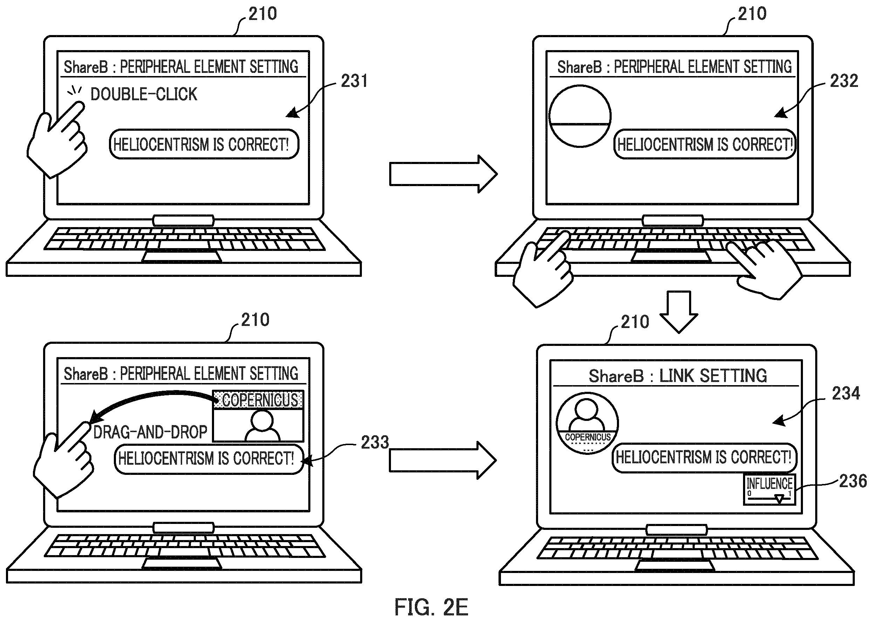

FIG. 2E illustrates an outline of input of peripheral element data in user terminal 210 in the information processing system according to the present embodiment. The input of a peripheral element includes, for example, the following two procedures, but the present invention is not limited thereto.

One procedure is a procedure of display screen 231 → display screen 232 → display screen 234. On display screen 231 in the element setting mode (peripheral element setting mode), for example, when display screen 231 is double-clicked, the "ShareB application" opens an input section for a peripheral element around the subject as in display screen 232. When a peripheral element is keyed in on display screen 232, "Copernicus" is determined and displayed as the peripheral element, and display screen 232 transitions to a display screen for a link setting mode, as in display screen 234. Note that, the input of a peripheral element is not limited to the key input, and may be, for example, a copy input or linking of a display image (including a moving image) or a display sentence in another application.

The other procedure is a procedure of display screen 233 → display screen 234. On display screen 231 in the element setting mode, for example, when "drag-and-drop" for a copy input or linking of a display image (including a moving image) or a display sentence in another application is performed to a screen blank portion of display screen 233, "Copernicus" is determined and displayed as a peripheral element, and display screen 233 transitions to the display screen for the link setting mode, as in display screen 234. Further, by performing a copy input and "drag-and-drop" of a web URL, information at the link destination thereof can be stored within the element. Then, on display screen 234, the degree of influence of "Copernicus" as the peripheral element on the subject as the central element is input through influence input unit 236. The degree of influence as such is indicated by the size, color(s), and/or the like of "Copernicus" as the peripheral element, and is stored in a database.

### (Outline of Link Input)

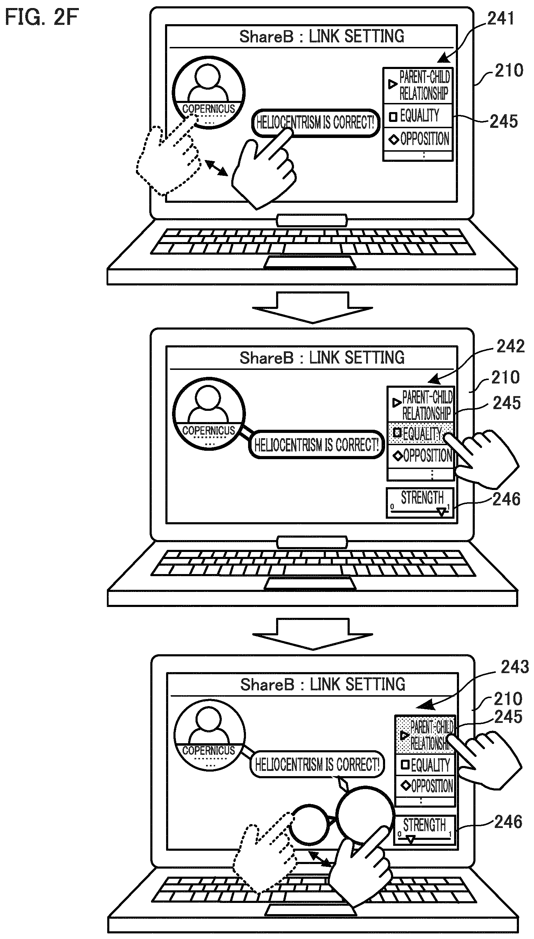

FIG. 2F illustrates an outline of a link data input in user terminal 210 in the information processing system according to the present embodiment. As links, for example, there are the following three links, but the present invention is not limited thereto. Further, operations in a link input are not limited to those in FIG. 2F.

When a subject and a peripheral element which the user wishes to link are touched on display screen 241 in the link setting mode, menu 245 indicating three types of links as to with which link among the three links the subject and the peripheral element are connected is displayed. Here, when "□ equality" is selected, the subject "Heliocentrism is correct!" and the element "Copernicus" are connected with a link without a causal relationship, as in display screen 242. Further, strength input unit 246 for inputting the strength of a link is displayed on display screen 242. The strength of an input link is indicated by the thickness or color(s) of the link and is stored in a database.

When peripheral elements to be linked are touched and "□ parent-child relationship" (causal relationship) in menu 245 is selected on display screen 243 in the link setting mode, the peripheral elements are connected with a link with a causal relationship as in display screen 243. Note that, the direction of the causal relationship (parent-child relationship) may be determined based on the order of the touch between the peripheral elements to be linked, but the present invention is not limited thereto. Further, strength input unit 246 for inputting the strength of a link is displayed on display screen 243. The strength of an input link is indicated by the thickness or color(s) of the link and is stored in a database. Note that, the three types of links ("□ parent-child relationship", "□ equality", and "□ opposition") have been illustrated, but the present invention is not limited thereto, and a plurality of types of links are prepared.

### (Visibility and Editing Authority Settings)

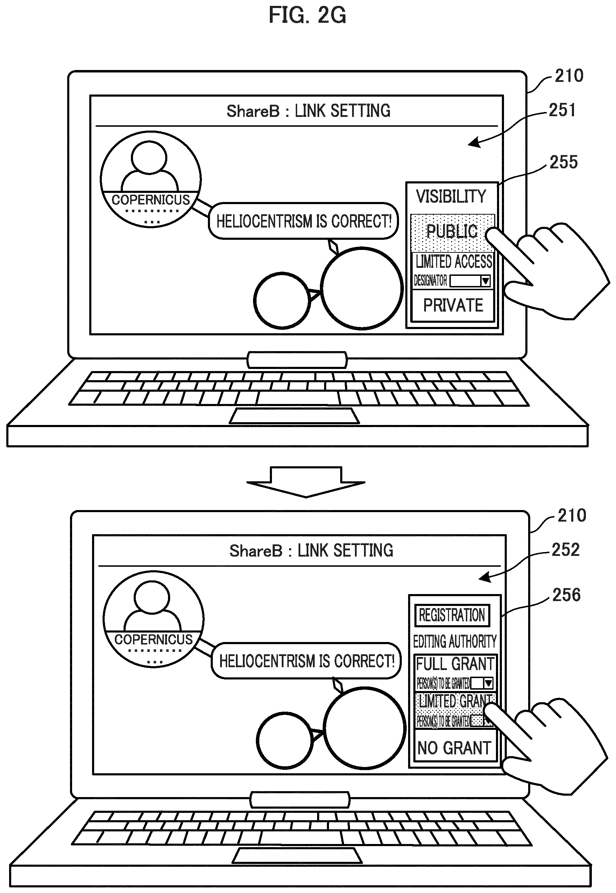

FIG. 2G illustrates an outline of a registration request for a thought structure diagram in user terminal 210 in the information processing system according to the present embodiment. In the present embodiment, the visibility of a thought structure diagram to be registered to other users and the editing authority by other users for the thought structure diagram to be registered can be set prior to a registration request for the thought structure diagram.

The upper diagram in FIG. 2G illustrates setting screen 251 for the visibility. A user who generates a thought structure diagram and requests registration thereof selects one visibility setting from selection menus 255 with three types of visibility settings. The three types of visibility settings are public, limited access, and private. When the public is selected, the thought structure diagram becomes viewable to all users. When the limited access is selected, only members designated by the creator of the thought structure diagram as the designators are allowed to view the thought structure diagram. Note that, the designation of members may be on an individual basis or on an attribute basis such as age groups. When the private is selected, only the creator of the thought structure diagram is allowed to view the thought structure diagram. Note that, the visibility settings are not limited to these three types. For example, in the limited access, members to whom the creator of the thought structure diagram does not wish to publish the thought structure diagram may be designated.

The lower diagram in FIG. 2G illustrates setting screen 252 for the editing authority. A user who generates a thought structure diagram and requests registration thereof selects one editing authority setting from selection menu 256 with three types of editing authority settings. The three types of editing authority settings are full grant, limited grant, and no grant. When the full grant is selected, the full editing authority is given to a user who is allowed to immediately add or delete peripheral elements (nodes), links, and a central element such as a proposition or a subject. Note that, the present invention is not limited to the three types of editing authority settings exemplified here, and other editing authority settings may be provided. For example, it is possible to consider, as an intermediate setting between a full editing authority setting and a limited editing authority setting, a setting or the like in which basically only limited editing authority is given to users, but the full editing authority is granted only to users who have previously gathered a lot of support in their limited edit(s) or the like. **In** this case, it is configured such that a hidden parameter is provided for each user to score and store the reliability of each user as an editor, and a generation user who has generated a thought structure diagram is allowed to set whether to give the full editing authority or limited editing authority to each user according to their scores. For example, the generation user sets "the full editing authority is given to a human with a score of 500 or more" or the like.

Further, when the limited grant is selected, limited editing authority is given, and neither peripheral elements (nodes) nor links, and further nor a central element such as a proposition or a subject can be added immediately. Instead, an edit request becomes an additional proposal. The "additional proposal" is literally a function that allows the addition of peripheral elements (nodes), links, and/or a central element such as a proposition or a subject to be proposed. An additionally proposed element or link is displayed, for example, in a translucent state, within a thought structure diagram and is in a state of waiting for approval votes by other users for a certain period (for example, assumed to be about 48 hours to 168 hours). In a case where the results of approval votes exceed a certain level of the number of votes (or the voting rate) and the additionally proposed element or link is approved, the additionally requested element or the like is displayed completely opaquely, and is treated in the same manner as an existing element(s) thereafter. On the other hand, in a case where the results of approval votes fall below the certain level and the additionally proposed element or link is rejected, the additionally requested element or the like disappears from the thought structure diagram. Note that, in limited editing authority, it is not possible to delete existing elements or links. The deletion of existing elements or links is to await the disappearance thereof in a case where the number of users who agree with the deletion (approval rate) by voting for each existing element as "not credible and/or having weak relevance" is high. Note that, a peripheral element that receives votes concentrated on "not credible and/or having weak relevance" and a peripheral element that is additionally proposed in limited editing authority may be displayed completely differently or displayed as the same.

Further, when the no grant is selected, no editing authority is given and any editing action becomes impossible. As described above, the grant of the editing authority can be set by the generator of a thought structure diagram for each thought structure diagram. For example, it is possible to grant the full editing authority only to the generator (himself/herself) and not to grant any editing authority to other users. On the other hand, it is also possible to set a fair thought structure diagram generation environment in which all users, including the generator, have limited editing authority. These editing authority granting settings are rendered visible to all users. Further, a function for setting that a thought structure diagram is prevented from being changed to an impossible structure through editing may also be provided.

After setting the visibility and editing authority of a generated thought structure diagram, the generator registers the generated thought structure diagram in the information processing apparatus (ShareB server) through user terminal 210.

### (Outline of Edit Instruction)

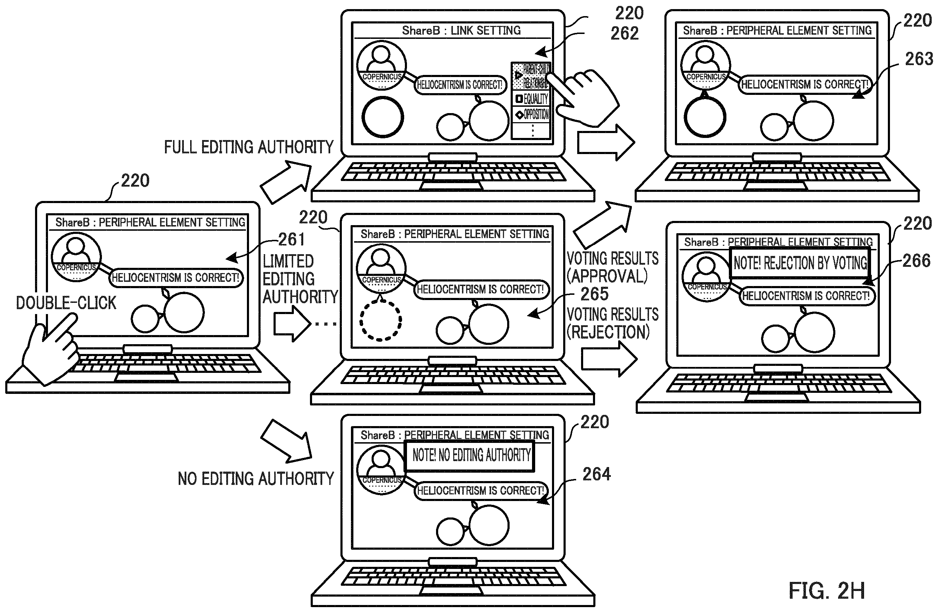

FIG. 2H illustrates an outline of edit instructions from user terminal 220 in the information processing system according to the present embodiment. Note that, user terminal 220 is illustrated, as a terminal that makes an edit request for a thought structure diagram, differently from user terminal 210 of the generator of the thought structure diagram, but may be the same as user terminal 210. In the present embodiment, with respect to editing of a thought structure diagram generated, published, and shared by a user (generator), the user who has generated the thought structure diagram performs, in addition to processing of allowing other users to edit the thought structure diagram or not, processing of restricting the editing authority of other users. This is to prevent the original thought structure diagram from being changed to an impossible structure or from deviating from the intention of the user who has generated the thought structure diagram when the thought structure diagram is allowed to be freely edited. Note that, it is also possible to authorize a user who has made an edit request, but this would, on the contrary, restrict the freedom of editing. Accordingly, the present embodiment employs a configuration in which each user is granted in advance the three types of editing authority ranked as described above.

A case where a new element is added to a thought structure diagram by double-clicking on display screen 261 in the element setting mode in another user terminal 220 and the thought structure diagram is edited will be described. In a case where the editing authority is checked based on the user ID of the user who is utilizing user terminal 220 and the user has the full editing authority, an element section is opened as in display screen 262 and display screen 262 transitions to display screen 263 in the link setting mode. Subsequently, a new element is added on the screen of user terminal 220 in the same procedure as the operation procedures in FIGS. 2D and 2E, and the thought structure diagram is edited. Note that, the user who has generated the thought structure diagram can further check the content (information) set to the opened element section and restrict editing.

In a case where the user who is utilizing user terminal 220 does not have the editing authority, or in a case where the rank of the editing authority for the user who is utilizing user terminal 220 is lower than the rank for allowing editing of the thought structure diagram to be edited, on the other hand, a warning such as "Note! No editing authority" is informed as in display screen 264.

Further, in a case where limited editing authority is granted to the user who is utilizing user terminal 220, an element or link to be added is displayed, for example, in a translucent manner (indicated by the broken line in FIG. 2H) as in display screen 265, and the addition of the element to the thought structure diagram is awaited until the results of approval voting by users are obtained. Then, when the voting results are for approval, the requested element is added as in display screen 263. On the other hand, when the voting results are for rejection, the requested element disappears as in display screen 266.

### <Configuration of Information Processing System>

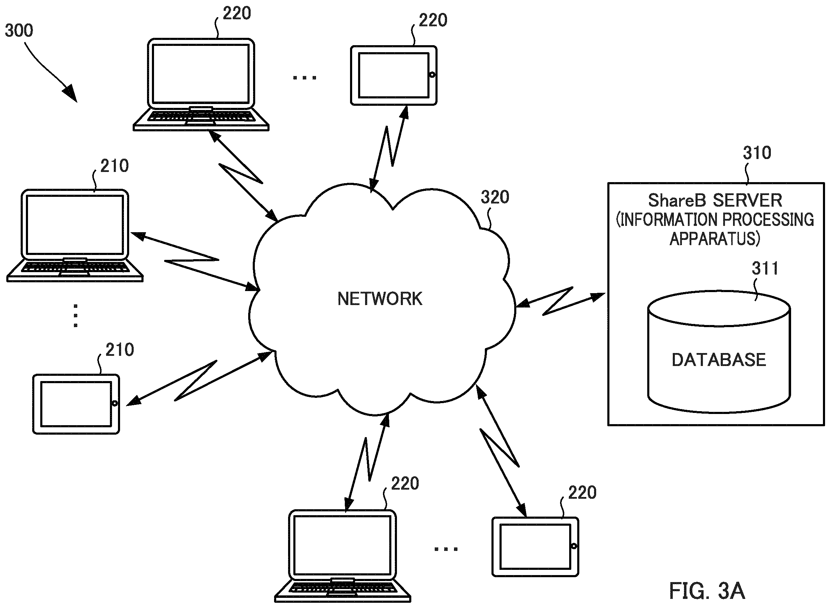

FIG. 3A is a block diagram illustrating a configuration of information processing system 300 according to the present embodiment.

Information processing system 300 includes ShareB server 310 as an information processing apparatus, user terminal 210 of a user who generates, posts, and publishes a thought structure diagram, and user terminal 220 of a user who shares and edits the published thought structure diagram, where ShareB server 310 and user terminals 210 and 220 are connected via network 320. ShareB server 310 includes database 311, accumulates registered users and posted thought structure diagrams, and publishes the thought structure diagrams to the public to allow the thought structure diagrams to be shared. User terminal 210 generates a thought structure diagram according to the operation procedures in FIGS. 2C to 2F while communicating with ShareB server 310, and posts the thought structure diagram to ShareB server 310. User terminal 220 views a thought structure diagram accumulated in ShareB server 310 according to the operation procedure in FIG. 2G, and requests an edit of the thought structure diagram if necessary. Note that, in FIG. 3A, user terminals 210 and 220 are illustrated separately for convenience of description, but the same user terminal may provide the functions of both user terminals 210 and 220.

### <Operation Procedure of Information Processing System>

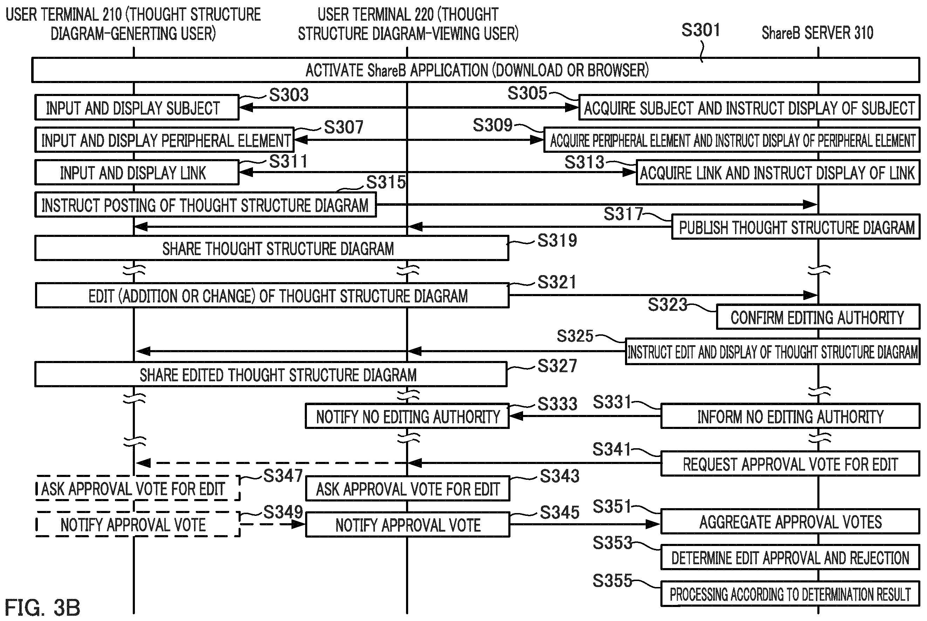

FIG. 3B is a sequence diagram illustrating an operation procedure in information processing system 300 according to the present embodiment.

In step S301, ShareB server 310, user terminal 210 (of the generation user who has generated a thought structure diagram), and user terminal 220 (of the thought structure diagram-viewing user) become communicable with each other by activating the ShareB application or by browser connection. Then, ShareB server 310 and user terminal 210 transition to the subject setting mode and wait for the setting of a subject as the central element.

When a subject is input through user terminal 210 in step S303, ShareB server 310 acquires the subject and causes the subject to be displayed in the center of the screen of user terminal 210 in step S305, and ShareB server 310 and user terminal 210 transition to the element setting mode and wait for peripheral element setting.

When a peripheral element is input through user terminal 210 in step S307, ShareB server 310 acquires the element and causes the element to be displayed around the subject on the screen of user terminal 210 in step S309, and ShareB server 310 and user terminal 210 transition to the link setting mode and wait for link setting.

When a link is input through user terminal 210 in step S311, ShareB server 310 acquires the link and causes the link to be displayed between the subject and an element or between elements, which are selected on the screen of user terminal 210, in step S313.

Note that, the element setting and link setting in steps S307 to S313 are repeated until the thought structure diagram is completed. Note that, in FIG. 3B, the procedure of performing connection with a link each time an element is added is illustrated, but the present invention is not limited to this procedure, and the procedure may be a procedure in which a plurality of elements is added and then connections thereof are collectively performed with links. Further, a procedure for checking the completion of a thought structure diagram may be provided. For example, it may be configured such that in a case where there is, in a thought structure diagram, an element to which no link is connected, an error message is displayed; and in a case where a user still does not connect the element with a link, the element is caused to disappear when the completion process of the thought structure diagram is finished.

When the thought structure diagram is completed, the user of user terminal 210 sets the visibility and editing authority and instructs posting (registration) of the thought structure diagram in step S315. In step S317, ShareB server 310 sets the visibility and editing authority for the thought structure diagram posted through user terminal 210 and stores the thought structure diagram, and publishes the thought structure diagram according to the visibility set to user terminals 210 and 220. At user terminals 210 and 220, the published thought structure diagram is viewed and shared. Note that, for a thought structure diagram that is difficult to view, such as a thought structure diagram including a link passing over an element or a thought structure diagram in which links appear to intersect with each other, when the thought structure diagram is stored or viewed, ShareB server 310 performs processing of automatically adjusting the arrangement of elements and links and rearranging the elements and links in an easily viewable manner. Further, ShareB server 310 may perform the processing of automatically adjusting the arrangement of elements and links and rearranging the elements and links in an easily viewable manner during the generation of a thought structure diagram. Further, for example, when creating a new thought structure diagram by using a past database as a reference, the server may automatically prepare the sizes of peripheral elements thereof, the link types thereof, and the peripheral elements themselves based on the subject.

In step S321, when user terminal 210 or 220 requests an edit of (an addition to or a change in) the thought structure diagram which is being viewed, ShareB server 310 confirms in step S323 whether the user who has requested the edit has the full editing authority or whether the rank of the editing authority of the user is sufficient. In a case where the user who has requested the edit has the full editing authority or the rank of the editing authority of the user is sufficient, ShareB server 310 permits the edit of (the addition to or the change in) the thought structure diagram and instructs the display of the thought structure diagram resulting from the edit in step S325. In step S327, user terminals 210 and 220 share the edited thought structure diagram.

Further, in a case where the user who has requested the edit does not have the editing authority or the rank of the editing authority of the user is not sufficient, ShareB server 310 informs no editing authority in step S331. In step S333, user terminal 220 notifies the user of no editing authority (issues a warning to the user).

Further, in a case where the user who has requested the edit is granted limited editing authority, ShareB server 310 requests user terminal 220 (and user terminal 210) to cast an approval vote for the edit in step S341. In step S343, user terminal 220 asks the user to cast an approval vote for the edit. Then, when there is an approval vote, user terminal 220 notifies ShareB server 310 of the approval vote in step S345. Further, when a request for an approval vote is received, user terminal 210 asks the user to cast an approval vote for the edit in step S347. Then, when there is an approval vote, user terminal 210 notifies ShareB server 310 of the approval vote in step S349.

In step S351, ShareB server 310 aggregates the approval votes through user terminal 220 (and user terminal 210), and in step S353, determines whether the votes indicate edit approval or edit rejection. Then, in step S355, ShareB server 310 performs processing according to the determination result: the processing in step S325 when the determination result is edit approval or the processing in step S331 when the determination result is edit rejection.

### <Functional Configuration of ShareB Server>

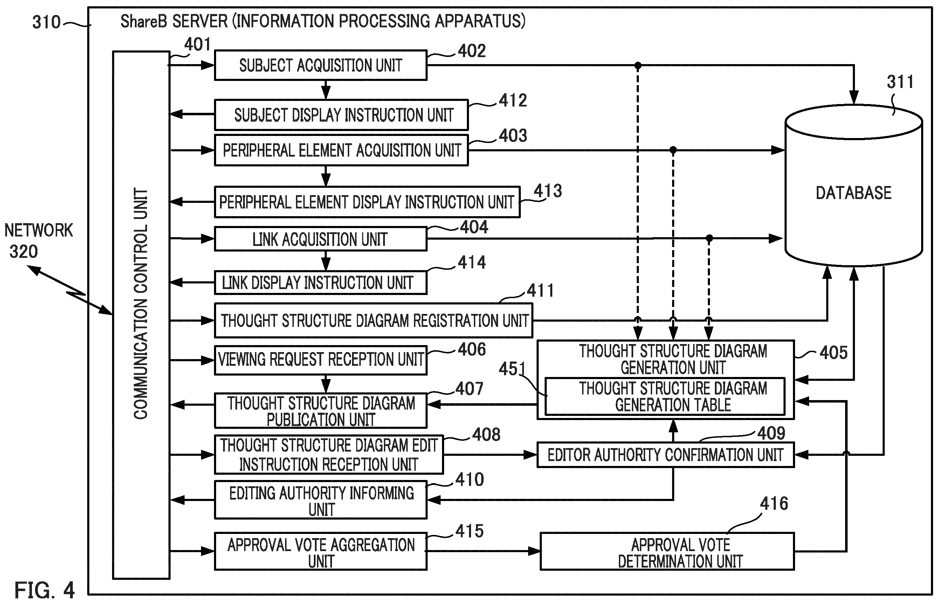

FIG. 4 is a block diagram illustrating a functional configuration of ShareB server 310 as an information processing apparatus according to the present embodiment.

ShareB server 310 includes communication control unit 401, subject acquisition unit 402, subject display instruction unit 412, peripheral element acquisition unit 403, peripheral element display instruction unit 413, link acquisition unit 404, link display instruction unit 414, and database 311. Further, ShareB server 310 includes thought structure diagram generation unit 405, viewing request reception unit 406, thought structure diagram publication unit 407, thought structure diagram edit instruction reception unit 408, editing authority confirmation unit 409, editing authority informing unit 410, and thought structure diagram registration unit 411. Note that, in FIG. 4, inputs in subject display instruction unit 412, peripheral element display instruction unit 413, and link display instruction unit 414 are simplified to avoid complexity. Further, ShareB server 310 includes approval vote aggregation unit 415 and approval voting determiner 416.

Communication control unit 401 controls communication with user terminals 210 and 220 via network 320. Subject acquisition unit 402 acquires a subject as the central element transmitted from user terminal 210. Subject display instruction unit 412 instructs the display of an acquired subject in a predetermined position (for example, in the center of the screen) of user terminal 210. Peripheral element acquisition unit 403 acquires a peripheral element(s) transmitted from user terminal 210. Peripheral element display instruction unit 413 instructs the display of an acquired peripheral element(s) in a predetermined position(s) (for example, around the subject) of user terminal 210. Link acquisition unit 404 acquires a link(s) transmitted from user terminal 210 together with its/their type(s). Link display instruction unit 414 instructs the display of an acquired link(s) in a predetermined position(s) (for example, between the subject and a peripheral element, or between peripheral elements) of user terminal 210 according to the type(s) of the link(s).

Database 311 stores data, parameters, and programs necessary for processing by ShareB server 310, as well as thought structure diagrams including subjects, peripheral elements, and links.

Thought structure diagram generation unit 405 includes thought structure diagram generation table 451, and generates a thought structure diagram by using an acquired or stored subject, an acquired or stored peripheral element(s), and an acquired or stored link(s). Viewing request reception unit 406 receives a viewing request for a thought structure diagram from user terminal 220. In response to a viewing request for a thought structure diagram, thought structure diagram publication unit 407 publishes the thought structure diagram to user terminals 210 and 220 by taking into account the set visibility. Note that, thought structure diagram publication unit 407 includes a publication restriction unit that restricts the publication of a thought structure diagram by thought structure diagram publication unit 407 based on information on the visibility.

Thought structure diagram edit instruction reception unit 408 receives an edit instruction for a thought structure diagram from user terminals 210 and 220. Editing authority confirmation unit 409 confirms the editing authority of a user who has instructed an edit of a thought structure diagram. In a case where a user is granted the full editing authority, editing authority confirmation unit 409 permits an edit of a thought structure diagram by the user. On the other hand, in a case where an user who has instructed an edit of a thought structure diagram does not have the editing authority, or in a case where the level of the editing authority of the user is lower than the editing authority level for the thought structure diagram, editing authority confirmation unit 409 causes editing authority informing unit 410 to inform the user of no editing authority through user terminal 220. Further, in a case where a user is granted limited editing authority, editing authority confirmation unit 409 causes editing authority informing unit 410 to inform the user of approval voting through user terminal 220. Approval vote aggregation unit 415 aggregates approval votes through user terminal 220 (and user terminal 210) within a predetermined time. Approval voting determiner 416 determines based on the aggregation of the approval votes whether an edit requested through user terminal 220 has been approved or rejected. Approval voting determiner 416 instructs thought structure diagram generation unit 405 to determine the edit when the edit has been approved, and instructs thought structure diagram generation unit 405 to cause the edit to disappear when the edit has been rejected.

### (Database)

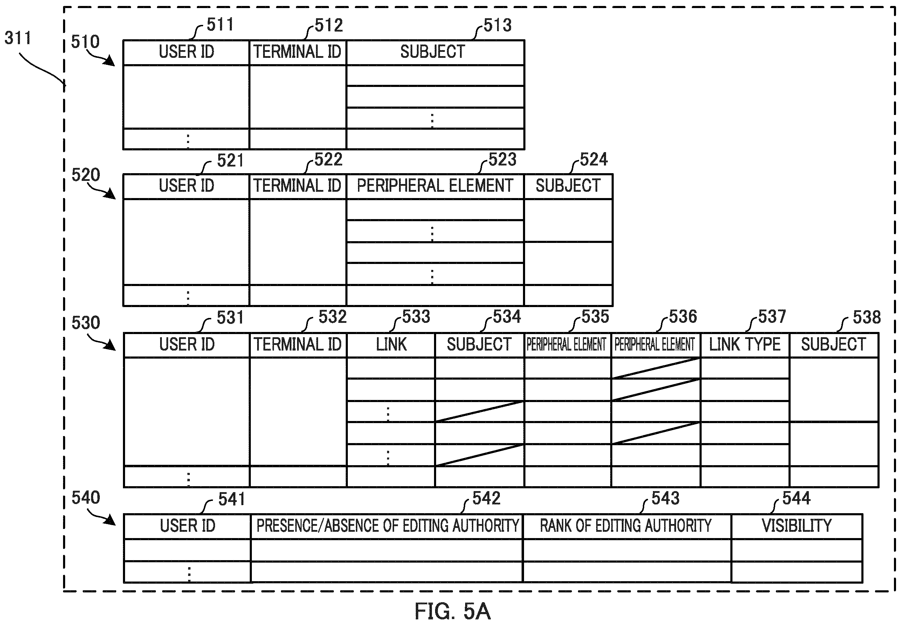

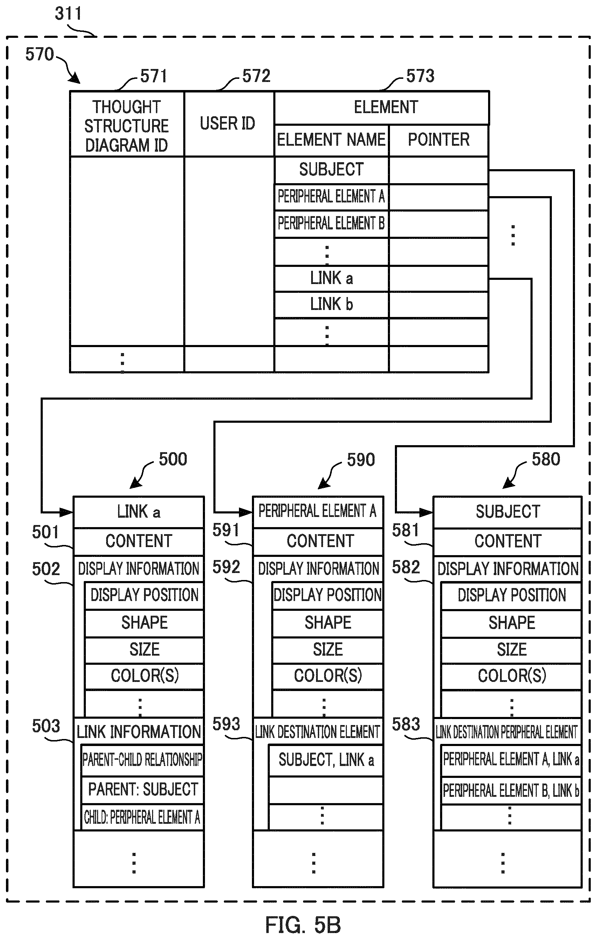

FIGS. 5A and 5B are diagrams illustrating a configuration of database 311 according to the present embodiment. Database 311 stores data, parameters, and programs necessary for processing by ShareB server 310, as well as thought structure diagrams including subjects, elements, and links. Database 311 includes subject storage unit 510, peripheral element storage unit 520, link storage unit 530, and visibility/editing authority registration unit 540. Note that, FIG. 5A illustrates data acquired from user terminals 210 and 220, and illustration of basic storage data such as user registration is omitted in FIG. 5A.

Subject storage unit 510 stores subject(s) 513 as a central element(s) set in user terminal 210, in association with user ID 511 of a user, who generates a thought structure diagram(s), and terminal ID 512 of user terminal 210 of the user. Note that, subject 513 may include a position on a display screen where the subject is displayed.

Peripheral element storage unit 520 stores peripheral element(s) 523 set in user terminal 210 and subject(s) 524 related to peripheral element(s) 523, in association with user ID 521 of a user, who generates a thought structure diagram(s), and terminal ID 522 of user terminal 210 of the user. Note that, peripheral element 523 may include a position on a display screen on which the peripheral element is displayed.

Link storage unit 530 stores link(s) 533 set in user terminal 210, subject(s) 534, peripheral element(s) 535, and peripheral element(s) 536 that are connected with link(s) 533, and link type(s) 537 of link(s) 533, in association with user ID 531 of a user, who generates a thought structure diagram(s), and terminal ID 532 of user terminal 210 of the user. Further, link storage unit 530 stores subject(s) 538 related to link(s) 533. Note that, two of subject 534, peripheral element 535, and peripheral element 536, which are connected with link 533, are selected. Further, link 533 may include a position on a display screen where the link is displayed, and the position of the link may be adjusted based on two positions connected with link 533.

Visibility/editing authority registration unit 540 stores presence/absence of editing authority 542, rank of editing authority 543, and visibility 544 in association with user ID 541.

Further, database 311 may store a threshold that is compared with rank of editing authority 543, editing thresholds for each thought structure diagram, and/or the like.

FIG. 5B illustrates a configuration of thought structure diagram storage unit 570 stored in database 311. Note that, FIG. 5B illustrates the configuration of one thought structure diagram, but numerous registered thought structure diagrams are stored.

Thought structure diagram storage unit 570 stores user ID 572 of a user, who has registered a thought structure diagram of thought structure diagram ID 571, and elements 573 that constitute the thought structure diagram, in association with thought structure diagram ID 571. As elements 573, a subject, a peripheral element(s), a link(s) as element names, and pointers to subject data storage unit 580, peripheral element data storage unit 590, and link data storage unit 500, which indicate the respective elements, are stored. Note that, in FIG. 5B, in a case where it is desired to retain the history of editing processing, user IDs of users who have edited can be recorded separately from user IDs registered in user ID 572 correspondingly to elements 573 in the editing results.

Subject data storage unit 580 stores content 581, display information 582, link destination peripheral element(s) 583, and the like of the subject. Display information 582 includes the display position, shape, size, color(s), and the like of the subject. Link destination peripheral element 583 stores, for example, that the subject is connected to peripheral element A with link a or that the subject is connected to peripheral element B with link b.

Peripheral element data storage unit 590 (peripheral element A) stores content 591, display information 592, link destination element 593, and the like of peripheral element A. Display information 592 includes the display position, shape, size, color(s), and the like of peripheral element A. Link destination element 593 stores, for example, that peripheral element A is connected to the subject with link a. Note that, in a case where there is a link between peripheral element A and peripheral element B, peripheral element B and the link name are stored.

Link data storage unit 500 (link a) stores content 501, display information 502, link information 503, and the like of link a. Display information 502 includes the display position, shape, size, color(s), and the like of link a. Link information 503 stores, for example, that this link represents a parent-child relationship, and the direction is that the parent is the subject and the child is peripheral element A. Note that, when the relationship of the link indicates equality or opposition, the relationship is stored in link information 503.

### (Thought Structure Diagram Generation Table)

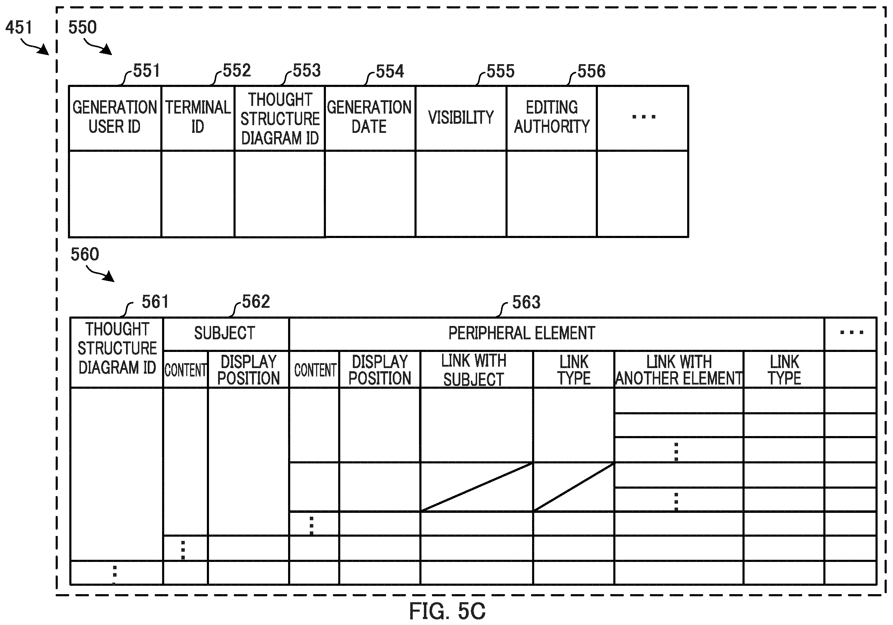

FIG. 5C illustrates a configuration of thought structure diagram generation table 451 according to the present embodiment. Thought structure diagram generation table 451 is used in a case where thought structure diagram generation unit 405 generates a thought structure diagram by using a subject as the central element, a peripheral element(s), and a link(s), which are acquired or stored.

Thought structure diagram generation table 451 includes attribute table 550 indicating attributes of a generated thought structure diagram and configuration table 560 indicating a configuration of the thought structure diagram. Attribute table 550 stores, in association with user ID 551 of a user who has generated a thought structure diagram and terminal ID 552 of the user terminal of the user, thought structure diagram ID 553, generation date 554, visibility 555 which has been set, and set editing authority 556 which has been set. Configuration table 560 stores, in association with thought structure diagram ID 561, subject 562 and peripheral element(s) 563 related to each subject 562. Subject 562 includes the content of the subject and the display position of the subject. Peripheral element 563 includes the content of a peripheral element, the display position of the peripheral element, a link of the peripheral element with the subject and the link type thereof, and a link of the peripheral element with another peripheral element and the link type thereof. Note that, with respect to peripheral element 563 that is not linked to subject 562, data of "link with subject" and "Link type" are not significant. Further, in a case where one peripheral element 563 is linked to a plurality of subjects 562, the same peripheral element has a plurality of "links with subjects" and "link types".

### <Hardware Configuration of ShareB Server>

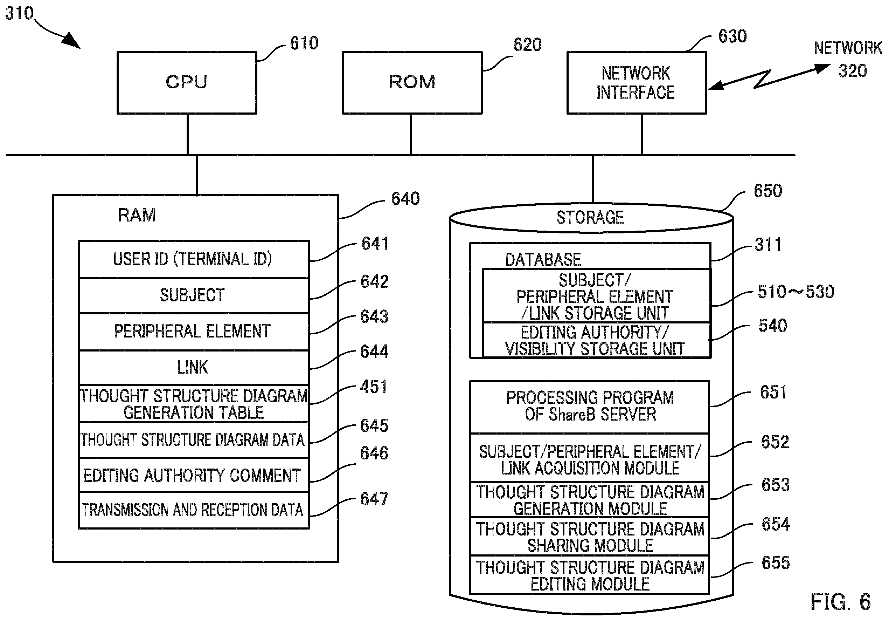

FIG. 6 is a block diagram illustrating a hardware configuration of ShareB server 310 according to the present embodiment.

In FIG. 6, central processing unit (CPU) 610 is a processor for operation control, and realizes the components in FIG. 4 by executing a program. Read only memory (ROM) 620 stores fixed data and programs such as initial data and programs. Network interface 630 controls communication with user terminals 210 and 220 via network 320.

Random access memory (RAM) 640 is a random access memory as a work area for temporary storage used by CPU 610. RAM 640 secures an area for storing data necessary for realizing the present embodiment. User ID (terminal ID) 641 is an ID of a user or a user terminal that is communicating with ShareB server 310. Subject 642 is data of a subject as the central element received from a user terminal. Peripheral element 643 is data of a peripheral element received from a user terminal. Link 644 is data of a link received from a user terminal. Thought structure diagram generation table 451 is a table used by thought structure diagram generation unit 405 described in FIG. 6B to generate a thought structure diagram. Thought structure diagram data 645 is data of a thought structure diagram that is generated and shared with users. Editing authority comment 646 is a comment for informing a user in a case where the user does not have the editing authority for a thought structure diagram or the level of the editing authority of the user is low. Further, editing authority comment 646 also includes a comment requesting approval voting for an edit. Transmission/reception data 647 is data that is transmitted to and received from user terminals 210 and 220 via network 320.

Storage 650 stores a database, various parameters, or data or programs to be described later, necessary for realizing the present embodiment. Database 311 is a database that stores synthetic data, and includes, as illustrated in FIG. 5A, storage units 510 to 530 for a subject/peripheral element/link, respectively, and visibility/editing authority registration unit 540.

The following programs are stored in storage 650. Processing program 651 of ShareB server is a program for controlling ShareB server 310 in its entirety. Subject/peripheral element/link acquisition module 652 is a module that acquires the subject, peripheral element, and link settings from a user terminal. Thought structure diagram generation module 653 is a module that generates a thought structure diagram by using a subject, a peripheral element(s), and a link(s), which have been acquired. Thought structure diagram sharing module 654 is a module that publishes a thought structure diagram in response to a viewing request from a user terminal and attempts sharing of the thought structure diagram by users, and also includes determination processing of the visibility. Thought structure diagram editing module 655 is a module that performs an edit of a thought structure diagram by a user, and also includes determination processing of the editing authority.

Note that, programs and data related to general-purpose functions or other realizable functions, which ShareB server 310 has, are not illustrated in RAM 640 and storage 650 in FIG. 6.

### <Processing Procedure of ShareB Server>

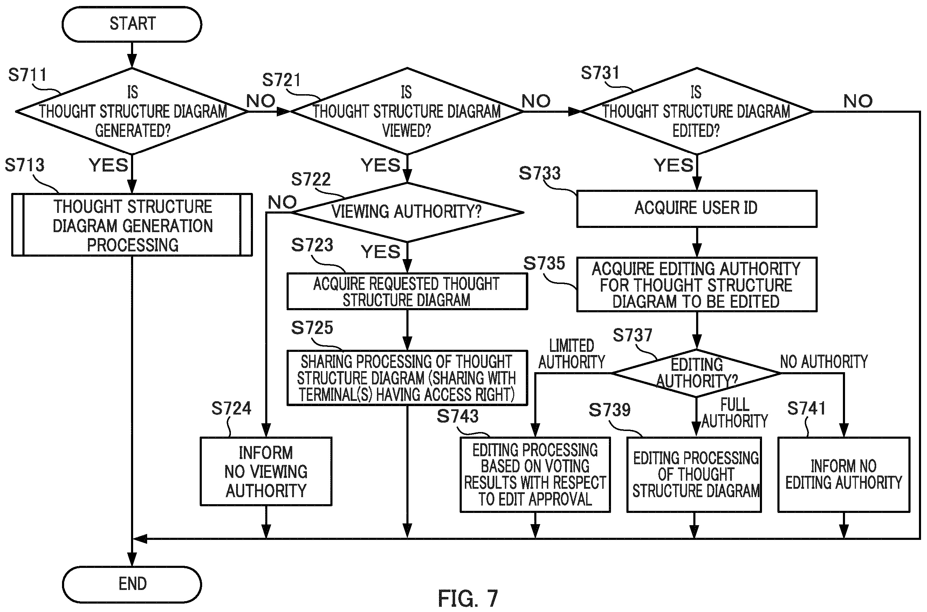

FIG. 7 is a flowchart illustrating a processing procedure of ShareB server 310 according to the present embodiment. Note that, this flowchart is executed by CPU 610 in FIG. 6 using RAM 640, which realizes the components in FIG. 4.

In step S711, ShareB server 310 determines whether a thought structure diagram is generated. In a case where a thought structure diagram is generated, thought structure diagram generation processing is executed in step S713.

In a case where a thought structure diagram is not generated, ShareB server 310 determines in step S721 whether a thought structure diagram is viewed. When a thought structure diagram is viewed, ShareB server 310 determines in step S722 whether the viewing user has the viewing authority. When the viewing user does not have the viewing authority, ShareB server 310 informs the viewing user of no viewing authority in step S724. When the viewing user has the viewing authority, ShareB server 310 acquires the corresponding thought structure diagram requested for viewing in step S723. Then, in step S725, ShareB server 310 publishes the thought structure diagram as sharing processing of the thought structure diagram (sharing with a terminal(s) having the access right).

When a thought structure diagram is neither generated nor viewed, ShareB server 310 determines in step S731 whether a thought structure diagram is edited. When a thought structure diagram is edited, ShareB server 310 acquires the user ID of the user who has requested the edit in step S733. Then, ShareB server 310 checks the editing authority of the user for the thought structure diagram to be edited, based on the acquired user ID in step S735. In step S737, when the check result of the editing authority indicates that the full authority is granted, ShareB server 310 causes the editing processing of the thought structure diagram to be executed and shares the editing result in step S739. Further, when the user has no editing authority, ShareB server 310 informs the user of no editing authority through the user terminal in step S741. Further, when limited editing authority is granted, ShareB server 310 causes the editing processing to be performed based on voting results with respect to the edit approval in step S743. That is, when the voting results are for the edit approval, the editing portion is determined. On the other hand, when the voting results are for the edit rejection, the editing portion is diminished.

### (Thought Structure Diagram Generation Processing)

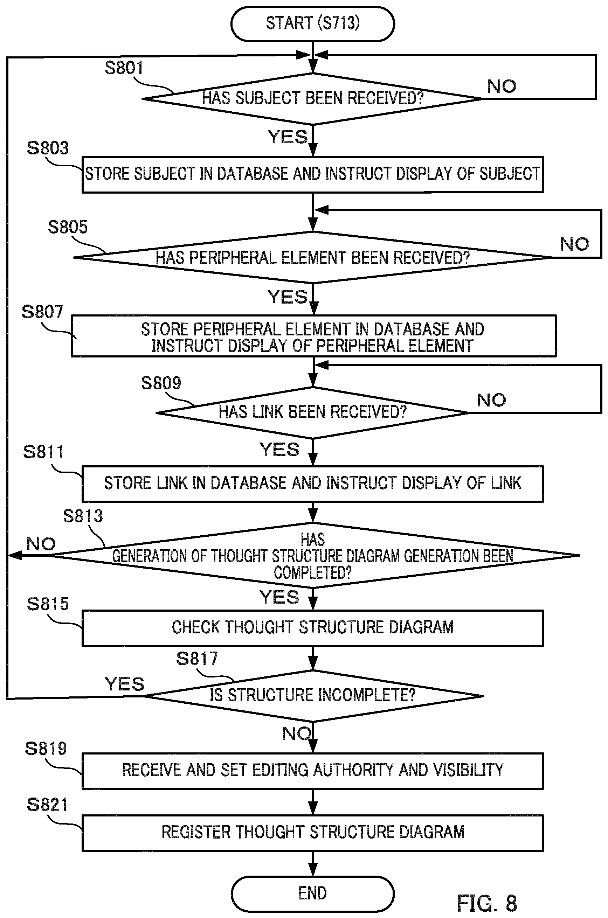

FIG. 8 is a flowchart illustrating a procedure of thought structure diagram generation processing S713 according to the present embodiment.

In step S801, ShareB server 310 waits to receive a subject as the central element from user terminal 210. When a subject has been received, ShareB server 310 saves the received subject in database 311 in step S803 and instructs the display of the subject in a predetermined position (for example, in the center of the screen) on the display screen of user terminal 210.

In step S805, ShareB server 310 waits to receive a peripheral element from user terminal 210. When a peripheral element has been received, ShareB server 310 saves the received peripheral element in database 311 in step S807 and instructs the display of the peripheral element in a predetermined position (for example, around the subject) on the display screen of user terminal 210.

In step S809, ShareB server 310 waits to receive a link from user terminal 210. When a link has been received, ShareB server 310 saves the received link in database 311 in step S811 and instructs the display of the link in a predetermined position (for example, between the subject and a peripheral element, or between peripheral elements) on the display screen of user terminal 210. Note that, in FIG. 8, the procedure of performing connection with a link each time an element is added is illustrated, but the present invention is not limited to this procedure, and the procedure may be a procedure in which a plurality of elements is added and then connections are collectively performed with links.

In step S813, ShareB server 310 determines whether the generation of a thought structure diagram has been completed. In a case where the generation of a thought structure diagram has not been completed, ShareB server 310 returns to step S801 and repeats the peripheral element and link settings in steps S805 to S811. When the generation of a thought structure diagram has been completed, ShareB server 310 checks in step S815 whether the thought structure diagram is complete or incomplete. For example, ShareB server 310 checks whether there is any unreasonable portion in the structure of the thought structure diagram (for example, whether there is a dangling element to which no link is connected or not). Then, in step S817, ShareB server 310 determines whether the thought structure diagram is incomplete, and when the thought structure diagram is incomplete, ShareB server 310 returns to step S801 and repeats the subject, peripheral element, and link settings in steps S801 to S811.

When the thought structure diagram is complete, ShareB server 310 receives the editing authority and the visibility from user terminal 210 in step S819 and sets the editing authority and the visibility to the generated thought structure diagram. Then, in step S821, ShareB server 310 registers the thought structure diagram to which the editing authority and the visibility have been set. Note that, in step S821, ShareB server 310 may perform processing of rearranging an element(s), a link(s), and/or the like to render the thought structure diagram easily viewable before registration. Further, in FIG. 8, the editing authority and the visibility are set in a case where the thought structure diagram is complete, but the editing authority and the visibility may be set or changed during the generation of a thought structure diagram, or may be changed after the generation of a thought structure diagram.

### <Functional Configuration of User Terminal>

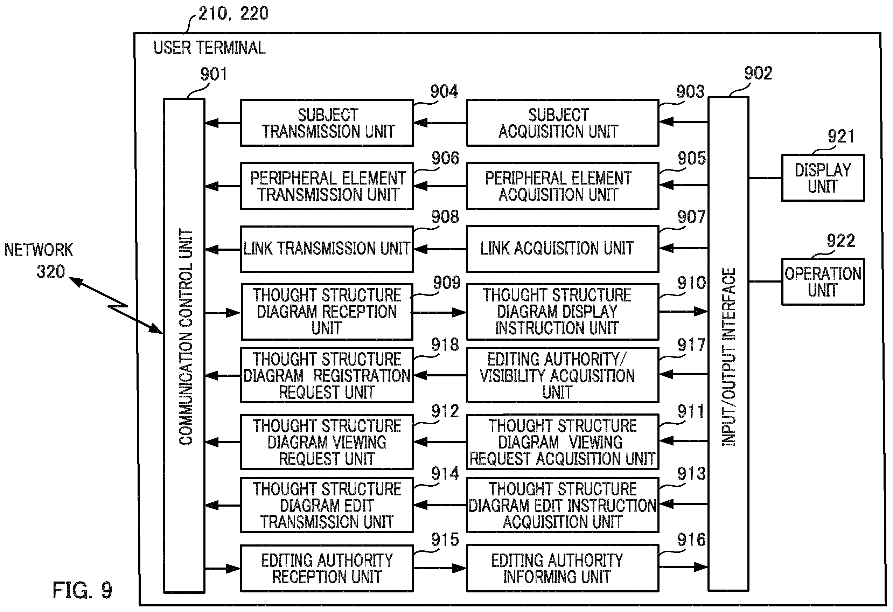

FIG. 9 is a block diagram illustrating a functional configuration of user terminals 210 and 220 according to the present embodiment.

User terminal 210 includes communication control unit 901 and input/output interface 902. Communication control unit 901 controls communication with ShareB server 310 via network 320. In the present embodiment, display unit 921 and operation unit 922 are connected to input/output interface 902. In a case where a thought structure diagram is generated, viewed, or edited, display unit 921 displays a display screen. Further, display unit 921 informs the state of user terminal 210. Further, in a case where a thought structure diagram is generated, viewed, or edited, operation unit 922 receives inputs and operations from a user(s). Note that, in the present embodiment, when a smartphone or a tablet is used as user terminal 210, display unit 921 and operation unit 922 are integrated as a touch screen.

Further, user terminal 210 includes subject acquisition unit 903, subject transmission unit 904, peripheral element acquisition unit 905, peripheral element transmission unit 906, link acquisition unit 907, link transmission unit 908, thought structure diagram reception unit 909, and thought structure diagram display instruction unit 910. Note that, in FIG. 9, a functional unit that instructs the display of a subject, a peripheral element(s), and/or a link(s) on display unit 921 is omitted to avoid the complexity of illustration. Further, user terminal 210 includes editing authority/visibility acquisition unit 917 and thought structure diagram registration request unit 918.

Subject acquisition unit 903 acquires a subject as the central element input through operation unit 922. Subject transmission unit 904 then transmits the acquired subject to ShareB server 310. Peripheral element acquisition unit 905 acquires a peripheral element(s) input through operation unit 922. Peripheral element transmission unit 906 then transmits the acquired peripheral element(s) to ShareB server 310. Link acquisition unit 907 acquires a link(s) input through operation unit 922. Link transmission unit 908 then transmits the acquired link(s) to ShareB server 310. Thought structure diagram reception unit 909 receives a thought structure diagram while being generated or after the completion of the generation from ShareB server 310. Thought structure diagram display instruction unit 910 instructs display unit 921 to display the received thought structure diagram. Note that, thought structure diagram reception unit 909, thought structure diagram display instruction unit 910, and display unit 921 function as a central element display unit, a peripheral element display unit, and a link display unit. Editing authority/visibility acquisition unit 917 acquires the editing authority and visibility for a generated thought structure diagram through operation unit 922. Thought structure diagram registration request unit 918 transmits the thought structure diagram in association with the acquired editing authority and visibility, and requests ShareB server 310 to post (register) the thought structure diagram.

Further, user terminal 210 includes thought structure diagram viewing request acquisition unit 911, thought structure diagram viewing request unit 912, thought structure diagram edit instruction acquisition unit 913, thought structure diagram edit transmission unit 914, editing authority reception unit 915, and editing authority informing unit 916. Thought structure diagram viewing request acquisition unit 911 acquires a viewing request for a thought structure diagram by an operation through operation unit 922. Then, thought structure diagram viewing request unit 912 transmits the viewing request to ShareB server 310. Note that, thought structure diagram reception unit 909 and thought structure diagram display instruction unit 910 cause display unit 921 to display the thought structure diagram in response to the viewing request. Thought structure diagram edit instruction acquisition unit 913 acquires an edit request for a thought structure diagram by an operation through operation unit 922. Then, thought structure diagram edit transmission unit 914 transmits the edit request to ShareB server 310. In a case where the editing authority of the user is not satisfied with respect to the edit request for the thought structure diagram, editing authority reception unit 915 receives no editing authority. Then, editing authority informing unit 916 informs the user of no editing authority via display unit 921.

### <Processing Procedure of User Terminal>

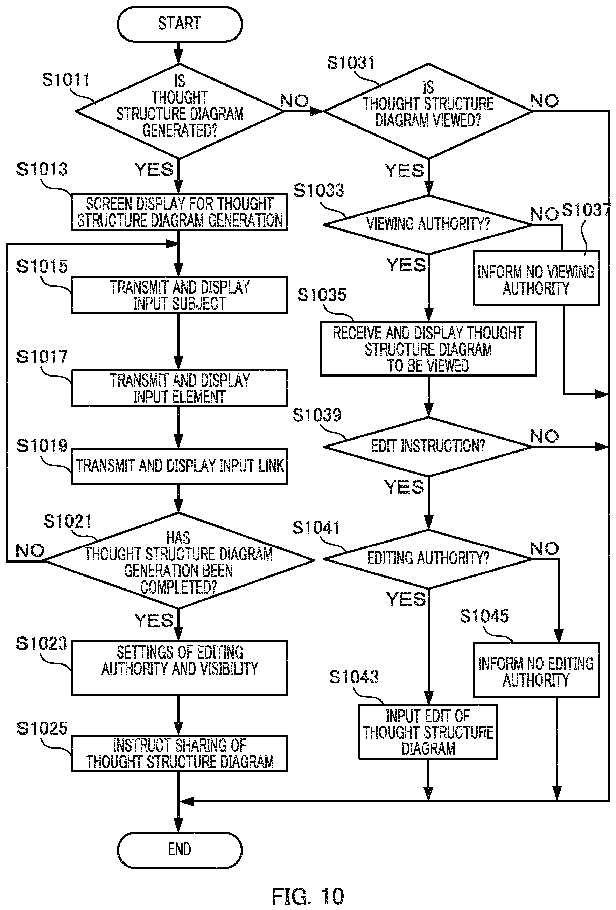

FIG. 10 is a flowchart illustrating a processing procedure of user terminals 210 and 220 according to the present embodiment. This flowchart is executed by the CPU of user terminals 210 and 220 using the RAM, which realizes the components in FIG. 9. Hereinafter, user terminal 210 will be described as a representative.

In step S1011, user terminal 210 determines whether a thought structure diagram is generated. When a thought structure diagram is generated, user terminal 210 performs a screen display for thought structure diagram generation in step S1013 (see FIG. 2C). In step S1015, user terminal 210 transmits an input subject to ShareB server 310 and displays the input subject on the display screen. In step S1017, user terminal 210 transmits an input peripheral element to ShareB server 310 and displays the input peripheral element on the display screen. In step S1019, user terminal 210 transmits an input link to ShareB server 310 and displays the input link on the display screen. Note that, although the procedure of performing connection with a link each time a peripheral element is added has been described, the present invention is not limited to this procedure, and the procedure may be a procedure in which a plurality of peripheral elements is added and then connections are collectively performed with links.

In step S1021, user terminal 210 determines based on the user's instruction whether the generation of a thought structure diagram has been completed. When the generation of a thought structure diagram has not been completed, user terminal 210 returns to step S1015 and repeats the inputs of the subject, element(s), and link(s) in steps S1015, S1017, and S1019 until the generation of a thought structure diagram is completed. When the generation of a thought structure diagram has been completed, user terminal 210 receives the settings of the editing authority and the visibility in step S1023. Then, in step S1025, user terminal 210 posts and saves the thought structure diagram, to which the editing authority and the visibility have been set, to ShareB server 310 for sharing the thought structure diagram.

When a thought structure diagram is not generated, user terminal 210 determines in step S1031 whether a thought structure diagram is viewed. When a thought structure diagram is viewed, user terminal 210 waits from ShareB server 310 for a result of whether the viewing authority is satisfied, in step S1033. When the viewing authority is granted, user terminal 210 receives and displays the thought structure diagram to be viewed in step S1035. When the viewing authority is not granted, user terminal 210 informs no viewing authority in step S1037. In step S1039, user terminal 210 determines whether there has been an edit instruction for the thought structure diagram. When there has not been an edit instruction for the thought structure diagram, the processing ends.

When there has been an edit instruction for the thought structure diagram, user terminal 210 waits from ShareB server 310 for a result of whether the editing authority is satisfied, in step S1041. When the full editing authority or limited editing authority is granted, user terminal 210 causes the edit of the thought structure diagram to be input in step S1043. When the user does not have the editing authority, user terminal 210 informs the user of no editing authority in step S1045.

Note that, in the case of limited editing authority, after user terminal 210 causes the edit of the thought structure diagram to be input in step S1039, user terminal 210 is notified by ShareB server 310 that the edit input is subject to approval voting, and waits for approval or rejection. Further, the user can cast an approval vote by himself/herself. These pieces of processing wait for the results of approval voting, and thus, may be performed in parallel with the thought structure diagram generation processing and the thought structure diagram viewing processing, but are omitted in FIG. 10.

According to the present embodiment, it is possible to easily generate a thought structure diagram in user terminal 210 of a user who publishes the thought structure diagram, and to share the thought structure diagram with user terminal 220 of another user.

Further, when a thought structure diagram is published, the publication is restricted based on the setting of the visibility, and thus, it is possible to flexibly select whether the thought structure diagram is utilized publicly or is utilized in a specific and limited range depending on the type of the thought structure diagram. Further, when a shared thought structure diagram is edited, the editing is restricted based on the setting of the editing authority, and thus, it is possible to suppress unnecessary edits of the thought structure diagram. In particular, in the case of limited editing authority, it is determined based on approval voting by users whether an edit is approved or rejected, and thus, it is possible to generate a thought structure diagram that is fair and is based on a large number of users' consensus.

### [Embodiment 3]

Next, an information processing system according to Embodiment 3 of the present invention will be described. The information processing system according to the present embodiment differs from the information processing system according to Embodiment 2 described above in that a thought structure diagram is changed in response to users' votes with respect to a displayed subject or element. Since the other configurations and operations are the same as those in Embodiment 2, the same reference signs are given to the same configurations and operations, and detailed descriptions thereof will be omitted. Note that, the voting operation by users to be described below may be performed on a thought structure diagram generated and registered by the generation user in Embodiment 2, or may be performed on a thought structure diagram edited by a user after the registration. Further, a voting model of a thought structure diagram in which the size(s) of an element(s), the strength(s) of a link(s), and the like are not set may be provided, and the voting operation may be performed on the voting model of the thought structure diagram. Such a voting model of a thought structure diagram may be registered or edited by a user.

### <Voting Operation through User Terminal>

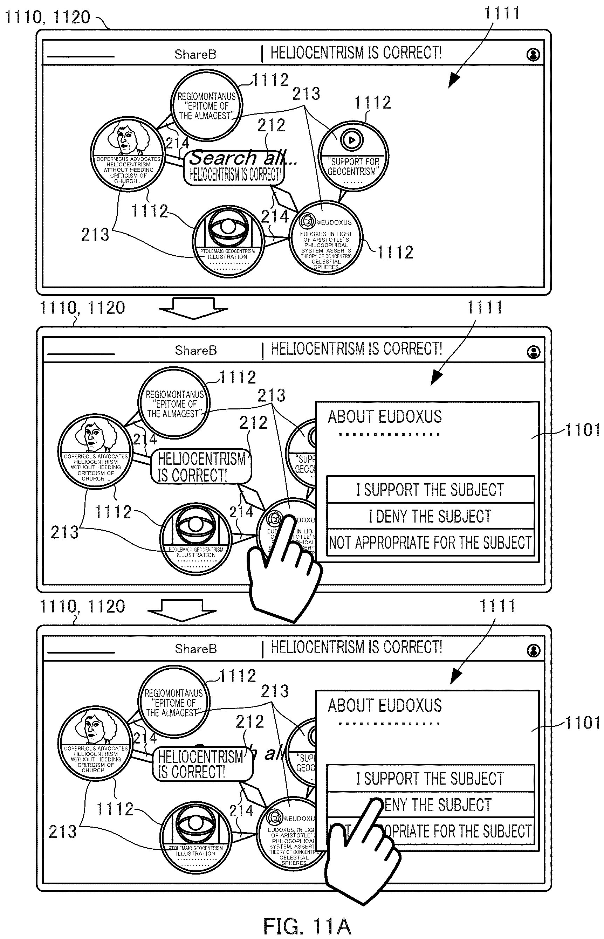

FIG. 11A illustrates a voting operation of user terminals 1110 and 1120 in the information processing system according to the present embodiment.

The upper diagram in FIG. 11A illustrates display screen 1111 of a thought structure diagram generated by a user on user terminal 1110. On display screen 1111 of user terminal 1110, a thought structure including subject 212 as the central element, peripheral elements 213, and links 214 is displayed. In addition, rings 1112 for displaying voting results by users are displayed around peripheral elements 213. However, since no voting has been performed by users yet, the sizes of peripheral elements 213 are not different (the importance is the same), and no coloring corresponding to the subject support rate/subject denial rate in the voting results is performed on neither subject 212 nor rings 1112.

The central diagram in FIG. 11A illustrates a state in which the user has selected "Eudoxus", which is peripheral element 213, as a voting destination. Window 1101 for describing Eudoxus opens, and soft buttons for voting for any of "I support the subject" (hereinafter referred to as subject support), "I deny the subject" (hereinafter referred to as subject denial), and "not appropriate for the subject" (or "not credible": hereinafter referred to as inappropriate element) are displayed together with the description of Eudoxus. Note that, even when another peripheral element is selected as a voting destination, the same soft buttons are displayed together with the description of the peripheral element.

The lower diagram in FIG. 11A illustrates a state in which the user has voted for "I deny the subject". The voting result is transmitted to ShareB server 1210 and accumulated in database 1211. Then, the display (size, shape, color(s), etc.) of the peripheral element is changed in accordance with the accumulated voting results, and the change is reflected in the other peripheral elements or subject that are associated with the peripheral element with the links, and is also reflected in the links.

### <Display Screen of User Terminals>

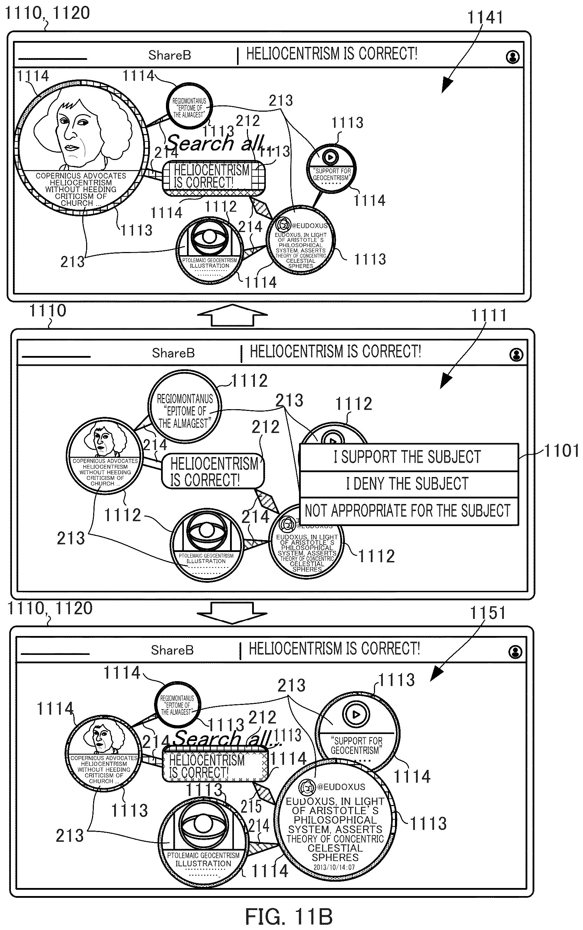

FIG. 11B illustrates changes reflecting voting on display screen 1111 of user terminals 1110 and 1120 in the information processing system according to the present embodiment.

The central diagram in FIG. 11B illustrates a state in which voting by users has not yet been performed, which corresponds to FIG. 11A.

The upper diagram in FIG. 11B is display screen 1141 of the thought structure diagram in a case where voting has been performed by users and numerous subject support votes are casted for the peripheral element Copernicus as the voting results. Display screen 1141 displays votes obtained by subtracting inappropriateness votes from the total number of votes and voting ratios (rates) as the voting results, such as subject support/subject denial/inappropriate with respect to subject 212 as the central element and peripheral elements 213, of users who have viewed the thought structure diagram. The votes obtained by subtracting the inappropriateness votes from the total number of votes are represented by the size of each peripheral element 213. That is, it is indicated that peripheral element 213 Copernicus, which has a large size, has numerous votes as the votes obtained by subtracting the inappropriateness votes from the total number of votes, and has a large influence on subject 212. It is indicated, on the other hand, that peripheral element 213 Regiomontanus, which has a small size, has few votes, including subject support/subject denial, as the votes obtained by subtracting the inappropriateness votes from the total number of votes, or has numerous votes for inappropriate element, and has a small influence on subject 212. Other peripheral elements 213 also have few votes as the votes obtained by subtracting the inappropriateness votes from the total number of votes, and have a small size.

Further, in the voting ratios (rates), the ratios of the votes for subject support (lattice shape) 1113 and subject denial (halftone dot) 1114 are displayed in different colors, for example, for subject 212 (in each drawing, the difference in color is indicated by the difference in pattern). In each peripheral element 213, the ratios of the votes for subject support 1113 and subject denial 1114 are displayed in association with the different colors for the subject in each ring 1112 around each element figure (for example, a circle). Note that, the voting on each peripheral element 213 is reflected in subject 212 and other peripheral elements 213 that are associated with each peripheral element 213 with links 214. Whether voting is reflected between elements may be selected, for example, when links 214 are set, or the like. Further, since voting on link 214 is easily visually recognizable and affects the appearance of the thought structure diagram, the shape of link 214 is desirably determined according to the peripheral elements. For example, it is considered that in a case where the user sets "equality (rectangle □)" for a link at the time of generating or editing a thought structure diagram, but subsequent voting results in one of two peripheral elements, which are connected with the link, for "supporting heliocentrism" and the other for "supporting geocentrism", the shape of the link therebetween is automatically changed to a "opposition (rhombus □ )" link, or the like. Note that, the shape of link 214 may be determined according to peripheral elements or may be selected by a user who has set link 214. Further, the influence of voting on link 214 is not limited to a method in which the influence is expressed as the influence on the opacity, but it is possible to consider various display methods that allow the influence to be visually grasped by using the shape, a broken line, or the like of the link.

It can be seen from display screen 1141 of the upper diagram in FIG. 11B that the ratio of subject support 1113 is large for subject 212. Further, it can be understood by having a quick glance at display screen 1141 that the reason for the large ratio of subject support 1113 for subject 212 is due to a positive interest in peripheral element 213 Copernicus, and that the voting results on other peripheral elements 213 do not significantly affect the thought on thought on subject 212. For example, the current situation is that display screen 1141 well represents a thought structure with the subject as "Heliocentrism is correct!" after Newton, and that the number of supporters of geocentrism is increasingly decreasing, and the thought can be structurally grasped from display screen 1141.

The lower diagram in FIG. 11B is display screen 1151 of the thought structure diagram in a case where voting is performed by users and numerous subject denial votes are cast for the peripheral element Eudoxus as the voting results. Display screen 1151 displays votes obtained by subtracting inappropriateness votes from the total number of votes and the ratios (rates) of subject support/subject denial votes as the voting results, such as subject support/subject denial/inappropriate element with respect to subject 212 as the central element and peripheral elements 213, of users who have viewed the thought structure diagram. The votes obtained by subtracting the inappropriateness votes from the total number of votes are represented by the size of each peripheral element 213. That is, it is indicated that peripheral element 213 Eudoxus, which has a large size, has numerous votes, including votes for subject support/subject denial, as the votes obtained by subtracting the inappropriateness votes from the total number of votes, and has, on the other hand, few votes for inappropriate element, and has a large influence on subject 212. It is indicated, on the other hand, that peripheral element 213 Copernicus, which has a small size, has few votes, including subject support/subject denial, as the votes obtained by subtracting the inappropriateness votes from the total number of votes, or has numerous votes for inappropriate element, and has a small influence on subject 212. Note that, an element with numerous votes for inappropriate element and an element with small votes for inappropriate element are displayed in an identifiable manner even when the votes including subject support/subject denial are the same. That is, although an element is displayed in a size corresponding to the importance of the element in the thought structure diagram, which is indicated by the voting results, the importance is indicated by referring to, for example, "the value obtained by subtracting inappropriateness votes from the total number of votes", "the difference or ratio between appropriateness votes and inappropriateness votes", and further "the sum of support votes and denial votes".

A case where it is indicated on display screen 1151 of the lower drawing in FIG. 11B that, for example, the size of peripheral element 213 Eudoxus is large and the size of peripheral element 213 Copernicus is small, with the result that subject support 1113 is smaller than subject denial 1114 for subject 212 will be analyzed. In this case, it can be understood that the users' interest in Eudoxus is greater than that in Copernicus, and the users' interest in Eudoxus is a positive interest. This result is thought to be the thought structure of people in the time of, for example, the Galileo trial before Newton. Such result will not occur when correct voting is performed in the current voting results. However, it is possible to infer the thought structure of an era, in which "Heliocentrism is correct!" is denied, from display screen 1151 of the lower diagram in FIG. 11B.

As described above, when the upper diagram and the lower diagram are compared in FIG. 11B, it is possible to grasp a thought structure leading to the results of support/denial of the subject and the voting results at a glance. Further, in a case where consistency with analysis of a thought tendency can be achieved based on the structure of a thought structure diagram generated by a user and the sizes or colors indicating votes, it can be evaluated that this thought structure diagram well represents the thought structure shared by a large number of people, and it can be effectively utilized in the generation of a thought structure diagram in the future.

In the present embodiment, voting on subject 212 (or proposition) as the central element is voting for or against, while voting on a peripheral element or a link is not voting for or against, but rather voting to determine the attribute or importance of information. For example, when a user looks at peripheral element 213 Copernicus and feels that "this peripheral element supports heliocentrism", the user will vote for "this peripheral element supports heliocentrism". On the other hand, when the user feels that "this peripheral element supports geocentrism", the user will vote for "this peripheral element supports geocentrism". The colors, shapes, and the like of ring 1112, which is a pie chart around peripheral element 213 Copernicus, and link 214 extending from the peripheral element are determined according to the ratio thereof. In FIG. 11B, the link from the peripheral element Copernicus on the heliocentrism support side is illustrated in a lattice shape, and the link from the peripheral element Eudoxus on the geocentrism support side is illustrated in a slanted line shape. Further, voting for "this peripheral element supports geocentrism" and voting for "this peripheral element supports heliocentrism" both have the effect of enlarging the size of the peripheral element, indicating the degree of interest in this peripheral element, that is, the degree of influence on subject 212. Note that, in a case where the degree of interest is further indicated by the opacity and the opacity decreases, the effect of increasing and materializing the opacity is achieved by an increase in the number of votes.

Further, when a user feels that "this peripheral element has low credibility" or "this peripheral element has weak relevance to the subject (or proposition) as this central element" and votes accordingly, the size of this peripheral element is reduced, and the opacity decreases further in a state in which the size is reduced to the minimum size. Then, when the opacity reaches its minimum state and a certain period has passed, the element disappears. Note that, as long as the method indicates the low importance or low credibility of the peripheral element efficiently and in a visually recognizable manner, the display method is not limited to "the size is reduced" or "the opacity decreases", and may be any other display method.

As described above, voting on a proposition (or subject) as the central element involves subject support/subject denial by each user, and the size of a peripheral element corresponding to the number of votes represents the importance thereof in a thought structure diagram. Changes in peripheral elements and links due to such voting have the effect of bringing a thought structure for a central element indicated in a thought structure diagram closer to a more universal thought structure and making the though structure more organized and easier to view. Further, changes in a thought structure diagram due to voting allow users to intuitively understand the thought structure.

### (Filtering Processing)

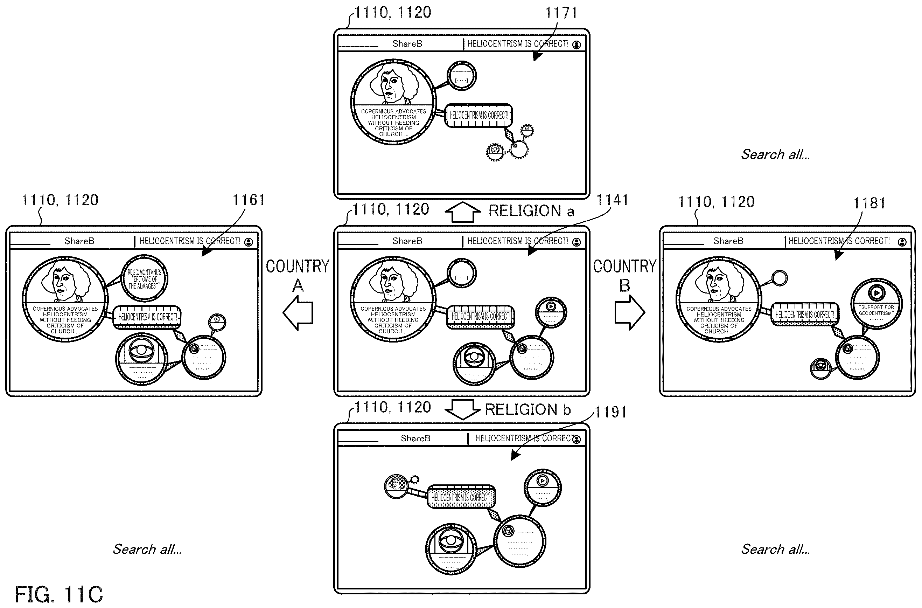

FIG. 11C illustrates displays of a thought structure diagram, on which filtering processing has been performed, on user terminals 1110 and 1120.

Display screen 1141 in the central diagram in FIG. 11C is the same as the upper diagram in FIG. 11B. Here, filtering is performed on voting results of users under various conditions with respect to the thought structure diagram on display screen 1141 in which the voting results have been reflected. The upper, lower, left, and right diagrams in FIG. 11C illustrate the thought structure diagram that has changed as a result of filtering under different conditions, respectively.

Display screens 1161 and 1181 of the left and right diagrams in FIG. 11C indicate results of filtering based on the nationalities of users who have voted. Display screen 1161 of the left diagram indicates the thought structure diagram in which the votes of users having the nationality of country A have been searched and the voting results have been reflected. Display screen 1181 of the right diagram indicates the thought structure diagram in which the votes of users having the nationality of country B have been searched and the voting results have been reflected. On the other hand, display screens 1171 and 1191 of the upper and lower diagrams in FIG. 11C indicate results of filtering based on the religions that users who have voted believe in. Display screen 1171 of the upper diagram indicates the thought structure diagram in which the votes of users who believe in religion a have been searched and the voting results have been reflected. Display screen 1191 of the lower diagram indicates the thought structure diagram in which the votes of users who believe in religion b have been searched and the voting results have been reflected.

As described above, by filtering the votes of users under various conditions, it is possible to know changes or differences in a thought structure diagram under set conditions. The filtering conditions are not limited to other conditions (such as age or gender) according to the attributes of users, but include any conditions necessary for analyzing a thought structure, such as voting period, voting time, or geographical conditions.

### <Configuration of Information Processing System>

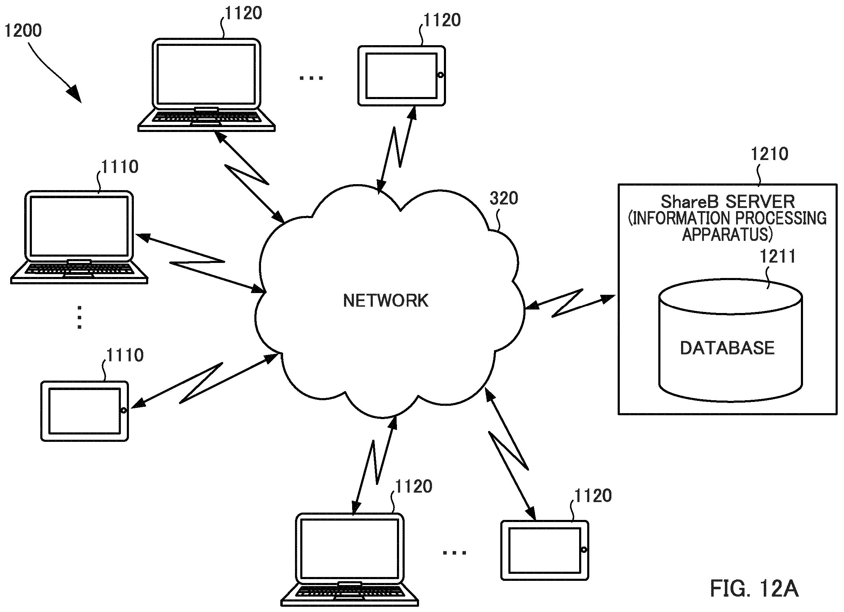

FIG. 12A is a block diagram illustrating a configuration of information processing system 1200 according to the present embodiment.

In information processing system 1200, user terminal 1120, which allows a user to view a thought structure diagram and vote on the subject, a peripheral element(s), and a link(s) thereof, and ShareB server 1210 as an information processing apparatus, which aggregates votes through user terminal 1120 and reflects the aggregated votes in the thought structure diagram are connected via network 320.

### <Operation Procedure of Information Processing System>

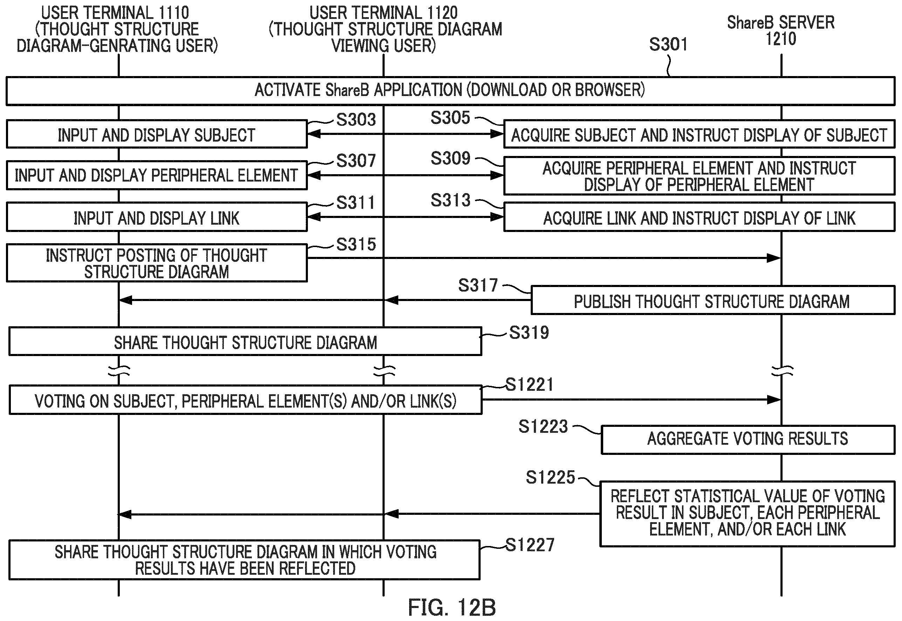

FIG. 12B is a sequence diagram illustrating an operation procedure of information processing system 1200 according to the present embodiment. Further, in FIG. 12B, the editing of the thought structure diagram in FIG. 3B is omitted, but the editing of the thought structure diagram is also included.

In step S1221, voting on a subject and/or an element(s) in a thought structure diagram, which is being viewed, is performed through user terminals 1110 and 1120. ShareB server 1210 that has received the voting results aggregates voting results with respect to the subject, each peripheral element, and/or each link of each thought structure diagram in step S1223. Then, in step S1225, ShareB server 1210 reflects the statistical values of the aggregated voting results (for example, the total number of votes and the ratios of support and denial) in the display of the subject, each peripheral element, and/or each link, and transmits the thought structure diagram to user terminals 1110 and 1120. In step S1227, user terminals 1110 and 1120 share the thought structure diagram in which the voting has been reflected.

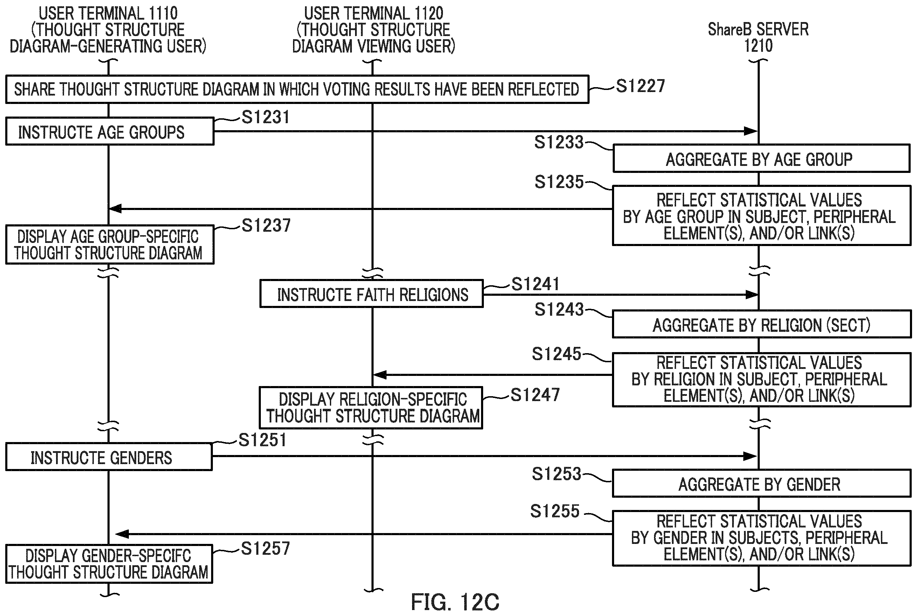

FIG. 12C is a sequence diagram illustrating an operation procedure in the information processing system according to the present embodiment. FIG. 12C illustrates filtering processing on voting results.

In step S1231, the age groups of the users who have voted are instructed as a filtering condition through user terminal 1110. In step S1233, ShareB server 1210 aggregates the voting results accumulated in the database by age group. Then, in step S1235, ShareB server 1210 reflects the statistical values by age group in the subject, peripheral element(s), and/or link(s), and transmits the thought structure diagram to user terminal 1110. In step S1237, user terminal 1110 displays the received age group-specific thought structure diagram.

In step S1241, the religions that the users who have voted believe in are instructed as a filtering condition through user terminal 1120. In step S1243, ShareB server 1210 aggregates the voting results accumulated in the database by faith religion (and further by sect). Then, in step S1245, ShareB server 1210 reflects the statistical values by faith religion in the subject, peripheral element(s), and/or link(s), and transmits the thought structure diagram to user terminal 1120. In step S1247, user terminal 1120 displays the received faith religion-specific thought structure diagram.

In step S1251, the genders of the users who have voted are instructed as a filtering condition through user terminal 1110. In step S1253, ShareB server 1210 aggregates the voting results accumulated in the database by gender. Then, in step S1255, ShareB server 1210 reflects the statistical value by gender in the subject, peripheral element(s), and/or link(s), and transmits the thought structure diagram to user terminal 1110. In step S1257, user terminal 1110 displays the received thought structure diagram in which the voting results by gender have been reflected.

### <Functional Configuration of ShareB Server>

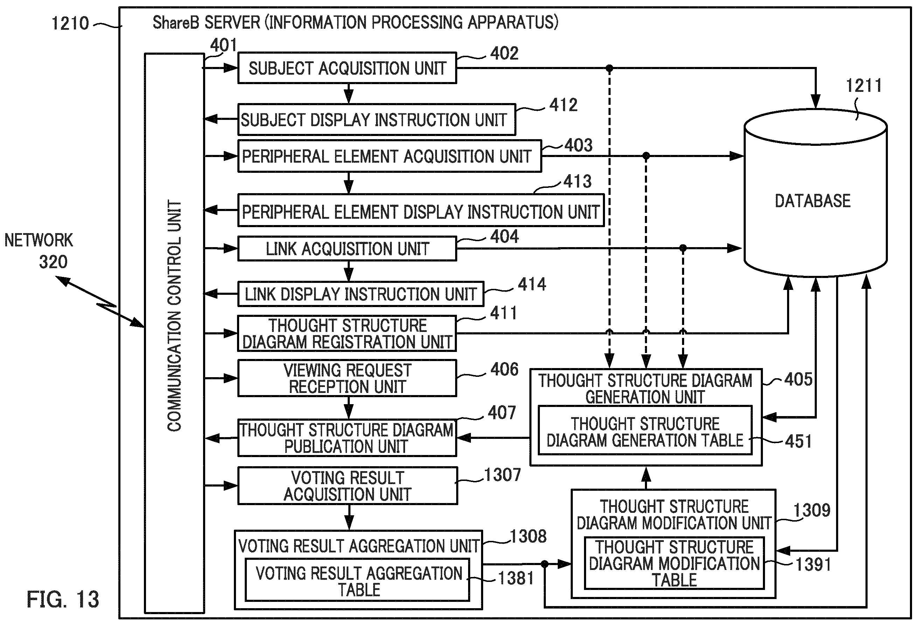

FIG. 13 is a block diagram illustrating a functional configuration of ShareB server 1210 as an information processing apparatus according to the present embodiment. Further, in FIG. 13, the functional elements related to the editing of a thought structure diagram in FIG. 4 are omitted.

ShareB server 1210 includes voting result acquisition unit 1307, voting result aggregation unit 1308, thought structure diagram modification unit 1309, and database 1211. Voting result acquisition unit 1307 acquires voting results on a subject, each peripheral element, and/or each link in a thought structure diagram from user terminal 1120. The voting results include identifiers (user IDs) of users who have voted, an identifier (thought structure diagram ID) of the thought structure diagram, an identifier(s) (element ID(s)) of the subject, each peripheral element, and/or each link, a flag for subject support/subject denial/inappropriate, and the like. Voting result aggregation unit 1308 includes voting result aggregation table 1381, and aggregates acquired statistical results on each thought structure diagram, each subject, each peripheral element, and/or each link, and calculates statistical values (such as total numbers and rates). Thought structure diagram modification unit 1309 includes thought structure diagram modification table 1391, and reflects the aggregated results in the generation of a subject, each peripheral element, and/or each link in a thought structure diagram by thought structure diagram generation unit 405. That is, the total number of votes is indicated by the size or opacity of a peripheral element, or the color(s) or opacity of a link, and the rate is indicated by a display in an identifiable manner (in the case of a peripheral element, by the length of the arc around the peripheral element) (see FIGS. 11A to 11C). As long as these display methods allow visual recognition during viewing, various methods other than those exemplified here can be considered. Then, in a case where voting occurs, thought structure diagram publication unit 407 also functions as a voting result display instruction unit that causes the voting results to be reflected. Note that, although not illustrated in FIG. 13, in a case where filtering processing of changing an aggregation condition(s) for the voting results is executed in the viewing, ShareB server 1210 includes a condition acquisition unit that acquires a filtering condition(s) for filtering the voting results. Then, thought structure diagram modification unit 1309 functions as a filtering reflection unit that reflects, in response to voting results aggregated correspondingly to the filtering condition(s), the voting results in at least one display of a subject, a peripheral element, and a link included in a thought structure diagram.

### (Database)

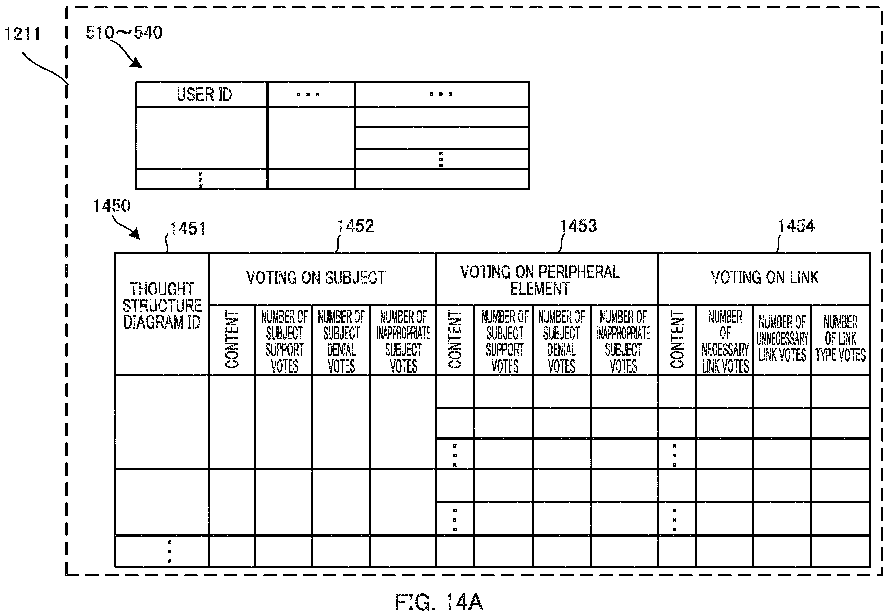

FIG. 14A illustrates a configuration of database 1211 according to the present embodiment. Database 1211 stores data, parameters, and programs necessary for processing by ShareB server 1210, as well as thought structure diagrams including subjects, peripheral elements, and links.

Database 1211 includes voting result storage unit 1450 in addition to subject storage unit 510, peripheral element storage unit 520, link storage unit 530, and editing authority registration unit 540 in FIG. 5A. Voting result storage unit 1450 accumulates voting results and aggregation results thereof from user terminal 1120. Voting result storage unit 1450 stores, in association with thought structure diagram ID 1451, voting on subject 1452 as the central element, voting on peripheral element 1453, and voting on link 1454. Voting on subject 1452 includes, for example, the content of the subject, the number of subject support votes on the subject, the number of subject denial votes on the subject, and the number of inappropriate subject votes on the subject. Further, voting on peripheral element 1453 includes, for example, for a plurality of peripheral elements, the content of each peripheral element, the number of subject support votes on the subject in each peripheral element, the number of subject denial votes on the subject in each peripheral element, and the number of inappropriate element votes on each peripheral element. Further, voting on link 1454 includes, for example, for a plurality of links, the content of each link, the number of necessary link votes on each link, the number of unnecessary link votes on each link, and the number of link type votes on each link. Note that, the configuration of voting result storage unit 1450 is not limited to that in FIG. 14A. In a case where one thought structure diagram includes a plurality of subjects, voting on a plurality of subjects 1452 is stored in association with one thought structure diagram ID 1451.

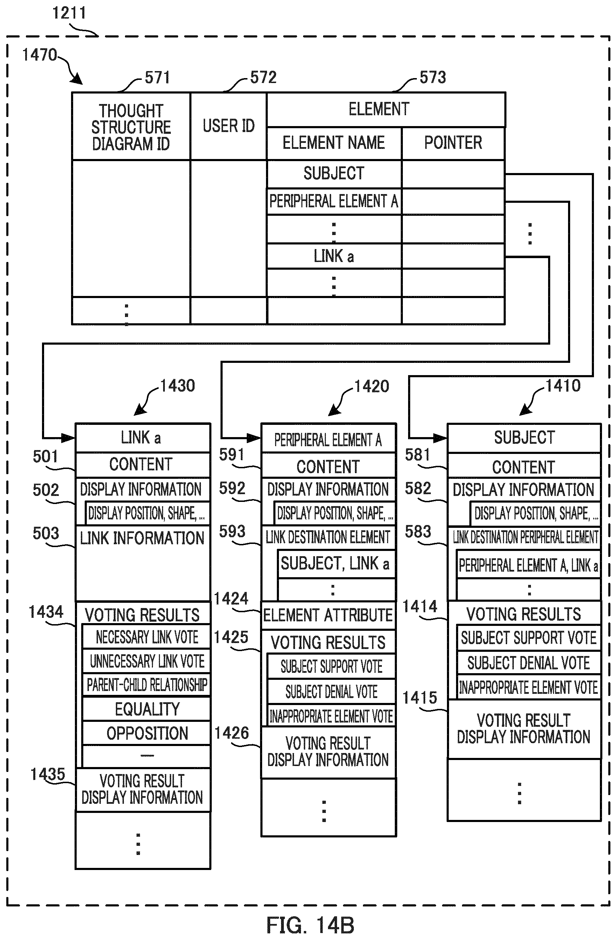

FIG. 14B illustrates a configuration of thought structure diagram storage unit 1470 stored in database 1211 according to the present embodiment. Note that, FIG. 14B illustrates the configuration of one thought structure diagram, but numerous registered thought structure diagrams are stored.

Subject data storage unit 1410 stores voting results 1414 and voting result display information 1415. Voting results 1414 store information on subject support votes, information on subject denial votes, and information on inappropriate subject votes. Voting result display information 1415 stores, for example, information for displaying the inside of the region of the display shape of the subject in different colors for the subject support rate and the subject denial rate.

Peripheral element data storage unit 1420 stores element attribute 1424, voting results 1425, and voting result display information 1426. Element attribute 1424 is information indicating whether voting results on peripheral element A are reflected as they are or are reflected in the opposite manner for, for example, a subject to which peripheral element A is connected with a link. In the voting method of the present embodiment, the "order relationship" in which voting results on peripheral element A are reflected as they are is fixed. Voting results 1425 store, for example, information on subject support votes, information on subject denial votes, and information on inappropriate element votes, where the respective votes are cast on peripheral element A. Voting result display information 1426 stores, for example, information for displaying the periphery (in the case of a circle, the circumference) of the display shape of peripheral element A in different colors for the subject support rate and the subject denial rate.

Link data storage unit 1430 stores voting results 1434 and voting result display information 1435. Voting results 1434 store, for example, information on necessary link votes and information on unnecessary link votes, and information on voting on the link type. The voting on the link type includes, for example, parent-child relationship, equality, opposition, or the like. Note that, the parent-child relationship, equality, opposition, or the like may be selected from voting results on an element connected with link a described above. Voting result display information 1435 stores, for example, information on the display shape, thickness, opacity, and the like for displaying link a.

### (Voting Result Aggregation Table)

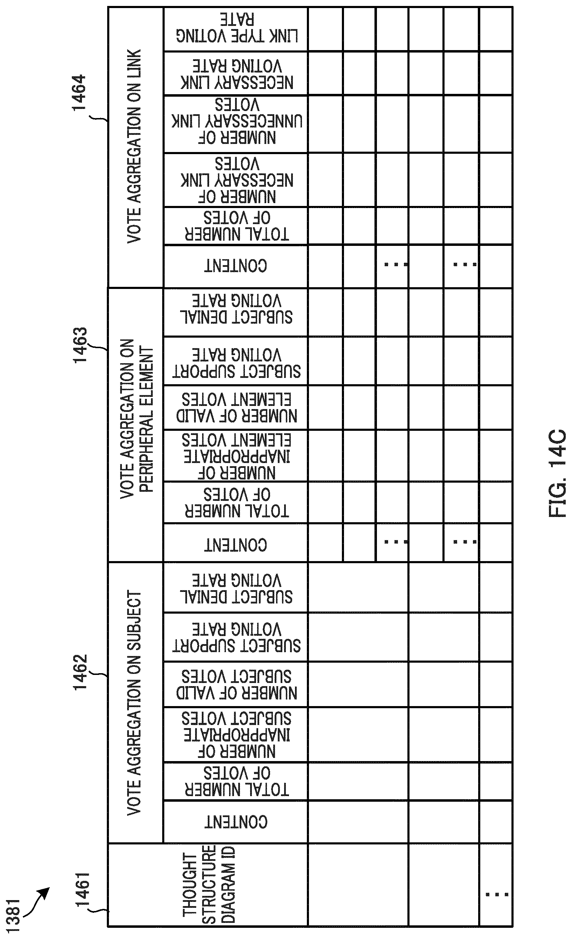

FIG. 14C illustrates a configuration of voting result aggregation table 1381 according to the present embodiment. Voting result aggregation table 1381 is used to aggregate voting results acquired from user terminal 1120 by voting result aggregation unit 1308.

Voting result aggregation table 1381 stores, in association with thought structure diagram ID 1461, vote aggregation on subject 1462 as the central element, vote aggregation on peripheral element 1463, and vote aggregation on link 1464. Vote aggregation on subject 1462 stores, for example, the content of the subject, the total number of votes on the subject, the number of inappropriate subject votes on the subject, the number of valid subject votes, the subject support voting rate, and the subject denial voting rate. Here, the number of valid subject votes is the number of votes obtained by subtracting the number of inappropriate subject votes from the total number of votes. Further, the subject support voting rate is a value obtained by dividing the number of subject support votes on the subject by the number of valid subject votes. Further, the subject denial voting rate is a value obtained by dividing the number of subject denial votes on the subject by the number of valid subject votes. Further, vote aggregation on peripheral element 1463 stores, for example, the content of a peripheral element, the total number of votes on the peripheral element, the number of inappropriate element votes on the peripheral element, the number of valid element votes, the subject support voting rate, and the subject denial voting rate. Here, the number of valid element votes is the number of votes obtained by subtracting the number of inappropriate element votes from the total number of votes. Further, the subject support voting rate is a value obtained by dividing the number of subject support votes in the peripheral element by the number of valid element votes. Further, the subject denial voting rate is a value obtained by dividing the number of subject denial votes in the peripheral element by the number of valid element votes. Further, vote aggregation on link 1464 stores, for example, the content of a link, the total number of votes on the link, the number of necessary link votes on the link, the number of unnecessary link votes, the necessary link voting rate, and the link type voting rate. Here, the necessary link voting rate is a value obtained by dividing the number of necessity votes on the link by the sum of the number of necessity votes and the number of unnecessity votes. For example, the size, opacity and the like of a peripheral element are determined by the ratio of "the number of valid element votes" to "the number of inappropriate element votes", the difference in the number of votes therebetween, and/or the like. Further, the opacity and the like of a link are determined by the necessary link voting rate or the like. Note that, the configuration of voting result aggregation table 1381 is not limited to that in FIG. 14C. In a case where one thought structure diagram includes a plurality of subjects, vote aggregation on a plurality of subjects 1462 is stored in association with one thought structure diagram ID 1461.

In FIG. 14C, the relationships between the subject, each element, and each link are not illustrated, but votes on a peripheral element may be reflected in votes on the subject or another peripheral element, which is associated with the peripheral element with a link. Further, votes on a peripheral element may be reflected in votes on a link which is connected to the peripheral element. For example, in a case where numerous votes for "inappropriateness" are cast for a peripheral element and the opacity or the like of the peripheral element is affected, the opacity or the like of a link which is connected to the peripheral element also decreases. Alternatively, in a case where voting results of one of two peripheral elements connected with a link and voting result of the other of the two peripheral elements are in conflict with each other, the link is changed to have a shape or color representing the opposition.

### (Voting Result Display Table)

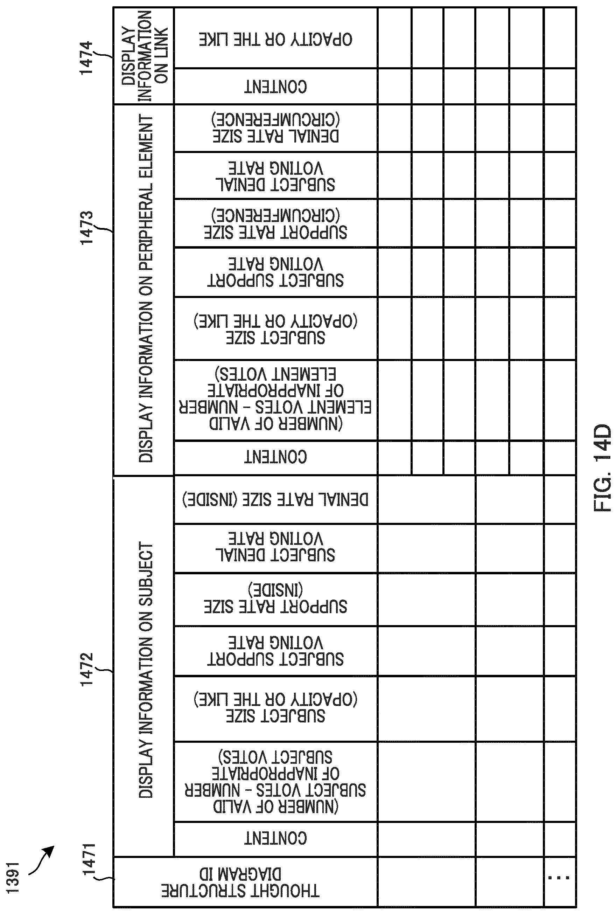

FIG. 14D illustrates a configuration of thought structure diagram modification table 1391 according to the present embodiment. Thought structure diagram modification table 1391 is used by thought structure diagram modification unit 1309 to modify a thought structure diagram in response to the aggregation of voting results.

Thought structure diagram modification table 1391 stores, in association with thought structure diagram ID 1471, display information on subject 1472, display information on peripheral element 1473, and display information on link 1474. Display information on subject 1472 stores, for example, the content of the subject, (the number of valid subject votes - the number of inappropriate subject votes), the display size of the subject, the subject support voting rate, the display size of the subject support rate, the subject denial voting rate, and the display size of the subject denial rate. Here, with respect to the display size of the subject, FIGS. 11A to 11C illustrate examples in which the display size of the subject does not change, but the display size of the subject desirably changes, for example, in a case where a thought structure diagram includes a plurality of subjects. The change is not limited to a change in the display size, and other expression techniques that allow visual recognition may also be used, such as opacity. Further, in FIGS. 11A to 11C, the display size of the subject support rate and the display size of the subject denial rate are expressed by the ratio of the area within the display size of the subject that does not change.

Further, display information on peripheral element 1473 stores, for example, for a plurality of peripheral elements, the content of each peripheral element, (the number of valid element votes - the number of inappropriate element votes), the display size, opacity or the like of each peripheral element, each subject support voting rate, the display size of each subject support rate, each subject denial voting rate, and the display size of each subject denial rate. Here, with respect to the display size of a peripheral element, the size of the circle changes according to the number of (the number of element valid votes - the number of inappropriate element votes) and the opacity of the peripheral element becomes transparent after the circle becomes the minimum circle in FIGS. 11A to 11C (not illustrated). Note that, the expression method is not limited to the display size or opacity of a peripheral element, and other expression techniques that allow visual recognition may also be used. Further, in FIGS. 11A to 11C, the display size of the subject support rate and the display size of the subject denial rate in a peripheral element are expressed by the ratio of the length of each color of the arc around the circle (in FIGS. 11A to 11C, the difference in color is indicated by the difference in pattern). However, the display size is not limited to the ratio of the length of each color of the arc around the circle, and other expression techniques that allow visual recognition may also be used. Further, with respect to display information on link 1474, the color(s) thereof change(s) according to voting results on peripheral elements, and the necessity voting rate and (the number of necessity votes - the number of unnecessity votes) are expressed by the opacity and/or the shape of display information on link 1474. Further, not only the opacity and/or the shape, but other expression techniques that allow visual recognition may also be used. Note that, the configuration of thought structure diagram modification table 1391 is not limited to that in FIG. 14D. The shape selection for a link may be determined by voting. For example, a method in which viewing users are allowed to select from the options of "no causal relationship/equality □", "parent-child □ ", and "opposition □ " in voting and are allowed to cast votes directly on each link is also possible. Further, it is also possible to consider a method in which, based on the attributes of two peripheral elements located at both ends of a link (attributes determined as a result of voting by viewing users on each peripheral element, such as "I support that Heliocentrism is correct!" or "I do not support that Heliocentrism is correct!"), "equality □" changes to "opposition □ " or "opposition □ " changes to "equality □".

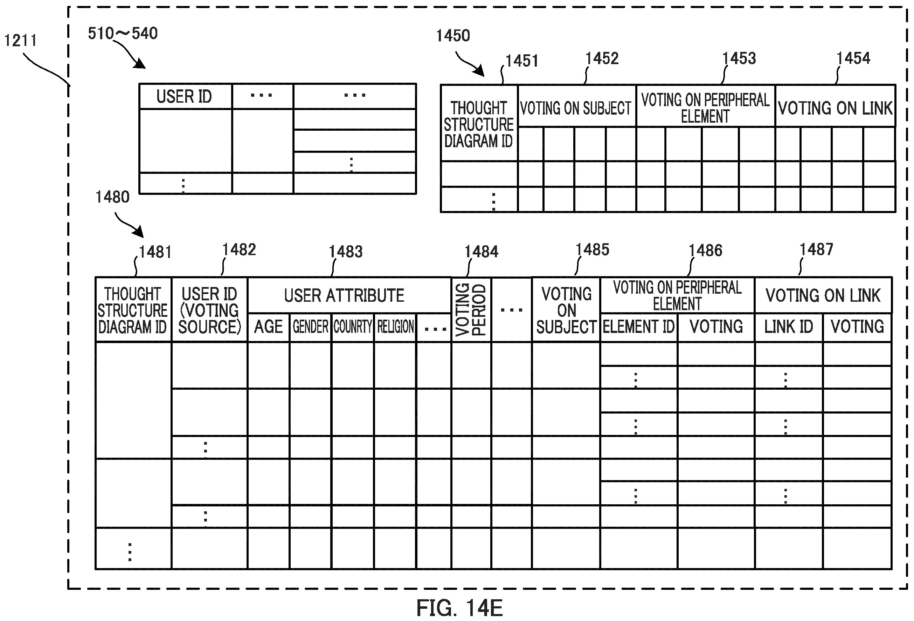

FIG. 14E illustrates a configuration of database 1211 in a case where the filtering processing illustrated in FIGS. 11C and 12C is performed. Note that, the configuration of database 1211 is not limited to that in FIG. 14E.

Database 1211 in FIG. 14E includes, in addition to subject storage unit 510, peripheral element storage unit 520, link storage unit 530, editing authority registration unit 540, and voting result storage unit 1450 in FIG. 14A, filtering storage unit 1480. Filtering storage unit 1480 stores, in association with thought structure diagram ID 1481, user ID (voting source) 1482 of a user who has voted on this thought structure diagram, user attribute 1483, voting period 1484 and the like which serve as filtering conditions, and voting on subject 1485, voting on peripheral element 1486, and voting on link 1487 which are voting results. Note that, the configuration of filtering storage unit 1480 is not limited to that in FIG. 14E. For example, filtering can also be performed to invalidate duplicate votes through the same user terminal in order to maintain the fairness of voting, or the like.

In a case where a filtering condition(s) is/are set, user attribute 1483, voting period 1484, and the like are searched by using the filtering condition(s) as the search key(s), and voting contents that match the filtering condition(s) are collected. Then, the thought structure diagram is varied according to the collected content(s).

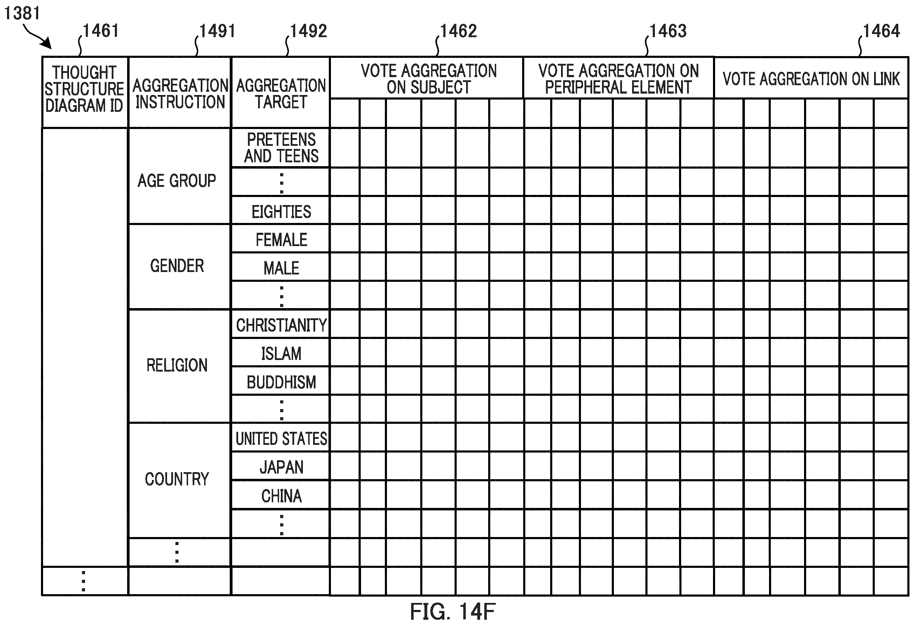

FIG. 14F illustrates a configuration of voting result aggregation table 1381 in which voting contents that match filtering conditions are collected. During filtering, FIG. 14C is replaced with FIG. 14F. Thought structure diagram modification unit 1309 refers to this voting result aggregation table 1381 and changes the thought structure diagram by using thought structure diagram modification table 1391.

Voting result aggregation table 1381 stores collection instruction 1491 and collection target 1492 in association with thought structure diagram ID 1461. Collection instruction 1491 and/or collection target 1492 described above correspond(s) to the filtering conditions. The votes collected based on each filtering condition have the same configuration as in FIG. 14C.

### <Processing Procedure of ShareB Server>

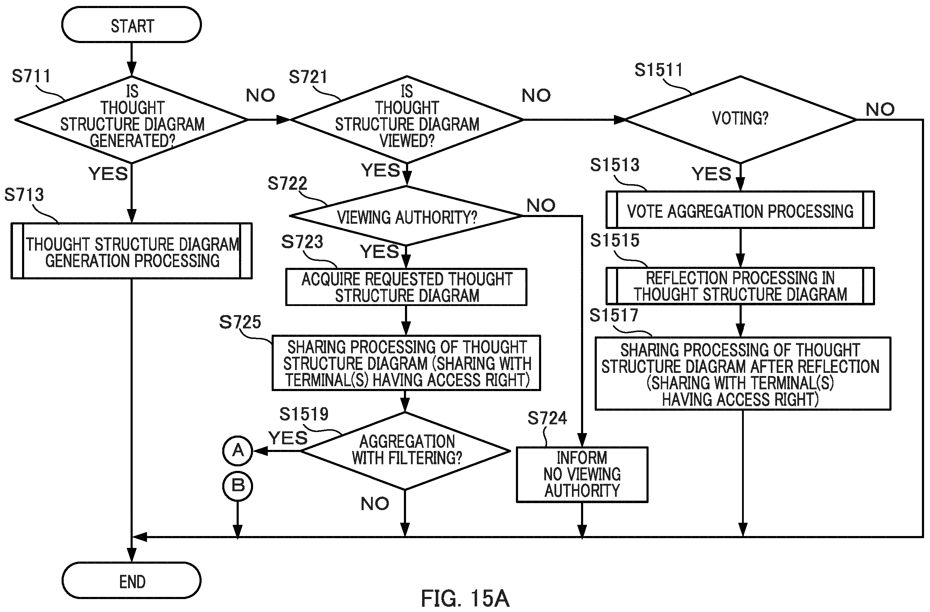

FIG. 15A is a flowchart illustrating a processing procedure of ShareB server 1210 in the present embodiment. Further, this flowchart is executed by CPU 610 using RAM 640 in FIG. 6, which realizes the components in FIG. 13.

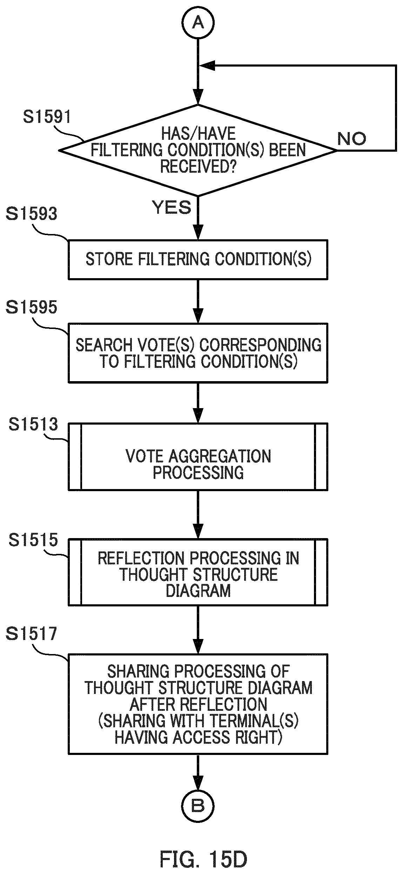

After the thought structure diagram is viewed in step S725, ShareB server 1210 determines in step S1519 whether aggregation with filtering is performed (whether there is a request from a user terminal). In a case where the aggregation with filtering is performed, ShareB server 1210 proceeds to step S1591 in FIG. 15D.

In a case where a thought structure diagram is neither generated nor viewed, ShareB server 1210 determines in step S1511 whether voting results from user terminal 1120 are acquired. When voting results are acquired, ShareB server 1210 executes aggregation processing of the acquired voting results in step S1513. In step S1515, ShareB server 1210 executes reflection processing of the voting results in the thought structure diagram. Then, in step S1517, ShareB server 1210 performs sharing processing of the thought structure diagram after the reflection (sharing with a terminal(s) having the access right).

### (Voting Result Aggregation Processing)

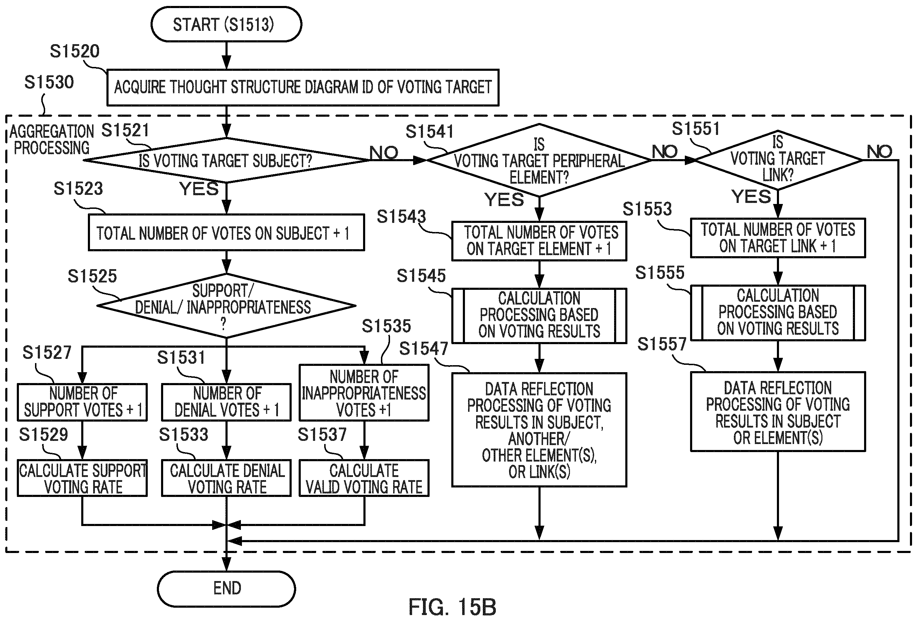

FIG. 15B is a flowchart illustrating a procedure of voting result aggregation processing S1513 according to the present embodiment.

In step S1520, ShareB server 1210 acquires the thought structure diagram ID of a voting target, which is included in voting information obtained from user terminal 1120. In step S1521, ShareB server 1210 determines whether the voting target is the subject as the central element. When the voting target is the subject, ShareB server 1210 adds 1 to the total number of votes on the subject in step S1523. Next, in step S1525, ShareB server 1210 determines whether the voting content indicates support for the subject, indicates denial of the subject, or indicates that the subject is inappropriate. In the case of the support for the subject, ShareB server 1210 adds 1 to the number of support votes in step S1527, and calculates the support voting rate (= the number of support votes / the total number of valid votes) in step S1529. In the case of the denial of the subject, ShareB server 1210 adds 1 to the number of denial votes in step S1531, and calculates the denial voting rate (= the number of denial votes / the total number of valid votes) in step S1533. In a case where the voting indicates that the subject is inappropriate, ShareB server 1210 adds 1 to the number of inappropriateness votes in step S1535 and calculates the total number of valid votes and the valid voting rate in step S1537. Here, the total number of valid votes is (the total number of votes - the number of inappropriateness votes), and the valid voting rate is (the total number of valid votes / the total number of votes).

In a case where the voting target is not the subject, ShareB server 1210 determines in step S1541 whether the voting target is a peripheral element. In a case where the voting target is a peripheral element, ShareB server 1210 adds 1 to the total number of votes on the target element in step S1543. Next, in step S1545, ShareB server 1210 performs, on the peripheral element, the same processing as the processing in steps S1525 to S1537 for the subject. Then, in step S1547, ShareB server 1210 performs reflection processing of the voting results on the peripheral element in the subject, another/other peripheral element(s), a link(s), or the like. Further, in a case where the voting target is neither the subject nor a peripheral element, ShareB server 1210 determines in step S1551 whether the voting target is a link. In a case where the voting target is a link, ShareB server 1210 adds 1 to the total number of votes on the target link in step S1553. Next, in step S1555, ShareB server 1210 performs, on the link, the same processing as the processing in steps S1525 to S1537 for the subject. Note that, in the voting on the link, voting to select the shape of the link, such as "parent-child □ ", "equality □", or "opposition □ ", may be performed. Then, ShareB server 1210 may optionally perform, in step S1557, reflection processing of the voting results on the link in the subject or a peripheral element(s) or another/other link(s). Further, it the reflection processing, it may be determined whether the reflection is performed at the time of generating a thought structure diagram or at the time of editing an existing thought structure diagram. Note that, although not illustrated in FIG. 15B, data reflection processing of reflecting voting results on the subject in another subject, a peripheral element(s), or a link(s) may also be added.

### (Reflection Processing in Thought Structure Diagram)

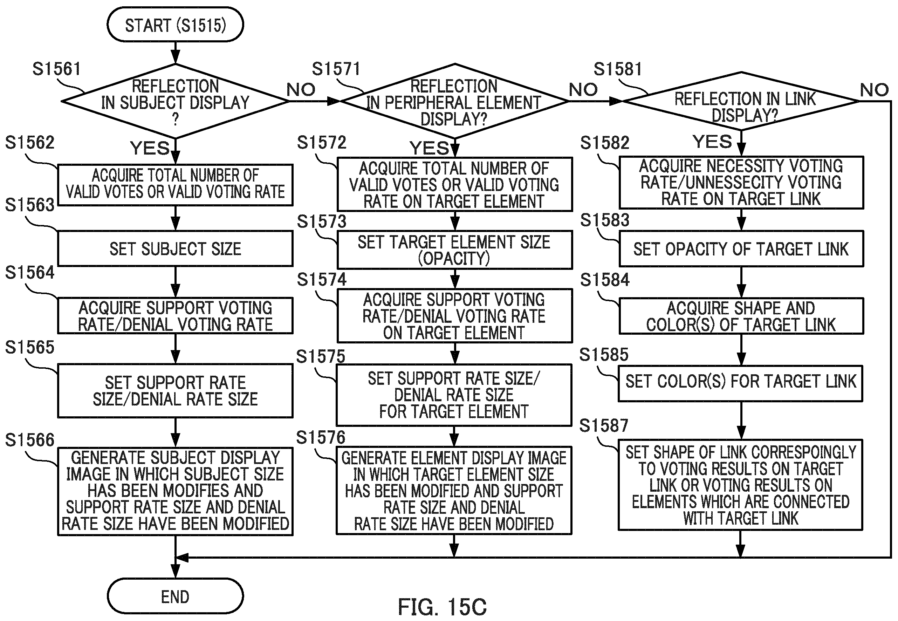

FIG. 15C is a flowchart illustrating a procedure of reflection processing S1515 in a thought structure diagram in the present embodiment.

In step S1561, ShareB server 1210 determines whether to reflect voting in the display of the subject. In a case where voting on the subject occurs and is reflected in the display of the subject, ShareB server 1210 acquires the total number of valid votes or the valid voting rate of votes on the subject in step S1562. Then, in step S1563, ShareB server 1210 sets the display size of the subject corresponding to the total number of valid votes or the valid voting rate. In step S1564, ShareB server 1210 acquires the subject support voting rate and the subject denial voting rate on the subject. Then, in step S1565, ShareB server 1210 sets the display size of the subject support rate and the display size of the subject denial rate on the subject. In step S1566, ShareB server 1210 modifies the display size of the subject (in the present example, no modification is made), modifies the display size of the support rate on the subject and the display size of the denial rate on the subject, and generates a display image of the subject. Note that, in steps S1562 to S1566, when the reflection of the voting results in the subject display is not indicated with the size, other changes in the display, which allow visual recognition, may also be set.

In a case where the voting is not voting on the subject, ShareB server 1210 determines in step S1571 whether the voting is voting on a peripheral element and whether the voting is reflected in the display of the peripheral element. In a case where the voting is reflected in the display of the peripheral element, ShareB server 1210 acquires the total number of valid votes or the valid voting rate of votes on the target element in step S1572. Then, in step S1573, ShareB server 1210 sets the display size or opacity of the target element corresponding to the total number of valid votes or the valid voting rate of the votes. In step S1574, ShareB server 1210 acquires the subject support voting rate and the subject denial voting rate on the target element. Then, in step S1575, ShareB server 1210 sets the display size of the subject support rate and the display size of the subject denial rate on the target element. In step S1576, ShareB server 1210 modifies the display size of the target element, modifies the display size of the subject support rate and the display size of the subject denial rate on the target element, and generates a display image of the target element. Note that, in steps S1572 to S1576, when the reflection of the voting results in the peripheral element display is not indicated with the size or the opacity, other changes in the display, which allow visual recognition, may also be set.

In a case where the voting is neither voting on the subject nor voting on a peripheral element, ShareB server 1210 determines in step S1581 whether the voting is voting on a link and whether the voting is reflected in the display of the link. In a case where the voting is reflected in the display of the link, ShareB server 1210 acquires the necessity voting rate or the unnecessity voting rate on the link in step S1582. Then, in step S1583, ShareB server 1210 sets the opacity of the display of the target link corresponding to the total number of valid votes or the valid voting rate of the votes, or the like. Note that, in a case where the reflection of the voting results in the link display is not indicated with the opacity, other changes in the display, which allow visual recognition, may also be used. In step S1584, ShareB server 1210 acquires the shape and color(s) as the type of the target link. Then, in step S1585, ShareB server 1210 sets the color(s) for the target link. Alternatively, ShareB server 1210 may acquire, in step S1584, the subject support voting rate(s) and the subject denial voting rate(s) on a target peripheral element(s) to which the target link is connected, and may set, in step S1585, the color(s) for the target link based on the subject support voting rate(s) and the subject denial voting rate(s) on the target peripheral element(s). Further, in step S1587, the shape of the link is set correspondingly to voting results on the shape of the target link or voting results on elements which are connected with the target link.

FIG. 15D is a flowchart illustrating a processing procedure of filtering processing in the case of YES in step S1519 of FIG. 15A.

In step S1591, ShareB server 1210 waits to receive a filtering condition(s) set by user terminals 1110 and 1120 for the filtering processing. When a filtering condition(s) has/have been received, ShareB server 1210 stores the received filtering condition(s) in step S1593. In step S1595, ShareB server 1210 searches and collects a vote(s) meeting the filtering condition(s) from database 1211. Then, in step S1513, ShareB server 1210 executes the vote aggregation processing illustrated in FIG. 15B on the vote(s) meeting the filtering condition(s). Next, in step S1515, ShareB server 1210 executes the reflection processing in the thought structure diagram illustrated in FIG. 15C by using the aggregation result(s) of the vote(s) meeting the filtering condition(s).

### <Functional Configuration of User Terminal>

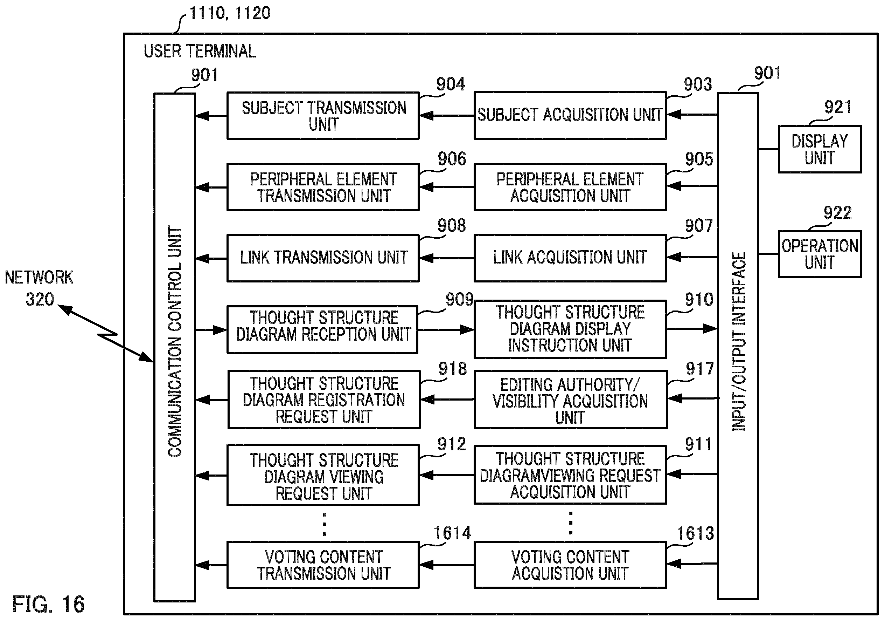

FIG. 16 is a block diagram illustrating a functional configuration of user terminals 1110 and 1120 according to the present embodiment. Further, since user terminals 1110 and 1120 have the same functions, user terminal 1110 will be described as a representative. Further, in FIG. 16, the functions related to the editing of the thought structure diagram in FIG. 9 are omitted.

User terminal 1110 includes voting content acquisition unit 1613 and voting content transmission unit 1614. Voting content acquisition unit 1613 acquires a voting content(s) for the subject, each peripheral element, each link, and the like input by the user through operation unit 922. Voting content transmission unit 1614 transmits information including the user ID, a thought structure diagram ID which is being viewed, a subject ID(s) as a voting target(s), a peripheral element ID(s) as a voting target(s), a link ID(s) as a voting target(s), a voting content(s), and the like to ShareB server 1210.

### <Processing Procedure of User Terminal>

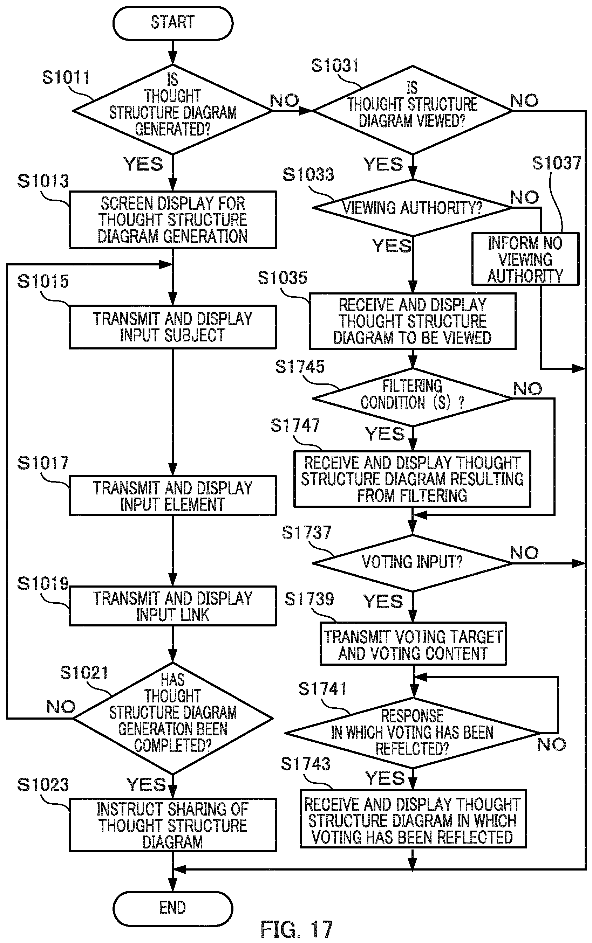

FIG. 17 is a flowchart illustrating a processing procedure of user terminals 1110 and 1120 according to the present embodiment. Note that, the edit instruction for the thought structure diagram in FIG. 10 is omitted in FIG. 17.

In step S1745, user terminal 1110 determines whether a filtering condition(s) has/have been input. In a case where a filtering condition(s) has/have been input, user terminal 1110 receives and displays the thought structure diagram resulting from filtering from ShareB server 1210 in step S1747. In a case where a filtering condition(s) has/have not been input, user terminal 1110 proceeds to step S1737.

In step S1737, user terminal 1110 determines whether a voting input occurs. In the case of a voting input, user terminal 1110 acquires the voting content in step S1739, and transmits the voting target (the thought structure diagram ID, the subject ID, the peripheral element ID, the link ID, or the like) and the voting content to ShareB server 1210. Then, in step S1741, user terminal 1110 waits for a response indicating that the voting has been reflected in the thought structure diagram which is being viewed, and when the response occurs, user terminal 1110 receives and displays, in step S1743, the thought structure diagram in which the voting has been reflected. Note that, in FIG. 17, the operation of the user terminal through which voting has been performed is illustrated, but the reflection in the thought structure diagram at a user terminal different from the user terminal through which voting has been performed can be realized by processing steps S1741 and S1743 separately after step S1747.

Note that, in voting, it is desirable to perform control such as prohibiting duplicate votes by the same user or the same group, or setting a upper limit on the number of votes, in order to prevent biased voting results due to the same user casting a large number of votes or a large number of people of the same group casting votes. On the other hand, it is also possible to lift such restrictions in order to obtain more votes. Further, by combining this control related to voting with the visibility, the editing range, and the like, it is possible to realize the generation of a more fair thought structure diagram that reflects the intentions of users. Further, voting on a first peripheral element or a second peripheral element does not necessarily affect voting results on the central element. That is, it is also possible to set that voting on one peripheral element affects another peripheral element to which the one peripheral element is connected with a link. On the other hand, a configuration is also conceivable in which voting results on a first peripheral element or a second peripheral element are used independently only for organizing the directional of information of the first peripheral element or the second peripheral element and the results thereof do not affect voting results on the central element. It is also configured such that these settings can be switched arbitrarily by a user who has generated a thought structure diagram or a user who views and edits a thought structure diagram at the time of the generation of the thought structure diagram, or at the time of an edit thereof, or at the time of viewing thereof.

Further, in filtering, for example, filtering of changes in the ratio of votes for to votes against the central element, the size or opacity of a peripheral element, the shape or thickness of a link, and the like, as well as information that affects those described above may be performed based on, for example, invalidation of voting through the same user terminal, gender, place of origin, and/or the like. Further, a filtering function may be provided when a thought structure diagram is displayed. Further, by a user, who has generated a thought structure diagram, or an information processing apparatus switching between settings, it is also possible to switch whether a filtering function is implemented, to switch the content of the filtering function, or filtering for viewing users who are the target of the filtering, or the like, by referring to the attributes of the viewing users. In the filtering function, votes on each peripheral element, subject, proposition, and the like are reaggregated based on the attributes of each user, such as "gender of the voter", "place of origin of the voter", and "age of the voter", and are reflected in the thought structure diagram displayed on the screen.

According to the present embodiment, voting results on the subject or elements by users are reflected in a thought structure diagram, and thus, it is possible to obtain a universal thought structure diagram that is not extremely biased. Further, since voting results of a large number of users are reflected in the structure of a thought structure diagram, there is also an effect of forming collective intelligence and an effect of sharing a logical thought circuit with numerous users. As a result, it is possible to shape a fair and more accurate collective intelligence.

### [Embodiment 4]

Next, an information processing system according to Embodiment 4 of the present invention will be described. The information processing system according to the present embodiment differs from the information processing systems according to Embodiments 2 and 3 described above in that comments associated with the displayed subject or peripheral elements are input and displayed. Since the other configurations and operations are the same as those in Embodiment 2 or 3, the same reference signs are given to the same configurations and operations, and detailed descriptions thereof will be omitted.

### <Display Screen of User Terminal>

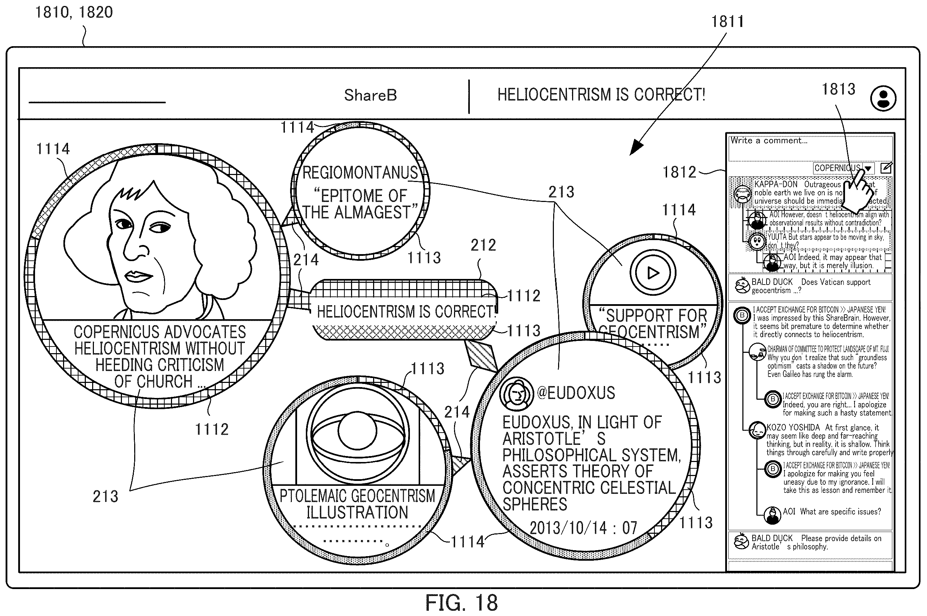

FIG. 18 illustrates display screen 1811 of user terminal 1810 in the information processing system according to the present embodiment.

Display screen (canvas) 1811 of user terminal 1810 displays comment section 1812 for users with respect to a thought structure diagram that has been displayed for viewing. Note that, as illustrated in comment section 1812 in FIG. 18, colors corresponding to votes for and against (colors corresponding to the colors of 1112 and 1113 in the figure) are applied to the peripheries or backgrounds of comments or user names in the comment section such that it is possible to understand whether each user in the comment section has cast a vote for or against a proposition or a subject, which is a central element. An element associated with a comment in the comment section may be associated with the comment as a vote (on the subject of the user) and the comment may be reflected in the element. Note that, comment section 1812 may be integrated with the thought structure diagram, or may be independent of the thought structure diagram, and comment section 1812 in the latter case may include comments posted on, for example, social media or the like. However, it is desirable that each comment in the comment section be displayed so as to clarify the linking with the subject or each element in the thought structure diagram which is being viewed. Further, comments in the comment section can be tagged or associated with the central element or peripheral elements correspondingly thereto, and when the mouse is hovered over the comments, the corresponding central element, peripheral elements, links, or the like are highlighted. Note that, it is also possible to reply to existing comments, and in such a case, the parent-child relationship of the comments is displayed to be easily visually recognized. Further, media or URL links are provided with a button that allows a new peripheral element (or central element) to be incorporated into the thought structure diagram with a single click (or a single tap). Comments are associated with each object (central element, peripheral element, link, etc.) (which is selected at pull-down menu 1813), and when the mouse is hovered over each corresponding object within display screen 1811, a comment(s) (thread(s)) associated with the object is/are highlighted at the same time. The same applies to the reverse processing. A dedicated tag (channel) may be present for each link, or a comment on a link may be substituted by selecting both tags (channels) that respectively correspond to two elements located at both ends of the link. In reply comments, it is possible to further add new tags (channels) in association with other elements or links. The user's comments may be language-processed by an LLM (large language model) and treated as votes with respect to each element.

For example, in a case where N nodes (peripheral elements) are present in one thought structure diagram, (N+1) tags (or channels) are present, and users select one of the tags (channels) and make comments. Among the tags (channels), one tag (channel) is used when commenting on the subject/proposition itself in general. In a case where there is a plurality of subjects/propositions, a correspondingly increased number of tags (channels) are used instead of the one tag (channel), and when the number of subjects/propositions is M, (N + M) tags are required. Note that, it is possible to select a plurality of tags (channels), but in the case of replying to an existing comment, the tag (channel) of the reply destination comment (parent comment) is forcibly assigned to the reply comment (child comment). For example, when it is desired to mention the relevance of a plurality of peripheral elements, a plurality of tags is set to one comment.

Note that, an information correlation diagram that includes at least two graphic elements (a central element and a peripheral element(s)) indicating a difference in importance of information in an identifiable manner based on an analysis of a comment of a user acquired from a user terminal and expresses the comment may be generated. Further, in order to transmit the comment to another user, the user terminal operated by the other user may be instructed to display the information correlation diagram.

### <Functional Configuration of ShareB Server>

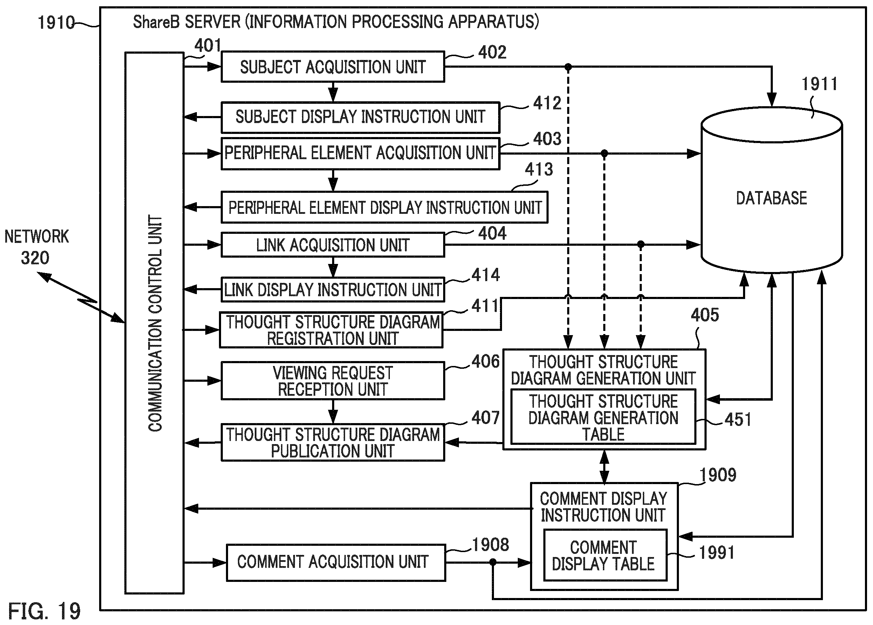

FIG. 19 is a block diagram illustrating a functional configuration of ShareB server 1910 as an information processing apparatus according to the present embodiment. Further, in FIG. 19, the functional elements related to the editing of the thought structure diagram in FIG. 4 and the functional elements related to the voting in FIG. 13 are omitted.

ShareB server 1910 includes comment acquisition unit 1908, comment display instruction unit 1909, and database 1911. Comment acquisition unit 1908 acquires a comment(s) on a thought structure diagram or on the subject, each peripheral element, and/or each link from user terminal 1120. A comment includes an identifier (user ID) of the user who has made the comment, an identifier (thought structure diagram ID) of the thought structure diagram, an identifier(s) of the subject and/or each peripheral element or an identifier (element ID) of each link, the content of the comment, and the like. Comment display instruction unit 1909 includes comment display table 1991, associates the acquired comment(s) with the generation of the subject, each peripheral element, and/or each link in a thought structure diagram by thought structure diagram generation unit 405, and reflects the acquired comment(s) in the generation of the subject, each peripheral element, and/or each link.

### (Database)

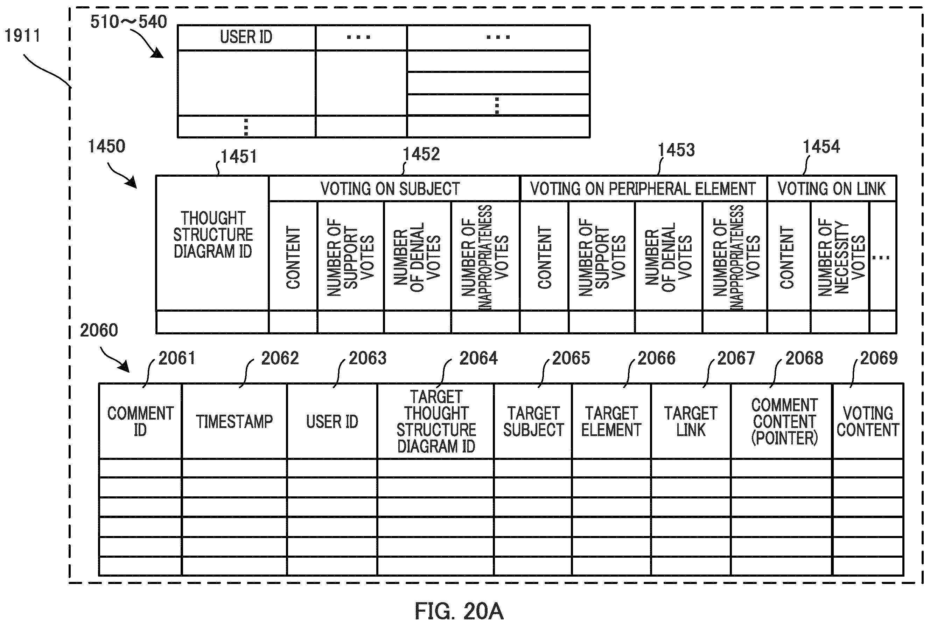

FIG. 20A illustrates a configuration of database 1911 according to the present embodiment. Database 1911 stores data, parameters, and programs necessary for processing by ShareB server 1910, as well as thought structure diagrams including subjects as central elements, peripheral elements, and links.

Database 1911 includes, in addition to subject storage unit 510, peripheral element storage unit 520, link storage unit 530, editing authority registration unit 540, and voting result storage unit 1450, comment storage unit 2060. Comment storage unit 2060 collects and stores comments input through user terminals 1810 and 1820. Comment storage unit 2060 stores, in association with comment ID 2061, timestamp 2062 of when a comment is input, and user ID 2063 of a user who has input the comment. Then, comment storage unit 2060 stores target thought structure diagram ID 2064 of a thought structure diagram on which a comment has been made, target subject 2065, target peripheral element 2066, target link 2067, comment content 2068, and voting content 2069 when there is a vote through the comment section. Note that, comment content 2068 may be a pointer to the comment content. Here, comment content 2068 includes an external site(s) (news site(s), Wikipedia (registered trademark), social media, etc.) as the link destination(s), media such as an image(s), a moving image(s), and an audio(s) (including those uploaded from user's PCs, those linked on the Internet, and both), and the like. That is, comments of the same type and content as those which can be posted on Twitter (registered trademark) or other media can be posted as comments. Note that, the configuration of comment storage unit 2060 is not limited to that in FIG. 20A.

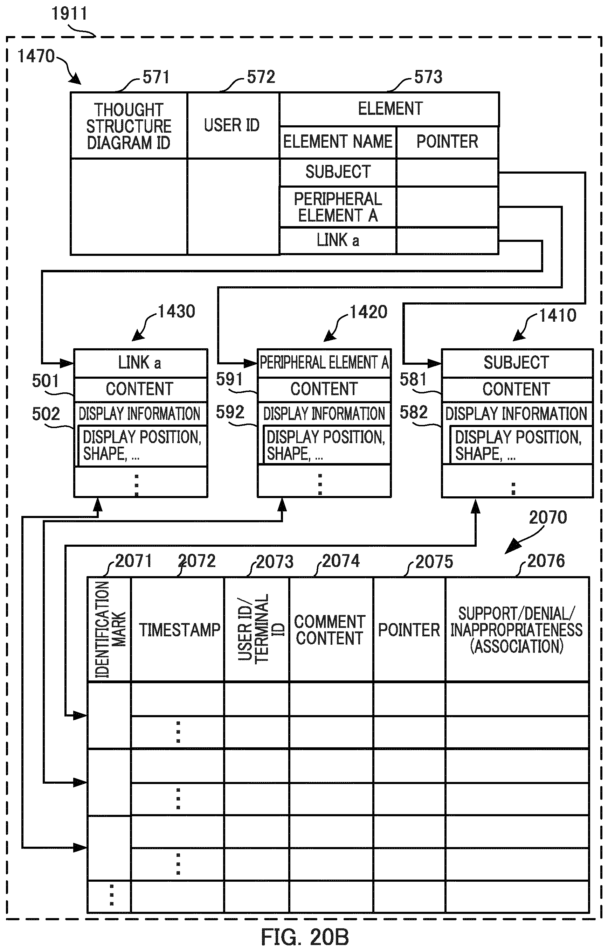

FIG. 20B illustrates configurations of thought structure diagram storage unit 1470 and comment storage unit 2070 that are stored in database 1911 according to the present embodiment. Note that, FIG. 20B illustrates the configuration of one thought structure diagram, but numerous registered thought structure diagrams are stored.

User-input comments stored in comment storage unit 2070 are linked with subjects, peripheral elements, and/or links in thought structure diagram storage unit 1470. Comment storage unit 2070 stores identification marks 2071 for identifying peripheral elements or links on which comments have been made (in the case of a plurality of subjects, comment storage unit 2070 also stores the identification marks of the plurality of subjects). Then, parameters of a plurality of displayed comments are stored correspondingly to the subject or each peripheral element/link. As the parameters of comments, comment storage unit 2070 stores timestamps 2072 arranged in a time series, user IDs and terminal IDs 2073, comment contents 2074, link destinations 2075 to the comment contents, and types 2076 of support/denial/inappropriateness associated with the comments, and the like. Note that, the configuration of comment storage unit 2070 is not limited to that in FIG. 20B.

### (Comment Display Table)

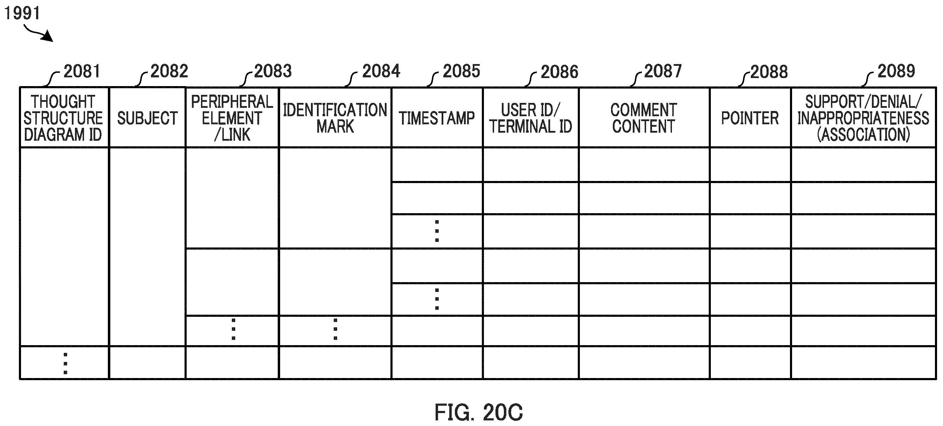

FIG. 20C illustrates a configuration of comment display table 1991 according to the present embodiment. Comment display table 1991 is used to display comments acquired by comment display instruction unit 1909 from user terminals 1810 and 1820 together with a thought structure diagram. Note that, FIG. 20C illustrates a case where there is one subject in a thought structure diagram, but the present invention is not limited thereto. Further, the configuration of comment display table 1991 is not limited to that in FIG. 20C.

Comment display table 1991 stores, in association with thought structure diagram ID 2081 and subject 2082 thereof, a plurality of peripheral elements/links 2083 and identification marks 2084 for identifying peripheral elements or links on which comments have been made. Then, parameters of a plurality of displayed comments are stored correspondingly to subject 2082 or each peripheral element/link 2083. As the parameters of comment, comment display table 1991 stores timestamps 2085 arranged in time series, user IDs and terminal IDs 2086, comment contents 2087, link destinations 2088 to the comment contents, and types 2089 of support/denial/inappropriateness associated with the comments.

### <Processing Procedure of ShareB Server>

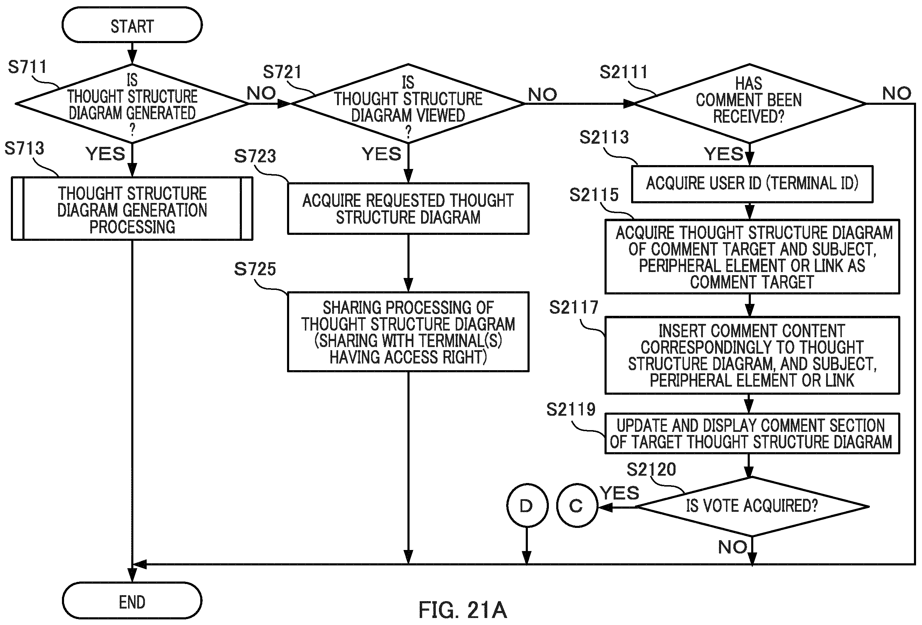

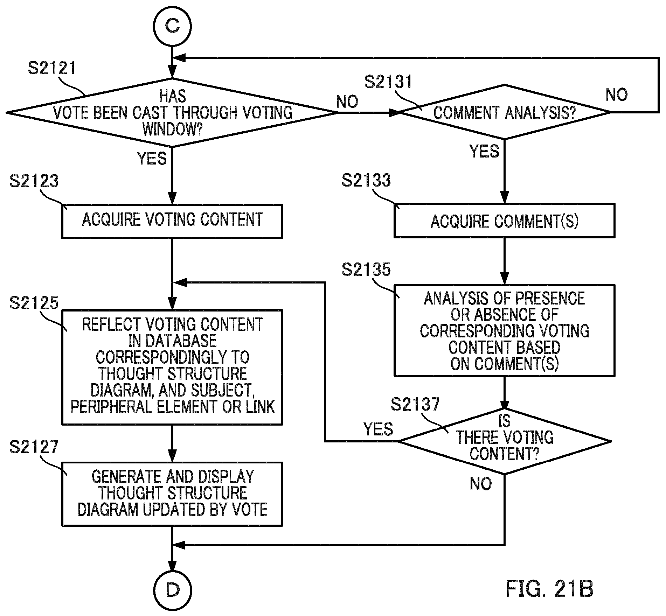

FIGS. 21A and 21B are a flowchart illustrating a processing procedure of ShareB server 1910 according to the present embodiment. Further, this flowchart is executed by CPU 610 in FIG. 6 using RAM 640, which realizes the components in FIG. 19.

In step S2111, ShareB server 1910 determines whether a comment has been acquired from user terminal 1810. In a case where a comment has been acquired, ShareB server 1910 acquires in step S2113 the user ID (terminal ID) of the user who has made the comment. In step S2115, ShareB server 1910 acquires a thought structure diagram of the comment target and a subject, peripheral element or link as the comment target. In step S2117, ShareB server 1910 links the comment content with the thought structure diagram of the comment target and the subject, peripheral element or link as the comment target and inserts the comment content into the comment list. Then, in step S2119, ShareB server 1910 updates the comment section of the thought structure diagram of the target and causes user terminals 1810 and 1820 to display the comment section together with the thought structure diagram. In step S2120, ShareB server 1910 determines whether the vote is acquired from the comment section. In a case where ShareB server 1910 determines that the vote is acquired, ShareB server 1910 proceeds to step S2121 in FIG. 21B.

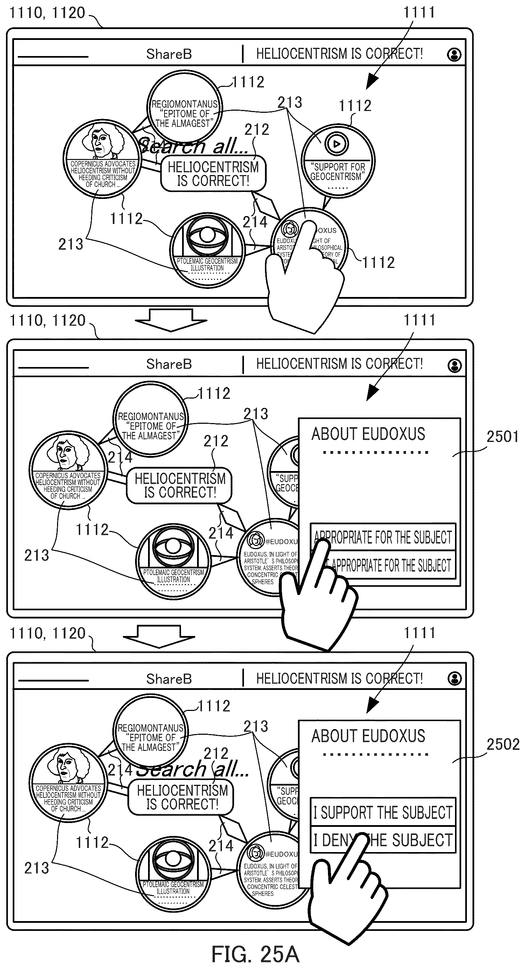

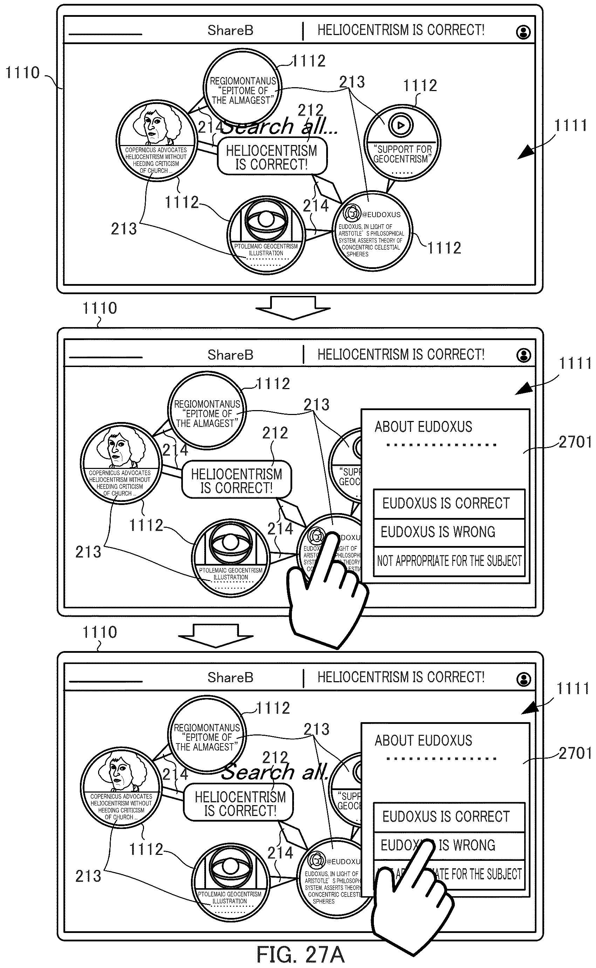

In FIG. 21B, ShareB server 1910 determines in step S2121 whether the vote has been cast through a voting window in the comment section. When the vote has been cast through the voting window, ShareB server 1910 acquires the voting content in step S2123. Note that, the voting window may be similar to those in Embodiment 3 (FIG. 11A or the like), Embodiment 6 (FIG. 25A or the like), and Embodiment 7 (FIG. 27A or the like), or may be in another format corresponding to the comment section. In step S2125, ShareB server 1910 reflects the voting content in database 1911 correspondingly to the thought structure diagram, and the subject, peripheral element or link. Then, in step S2127, ShareB server 1910 generates a thought structure diagram updated by the vote and instructs the display thereof.

On the other hand, when the vote has not been cast through the voting window, ShareB server 1910 analyzes a comment(s) in the comment section and determines whether the vote is taken as a vote in step S2131. In a case where the comment(s) has/have been analyzed and the vote is taken as a vote, ShareB server 1910 acquires the target comment(s) in step S2133. Then, in step S2135, ShareB server 1910 analyzes the presence or absence of a corresponding voting content based on the comment(s). Note that, the analysis of the corresponding voting content based on the comment(s) is performed by document recognition or the like, but a detailed description thereof is omitted here. In step S2137, ShareB server 1910 determines whether there is voting content, and when there is a voting content, ShareB server 1910 proceeds to step S2125 and reflects the voting content in database 1911 correspondingly to the thought structure diagram, and the subject, peripheral element or link.

### <Functional Configuration of User Terminal>

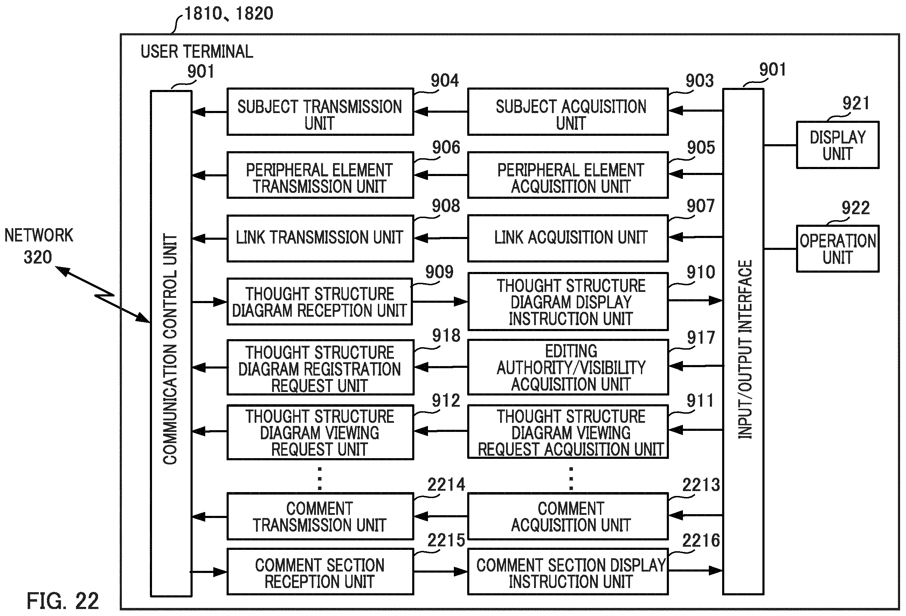

FIG. 22 is a block diagram illustrating a functional configuration of user terminals 1810 and 1820 according to the present embodiment. Further, since user terminals 1810 and 1820 have the same functions, user terminal 1810 will be described as a representative. Further, in FIG. 22, the functions related to the editing of the thought structure diagram in FIG. 9 and the functions related to voting on the subject or peripheral element(s) in FIG. 16 are omitted.

User terminal 1810 includes comment acquisition unit 2213, comment transmission unit 2214, comment section reception unit 2215, and comment section display instruction unit 2216. Comment acquisition unit 2213 acquires a comment input through operation unit 922 for a thought structure diagram which is being viewed. Comment transmission unit 2214 assigns the user ID of a user who has input the comment, the thought structure diagram ID, the subject ID or the peripheral element ID of the comment target, and the like to the acquired comment content, and transmits the comment content to ShareB server 1910. Comment section reception unit 2215 receives an updated comment section corresponding to the thought structure diagram which is being viewed, from ShareB server 1910. Comment section display instruction unit 2216 causes display unit 921 to display the associated comment section together with the thought structure diagram which is being viewed.

### <Processing Procedure of User Terminal>

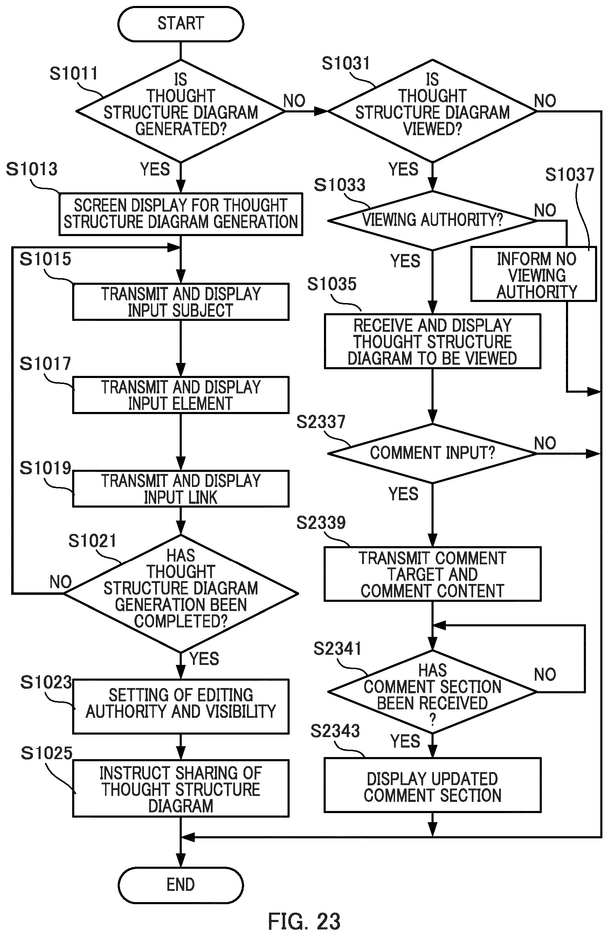

FIG. 23 is a flowchart illustrating a processing procedures of user terminals 1810 and 1820 according to the present embodiment. Note that, the edit instruction for the thought structure diagram in FIG. 10 and the voting input in FIG. 17 are omitted in FIG. 23.

In step S2337, user terminal 1810 determines whether a comment input occurs. In the case of a comment input, user terminal 1810 acquires the comment content in step S2339, and transmits the comment target (the thought structure diagram ID, the subject ID, the peripheral element ID, or the like) and the comment content to ShareB server 1910. Then, in step S2341, user terminal 1810 waits for a response indicating that the comment has been reflected in the comment section corresponding to the thought structure diagram which is being viewed, and when the response occurs, user terminal 1810 receives and displays, in step S2343, the comment section in which the comment has been reflected. Note that, in FIG. 23, the operation of the user terminal through which a comment has been made is illustrated, but the reflection in the comment section at a user terminal different from the user terminal through which a comment has been made can be realized by processing steps S2341 and S2343 separately after step S1035.

Note that, it is also possible to generate a peripheral element by using a link(s) and/or an image(s) attached to the comment section, and to add and display the peripheral element as a new element in a thought structure diagram. Even in this case, it is desirable to consider the editing authority. Further, the comment section may be configured to be provided with a button that allows a peripheral element as a new peripheral element (or a central element) to be incorporated into a thought structure diagram.

According to the present embodiment, it is possible to confirm a detailed content in users' voting results on a subject, an element, or a link. Further, there is an effect that a constructive discussion that forms collective intelligence of users can be performed on a proposal for an edit of a thought structure diagram, on a peripheral element that should be added, on a link with which connection is performed, and the like.

### [Embodiment 5]

Next, an information processing system according to Embodiment 5 of the present invention will be described. The information processing system according to the present embodiment differs from the information processing systems according to Embodiments 2 to 4 described above in terms of including voting on a proposition as a subject as three-branch voting. Note that, the number of branches is not particularly limited to three, but may be four, five, or more. Since the other configurations and operations are the same as those in Embodiment 2, the same reference signs are given to the same configurations and operations, and detailed descriptions thereof will be omitted.

### <Display Screen of User Terminal>

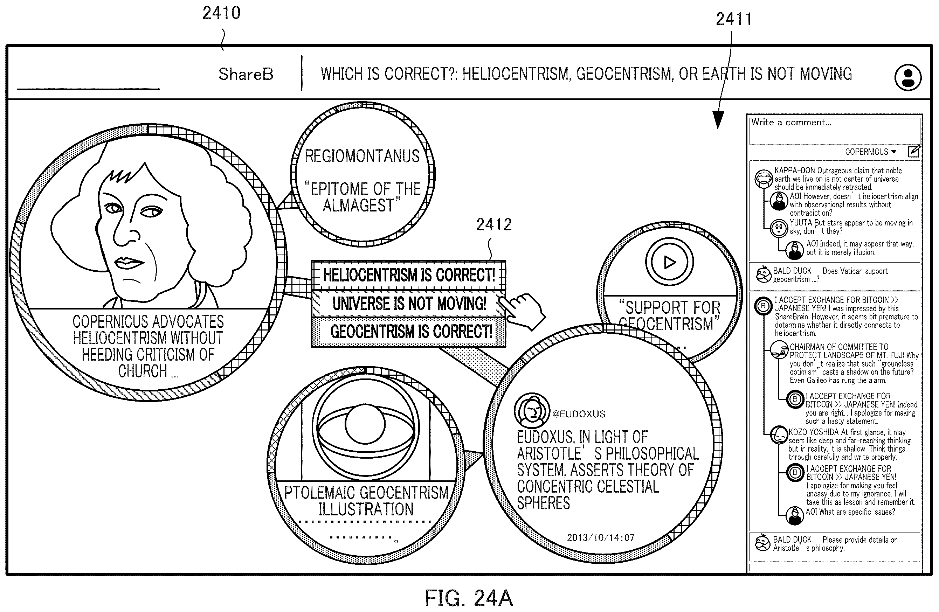

FIG. 24A illustrates display screen 2411 of user terminal 2410 in the information processing system according to the present embodiment. On display screen 2411 of user terminal 2410, subject 2412 has three options. The three options are associated based on the contents of the respective elements. Note that, the options are not limited, and the number of options may exceed three as long as the options do not become too complex for users to understand a thought structure. Further, when editing a thought structure diagram, it is also possible to add options as necessary based on the content of the thought structure diagram.

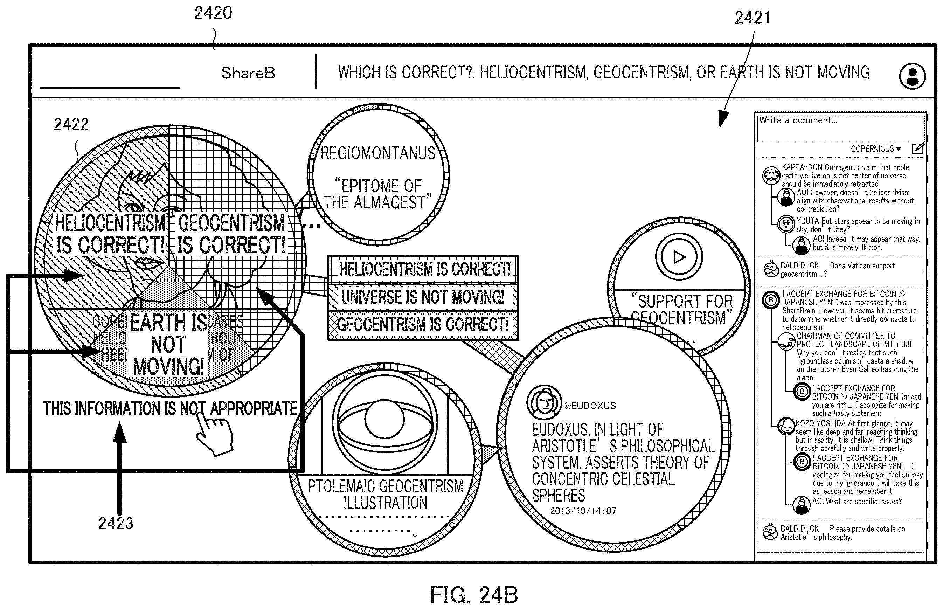

FIG. 24B illustrates another display screen 2421 of user terminal 2420 in the information processing system according to the present embodiment. In another display screen 2421 of user terminal 2420, in addition to the three options in FIG. 24A, indication 2423 "information is not appropriate" is possible in voting on peripheral element 2422. Note that, it may be configured such that "information is not appropriate" is included in "meaningless (lacking credibility, lacking relevance)".

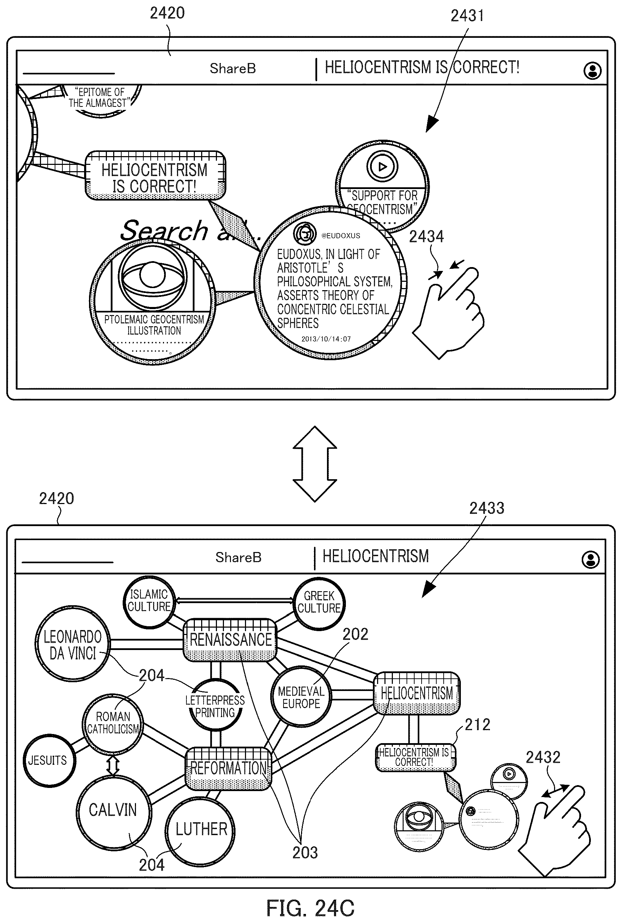

FIG. 24C illustrates other display screens 2431 and 2433 of user terminal 2420 in the information processing system according to the present embodiment. In FIG. 24C, display screen 2431 in which a part of the thought structure diagram is enlarged is displayed from display screen 2433 by pinch-out operation 2432 of the user. This operation is useful for narrowing down the target to a part of a thought structure diagram in a case where the thought structure diagram includes numerous elements and is complex, or in a case where the thought structure diagram includes a plurality of subjects and is complex. This operation corresponds to the zoom-in in FIG. 2A. Conversely, in FIG. 24C, display screen 2433 in which the display of the thought structure diagram has been reduced is displayed from display screen 2431 by pinch-in operation 2434 of the user. This operation is useful for expanding a target toward the entire thought structure diagram in a case where it is desired to know where a part of the thought structure diagram is located in the entire thought structure diagram or how a part of the thought structure diagram is connected to another part thereof.

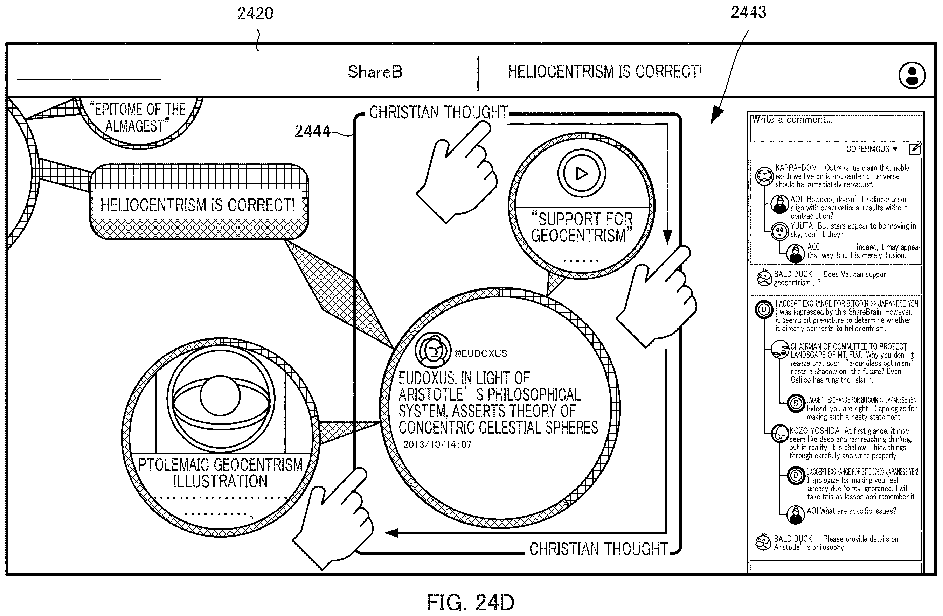

FIG. 24D illustrates another display screen of user terminal 2420 in the information processing system according to the present embodiment. In FIG. 24D, two elements are linked with each other as one group. When the user draws closed curve 2444 including two peripheral elements, the two peripheral elements become one group. Thereafter, operations simplified as one group are realized. Note that, the number of elements to be grouped may be three or more, and the elements may include a subject. In the case of a thought structure diagram including a plurality of subjects, a group may include a plurality of subjects. Further, a name symbolizing a group may be given to the group, and operations may be performed in units of groups by the name. Note that, in FIG. 24D, the grouping is illustrated with closed curve 2444, which, however, may also be an open curve. For example, it is also possible to apply a method in which both ends are not closed by crossing each other or the like as in a lasso, and the both ends are automatically connected in a straight line to enclose an operation target.

According to the present embodiment, it is possible to obtain a thought structure diagram that expresses a more delicate thought that cannot be grasped in a binary choice. Further, a part of a thought structure diagram can be enlarged to view the detailed structure thereof and to set the detailed structure as an operation target, or a thought structure diagram can be reduced to view a wide range or the entire structure thereof and to set the wide range or the entire structure as an operation target. Further, a plurality of elements in a part of a thought structure diagram can be grouped together and presented as one element.

### [Embodiment 6]

Next, an information processing system according to Embodiment 6 of the present invention will be described. The information processing system according to the present embodiment differs from the information processing system according to Embodiment 3 described above in that voting on each element or link is divided into first-stage voting (voting concerning the presence or absence of an element) in which voting for appropriate/inappropriate is performed, and second-stage voting (voting concerning the approval or denial of an element content) in which voting for support/deny is performed. Since the other configurations and operations are the same as those in Embodiments 2 and 3, the same reference signs are given to the same configurations and operations, and detailed descriptions thereof will be omitted.

Note that, in the present embodiment, an example of two-stage voting including the first-stage voting and the second-stage voting is indicated, but a configuration in which a thought structure diagram determined in advance is provided and only the second-stage voting concerning the approval or denial of an element content is directly performed by omitting the first-stage voting concerning the presence or absence of an element may also be employed.

### <Voting Operation through User Terminal>

FIG. 25A illustrates a voting operation of user terminals 1110 and 1120 in the information processing system according to the present embodiment.

The central diagram in FIG. 25A illustrates a state in which the user has selected "Eudoxus", which is peripheral element 213, as the voting destination. Window 2501 for describing Eudoxus opens, and soft buttons for voting for either "appropriate for the subject" (hereinafter referred to as appropriate subject) or "not appropriate for the subject" (hereinafter referred to as inappropriate subject) are displayed together with the description of Eudoxus. Note that, even when another peripheral element is selected as the voting destination, the same soft buttons are displayed together with the description of the peripheral element.

The lower diagram in FIG. 25A illustrates a state in which the user has voted "appropriate for the subject" in window 2501 in the central diagram. New window 2502 opens, and soft buttons for voting for either "I support the subject" (hereinafter referred to as subject support) or "I deny the subject" (hereinafter referred to as subject denial) are displayed. The voting result by the user is transmitted to ShareB server 1210 and accumulated in database 2611. Then, the display (size, shape, color(s), etc.) of the peripheral element is changed in accordance with the accumulated voting results, and the change is reflected in the other peripheral elements or subject that are associated with the peripheral element with the links, and is also reflected in the links.

Note that, in FIG. 25A, the first-stage voting in which voting for appropriate/inappropriate is performed and the second-stage voting in which voting for support/deny is performed have been described as continuous operations, but the first-stage voting and the second-stage voting may be implemented independently, aggregated independently, and reflected in the thought structure diagram. In this case, either the first-stage voting or the second-stage voting is selected before the voting. Further, it may be configured such that the first-stage voting in which voting for appropriate/inappropriate is performed is completed and a basic thought structure diagram is determined, and then the second-stage voting in which voting for support/deny is performed is started and the basic thought structure diagram is changed. In this case, a combination in which the first-stage voting is entrusted to experts and the second-stage voting is made open to the public, or the like, can also be considered.

### <Operation Procedure of Information Processing System>

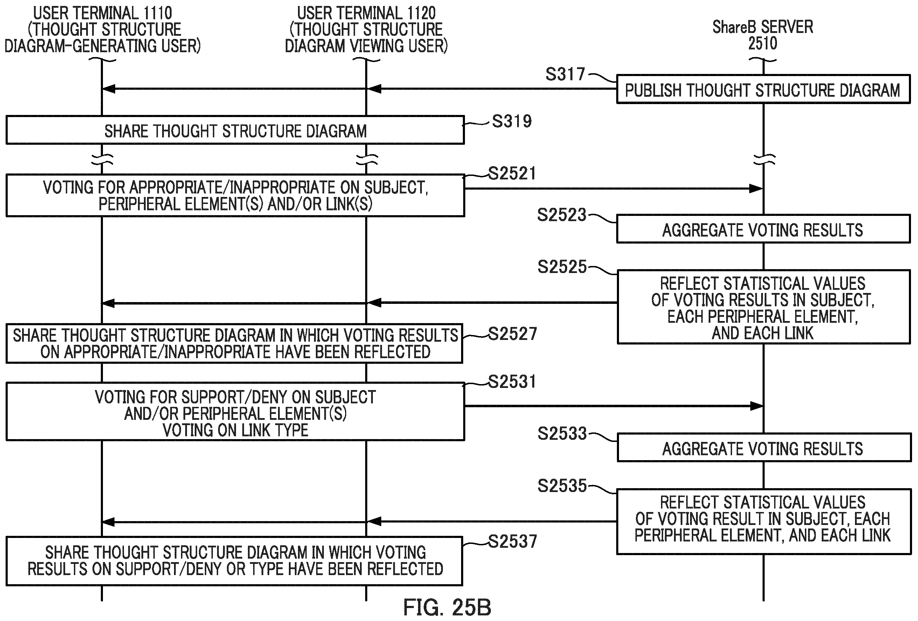

FIG. 25B is a sequence diagram illustrating an operation procedure of information processing system 2500 according to the present embodiment. In FIG. 25B, steps S301 to S315 in FIGS. 3B and 12B are omitted. Further, the editing processing in FIG. 3B is also omitted, where the editing of the thought structure diagram is also included.

In step S2521, the first-stage voting in which voting for appropriate/ inappropriate on a subject, an element(s), and/or a link(s) in a thought structure diagram which is being viewed is performed through user terminals 1110 and 1120. ShareB server 2510 that has received the voting results aggregates the first-stage voting results on the subject, each peripheral element, and each link in each thought structure diagram in step S2523. Then, in step S2525, ShareB server 2510 reflects the statistical values of the aggregation results of the first-stage voting (for example, the total number of votes and the ratios of appropriate and inappropriate) in the displays of the subject, each peripheral element, and each link in the thought structure diagram, and transmits the thought structure diagram to user terminals 1110 and 1120. In step S2527, user terminals 1110 and 1120 share the thought structure diagram in which the first-stage voting has been reflected.

In step S2531, the second-stage voting including voting for support/deny on the subject and/or element(s) or voting on the link type(s) for the link(s) in the thought structure diagram which is being viewed and in which the first-stage voting has been reflected is performed through user terminals 1110 and 1120. ShareB server 2510 that has received the voting results aggregates the second-stage voting results on the subject, each peripheral element, and each link in each thought structure diagram in step S2533. Then, in step S2535, ShareB server 2510 reflects the statistical values of the aggregation results of the second-stage voting (for example, the total number of votes, the ratios of support and denial, and the ranking of the types) in the displays of the subject, each peripheral element, and each link in the thought structure diagram, and transmits the thought structure diagram to user terminals 1110 and 1120. In step S2537, user terminals 1110 and 1120 share the thought structure diagram in which the second-stage voting has been reflected.

### (Database)

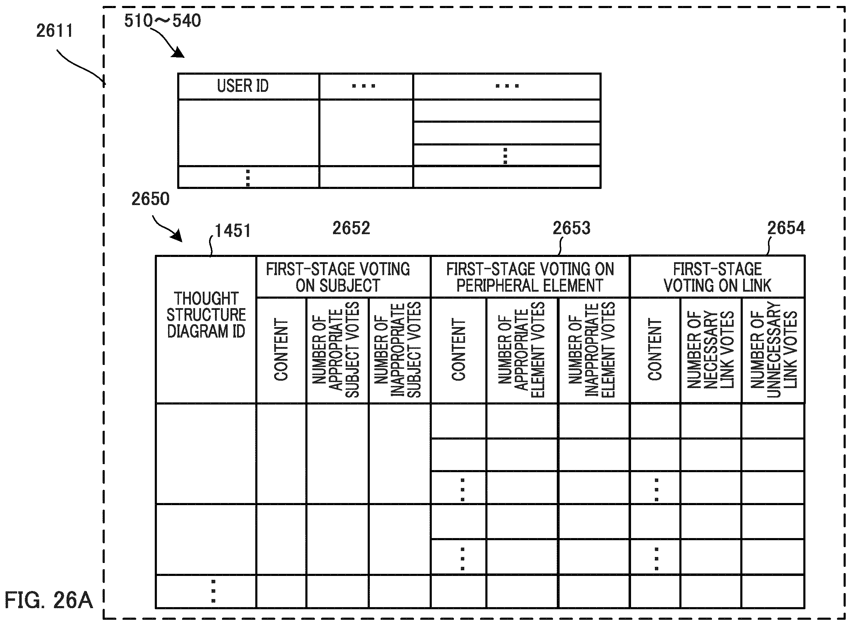

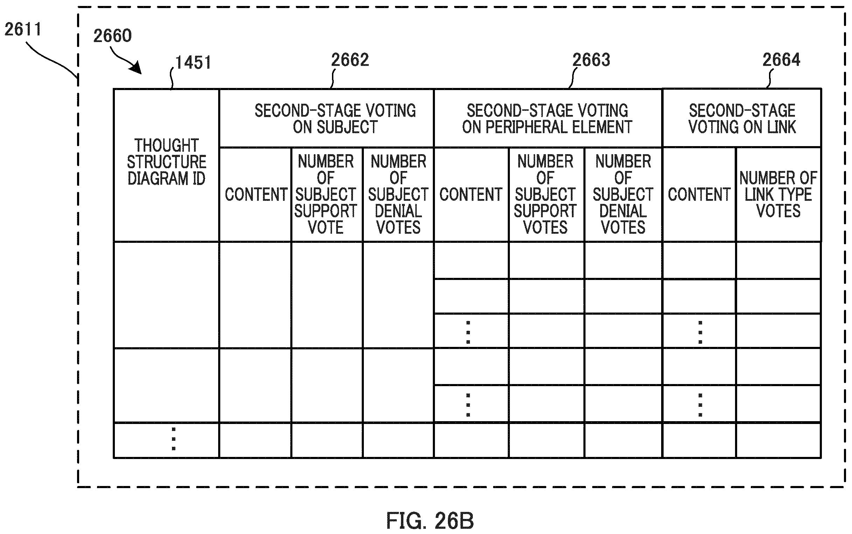

FIGS. 26A and 26B illustrate a configuration of database 2611 according to the present embodiment. Database 2611 stores data, parameters, and programs necessary for processing by ShareB server 2510, as well as thought structure diagrams including subjects, peripheral elements, and links.

Database 2611 includes, in addition to subject storage unit 510, peripheral element storage unit 520, link storage unit 530, and editing authority registration unit 540 in FIG. 5A, first-stage voting result storage unit 2650 and second-stage voting result storage unit 2660.

First-stage voting result storage unit 2650 stores first-stage voting results from user terminal 1120 and the aggregation results thereof. Voting result storage unit 2650 stores, in association with thought structure diagram ID 1451, first-stage voting 2652 on a subject as the central element, first-stage voting 2653 on a peripheral element(s), and first-stage voting 2654 on a link(s). First-stage voting 2652 on a subject includes, for example, the content of the subject, the number of appropriate subject votes on the subject, and the number of inappropriate subject votes on the subject. Further, first-stage voting 2653 on a peripheral element(s) includes, for example, for a plurality of peripheral elements, the content of each peripheral element, the number of appropriate element votes in each peripheral element, and the number of inappropriate element votes in each peripheral element. Further, first-stage voting 1454 on a link(s) includes, for example, for a plurality of links, the content of each link, the number of necessary link votes on each link, and the number of unnecessary link votes on each link. Note that, the configuration of first-stage voting result storage unit 2650 is not limited to that in FIG. 26A. In a case where one thought structure diagram includes a plurality of subjects, first-stage voting 2652 on the plurality of subjects is stored in association with one thought structure diagram ID 1451.

Second-stage voting result storage unit 2660 stores second-stage voting results from user terminal 1120 and the aggregation results thereof. Second-stage voting result storage unit 2660 stores, in association with thought structure diagram ID 1451, second-stage voting 2662 on a subject as the central element, second-stage voting 2663 on a peripheral element(s), and second-stage voting 2664 on a link(s). Second-stage voting 2662 on a subject includes, for example, the content of the subject, the number of subject support votes on the subject, and the number of subject denial votes on the subject. Further, second-stage voting 2663 on a peripheral element(s) includes, for example, for a plurality of peripheral elements, the content of each peripheral element, the number of subject support votes on the subject in each peripheral element, and the number of subject denial votes on the subject in each peripheral element. Further, second-stage voting 2664 on a link(s) includes, for example, for a plurality of links, the content of each link and the number of link type votes on each link. Note that, the configuration of second-stage voting result storage unit 2660 is not limited to that in FIG. 26B. In a case where one thought structure diagram includes a plurality of subjects, second-stage voting 2662 on the plurality of subjects is stored in association with one thought structure diagram ID 1451.

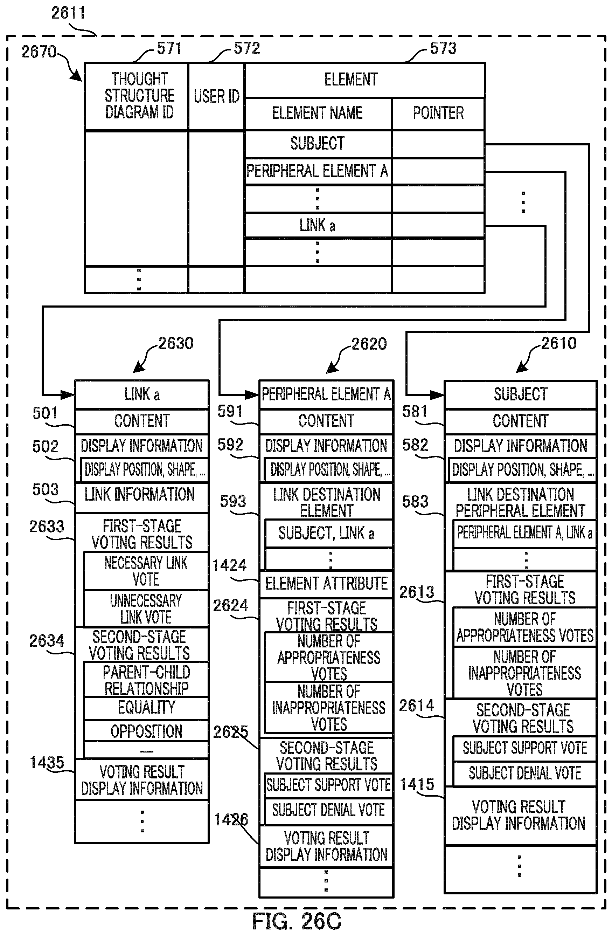

FIG. 26C illustrates a configuration of thought structure diagram storage unit 2670 stored in database 2611 according to the present embodiment. Note that, FIG. 14B illustrates the configuration of one thought structure diagram, but numerous registered thought structure diagrams are stored.

Subject data storage unit 2610 stores first-stage voting results 2613 and second-stage voting results 2614. First-stage voting results 2613 store, for example, information on appropriateness votes on a subject and inappropriateness votes on the subject. Second-stage voting results 2614 store, for example, information on subject support votes and information on subject denial votes.

Peripheral element data storage unit 2620 stores first-stage voting results 2624 and second-stage voting results 2625. First-stage voting results 2624 store, for example, information on appropriateness votes on an element and inappropriateness votes on the element. Second-stage voting results 2625 store, for example, information on subject support votes and information on subject denial votes, where the subject support votes and the subject denial votes are cast on peripheral element A.

Link data storage unit 2630 stores first-stage voting results 2633 and second-stage voting results 2634. First-stage voting results 2633 store, for example, information on necessary link votes and information on unnecessary link votes. Second-stage voting results 2634 includes, for example, parent-child relationship, equality, opposition, or the like as the voting on the link type. Note that, parent-child relationship, equality, opposition, or the like may be selected from voting results on the elements connected with link a.

### <Processing Procedure of ShareB Server>

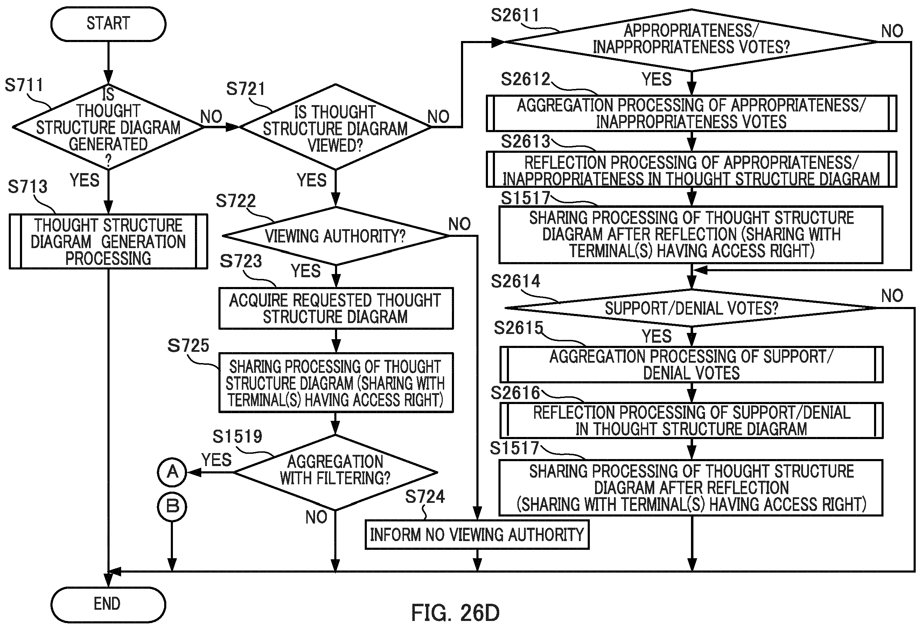

FIG. 26D is a flowchart illustrating a processing procedure of ShareB server 2510 in the present embodiment. Further, this flowchart is executed by CPU 610 using RAM 640 in FIG. 6, which realizes the components that execute the processing in FIG. 25B.

In step S2611, ShareB server 2510 determines whether first-stage voting results on whether an element is appropriate or inappropriate have been acquired from user terminal 1120. In a case where first-stage voting results have been acquired, ShareB server 2510 executes aggregation processing of the acquired first-stage voting results in step S2612. In step S2613, ShareB server 2510 executes reflection processing of the first-stage voting results in the thought structure diagram. Then, in step S1517, ShareB server 2510 performs sharing processing of the thought structure diagram after the first-stage voting results have been reflected (sharing with a terminal(s) having the access right).

In step S2614, ShareB server 2510 determines whether second-stage voting results on whether a subject is supported or denied have been acquired from user terminal 1120. In a case where second-stage voting results have been acquired, ShareB server 2510 executes aggregation processing of the acquired second-stage voting results in step S2615. In step S2616, ShareB server 2510 executes reflection processing of the second-stage voting results in the thought structure diagram. Then, in step S1517, ShareB server 2510 performs sharing processing of the thought structure diagram after the first-stage voting results and/or the second-stage voting results have been reflected (sharing with a terminal(s) having the access right). Note that, in step S1519, ShareB server 2510 determines whether aggregation with filtering is performed (whether there is a request from a user terminal). In a case where the aggregation with filtering is performed, ShareB server 2510 proceeds to step S1591 in FIG. 15D.

### (Aggregation Processing of First-Stage Voting Results)

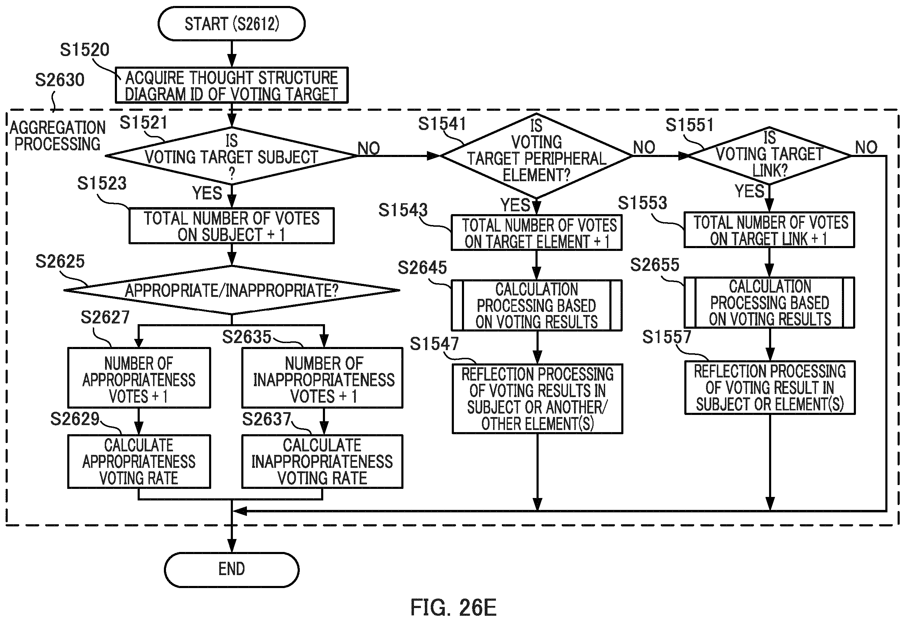

FIG. 26E is a flowchart illustrating a procedure of first-stage voting result aggregation processing S2612 according to the present embodiment.

In a case where the voting target is the subject, ShareB server 2510 determines in step S2625 whether the first-stage voting content indicates that the subject is appropriate or indicates that the subject is inappropriate. When the voting indicates that the subject is appropriate, ShareB server 2510 adds 1 to the number of appropriateness votes in step S2627, and calculates the appropriateness voting rate (= the number of appropriateness votes / the total number of valid votes) in step S2629. When the voting indicates that the subject is inappropriate, ShareB server 2510 adds 1 to the number of inappropriateness votes in step S2635, and calculates the inappropriateness voting rate (= the number of inappropriateness votes / the total number of valid votes) in step S2637.

In a case where the voting target is not the subject, but a peripheral element, ShareB server 2510 performs, in step S2645, on the peripheral element, the same processing of determining whether the peripheral element is appropriate or inappropriate as the processing in steps S2625 to S2637 for the subject. Then, in step S1547, ShareB server 2510 performs reflection processing of the first-stage voting results on the peripheral element in data of the subject, another/other peripheral element(s), a link(s), or the like.

Further, in a case where the voting target is neither the subject nor a peripheral element, but a link, ShareB server 2510 performs, in step S2655, on the link, the same processing of determining whether the link is appropriate or inappropriate as the processing in steps S2625 to S2637 for the subject. Then, ShareB server 2510 may optionally perform, in step S1557, reflection processing of the voting results on the link in the subject or a peripheral element(s) or another/other link(s).

Note that, the aggregation processing procedure of support/denial votes in step S2615 in FIG. 26D is obvious to those skilled in the art with reference to FIGS. 15B and 26E, and thus, an overlapping description thereof will be omitted. Further, the reflection processing procedure of the voting results in the thought structure diagram to be displayed in steps S2613 and S2616 in FIG. 26D is obvious to those skilled in the art with reference to FIG. 15C, and thus, an overlapping description thereof will be omitted.

### [Embodiment 7]

Next, an information processing system according to Embodiment 7 of the present invention will be described. The information processing system according to the present embodiment differs from the information processing system according to Embodiment 3 described above in that voting in a peripheral element is not voting on the "subject" but voting with respect to the content of the "peripheral element". Since the other configurations and operations are the same as those in Embodiment 2, the same reference signs are given to the same configurations and operations, and detailed descriptions thereof will be omitted.

### <Voting Operation through User Terminal>

FIG. 27A illustrates a voting operation of user terminals 1110 and 1120 in the information processing system according to the present embodiment.

The central diagram in FIG. 27A illustrates a state in which the user has selected "Eudoxus", which is peripheral element 213, as the voting destination. Window 2701 for describing Eudoxus opens, and soft buttons for voting for any of "Eudoxus is correct" (hereinafter referred to as element support), "Eudoxus is wrong" (hereinafter referred to as element denial), and "not appropriate for the subject" (hereinafter referred to as inappropriate element) are displayed together with the description of Eudoxus. Note that, even when another peripheral element is selected as the voting destination, the same soft buttons are displayed together with the description of the peripheral element.

The lower diagram in FIG. 27A illustrates a state in which the user has voted for "Eudoxus is wrong". The voting result is transmitted to ShareB server 1210 and accumulated in database 2711. Then, the display (size, shape, color(s), etc.) of the peripheral element is changed in accordance with the accumulated voting results, and the change may be reflected in the other peripheral elements or subject that are associated with the peripheral element with the links. Further, the change may also be reflected in a link(s) connected to the peripheral element on which the voting has been performed.

### (Database)

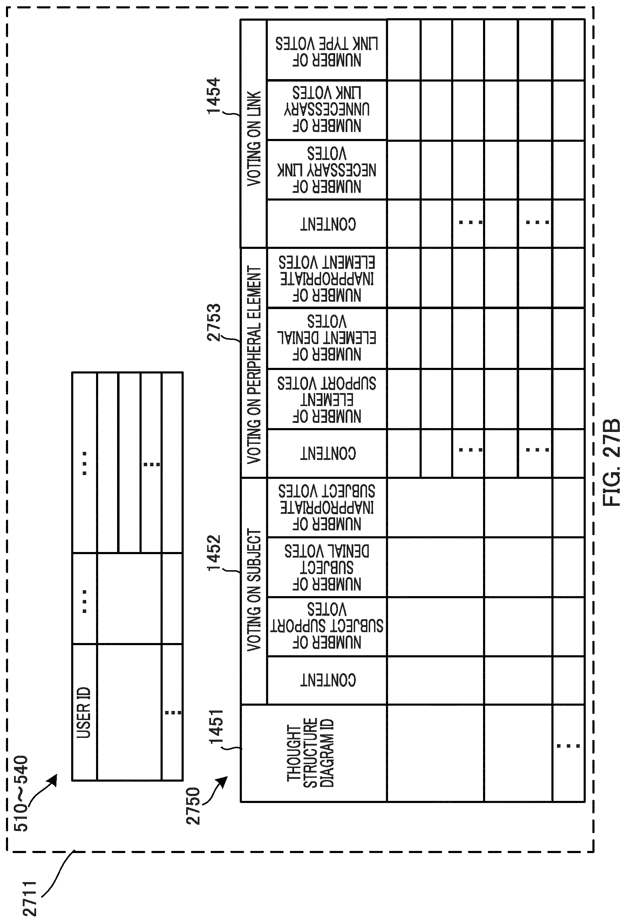

FIG. 27B illustrates a configuration of database 2711 according to the present embodiment. Database 2711 stores data, parameters, and programs necessary for processing by ShareB server 1210, as well as thought structure diagrams including subjects, peripheral elements, and links. This configuration is merely an example, and the configuration is not limited thereto.

Database 2711 includes, in addition to subject storage unit 510, peripheral element storage unit 520, link storage unit 530, and editing authority registration unit 540 in FIG. 5A, voting result storage unit 2750. Voting result storage unit 2750 accumulates voting results from user terminal 1120 and the aggregation results thereof. Voting result storage unit 2750 associates thought structure diagram ID 1451 with voting on peripheral element 2753 which includes, for example, for a plurality of peripheral elements, the content of each peripheral element, the number of element support votes on the content of each peripheral element, the number of element denial votes on the content of each peripheral element, and the number of inappropriate element votes on each peripheral element.

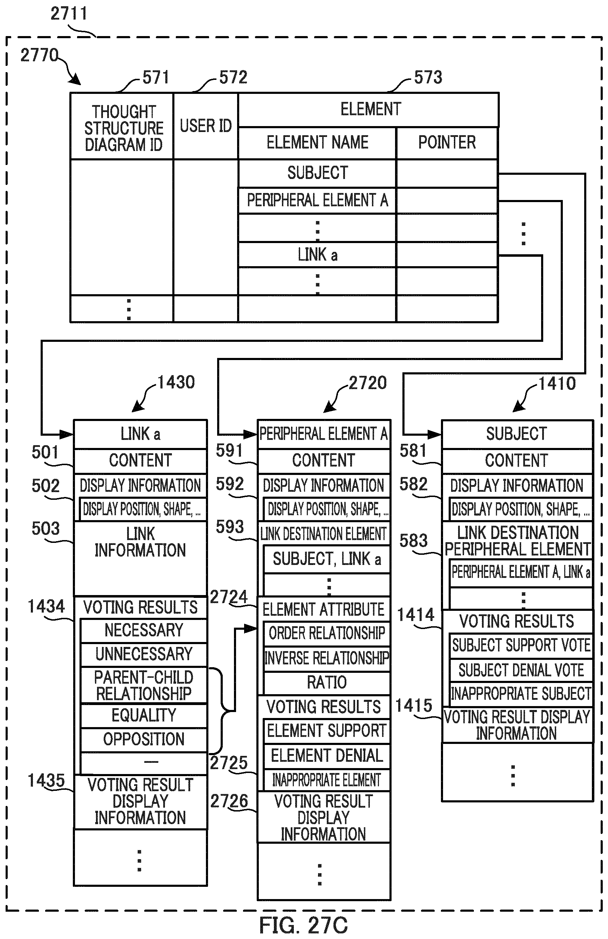

FIG. 27C illustrates a configuration of thought structure diagram storage unit 2770 stored in database 2711 according to the present embodiment. Note that, FIG. 27C illustrates the configuration of one thought structure diagram, but numerous registered thought structure diagrams are stored.

Peripheral element data storage unit 2720 stores element attribute 2724, voting results 2725, and voting result display information 2726. Element attribute 2724 is information indicating whether voting results on peripheral element A are reflected as they are (hereinafter referred to as "order relationship") or are reflected in the opposite manner (hereinafter referred to as "inverse relationship") on, for example, a subject to which peripheral element A is connected with a link. In the voting method of the present embodiment, whether the relationship is an "order relationship" or an "inverse relationship" is determined and stored based on the link setting at the time of creation and editing of a thought structure diagram, voting results on a peripheral element(s) and/or a link(s), and the like. Note that, the relationship between 100% "order relationship" and 100% "inverse relationship" may be determined by a "ratio" in element attribute 2724. This "ratio" may be set by a user at the time of creation and editing of a thought structure diagram, or may be determined based on users' voting results or the like. Voting results 2725 store information on element support votes, information on element denial votes, and information on inappropriate element votes, where the respective votes are cast on peripheral element A. Voting results 2725 are reflected in the subject and/or another/other peripheral element(s) of the link destination according to element attribute 2724. Voting result display information 2726 stores display information of voting results generated based on voting results 2725. This display information of the voting results corresponds to voting results of users with respect to the content of a peripheral element as "correct", "wrong", or "inappropriate".

Note that, in FIG. 27C, an example in which element attribute 2724 is stored in peripheral element data storage unit 2720 is illustrated, but the "order relationship" or the "inverse relationship" may be determined at the time of reflecting voting results by referring to the relationship between both elements connected with a link stored in link information 503 or voting results 1434 in link data storage unit 1430.

### (Voting Result Aggregation Processing)

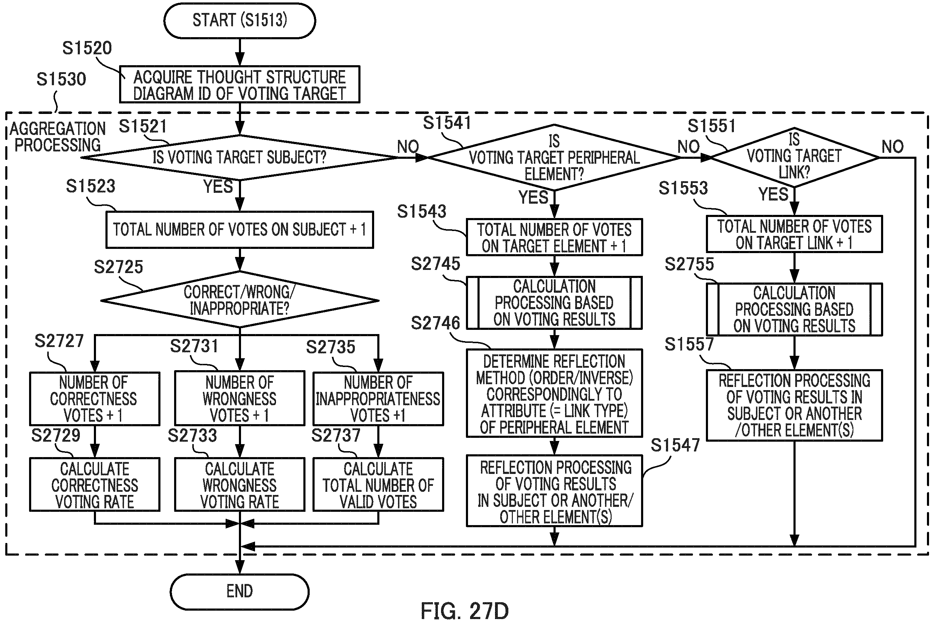

FIG. 27D is a flowchart illustrating a procedure of voting result aggregation processing S 1513 according to the present embodiment.

In a case where the voting target is a subject, ShareB server 1210 determines, in step S2725, whether the voting content indicates that the subject is correct, indicates that the subject is wrong, or indicates that the subject is inappropriate. In a case where the subject is correct, ShareB server 1210 adds 1 to the number of correctness votes, which represents the number of votes for the subject being correct in step S2727, and calculates the correctness voting rate (= the number of correctness votes / the total number of valid votes) in step S2729. In a case where the subject is wrong, ShareB server 1210 adds 1 to the number of wrongness votes, which represents the number of votes for the subject being wrong in step S2731, and calculates the wrongness voting rate (= the number of wrongness votes / the total number of valid votes) in step S2733. In a case where the voting indicates that the subject is inappropriate, ShareB server 1210 adds 1 to the number of inappropriateness votes in step S2735 and calculates the total number of valid votes and the valid voting rate in step S2737. Here, the total number of valid votes is (the total number of votes - the number of inappropriateness votes), and the valid voting rate is (the total number of valid votes / the total number of votes).

In a case where the voting target is not the subject but a peripheral element, ShareB server 1210 performs, in step S2745, on the peripheral element, the same processing as the processing in steps S2725 to S2737 for the subject. In step S2746, ShareB server 1210 determines whether the reflection in the link destination is performed with an "order relationship" or an "inverse relationship" by referring to element attribute 2724, link destination element 593 or voting results 2725 of the peripheral element, or the like. Then, in step S1547, ShareB server 1210 performs reflection processing of the voting results on the peripheral element in the subject, another/other peripheral element(s), a link(s), or the like in accordance with element attribute 2724. Note that, in the reflection processing, it may be determined whether the reflection is performed at the time of generating a thought structure diagram or at the time of editing an existing thought structure diagram.

Further, in a case where the voting target is neither the subject nor a peripheral element, ShareB server 1210 performs, in step S2755, on a link, the same processing as the processing in steps S2725 to S2737 for the subject. Then, ShareB server 1210 may optionally perform, in step S1557, reflection processing of voting results on the link in the subject or a peripheral element(s) or another/other link(s).

According to the present embodiment, it is possible to make voting on a peripheral element easy for users to intuitively make determination based on the content of the peripheral element.

### [Embodiment 8]

Next, an information processing system according to Embodiment 8 of the present invention will be described. The information processing system according to the present embodiment is different in that, while Embodiments 2 to 7 described above have a structure in which an "element" is the main actor and a "link" connects a "central element (subject, proposition) ← peripheral element", the present embodiment has a structure which is centered on a "link" and in which it is set by voting how "elements" are linked to each other. Since the other configurations and operations are the same as those in Embodiments 2 to 7, and thus, the same reference signs are given to the same configurations and operations, and detailed descriptions thereof will be omitted. Further, the application of the technologies described in Embodiments 2 to 7 is also easily possible, and the same effects are achieved.

### (Display Screen of User Terminal)

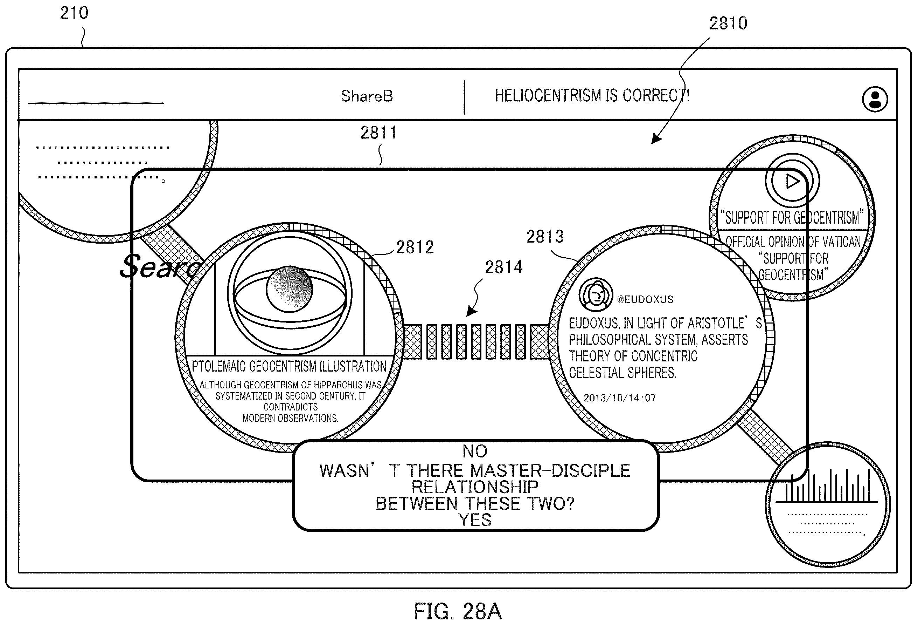

FIG. 28A illustrates display screen 2810 of user terminal 210 in the information processing system according to the present embodiment. FIG. 28A illustrates the generation of a thought structure diagram in which the very link 2814, which indicates the relevance between element 2812 and element 2813 within link generation frame 2811, is the subject or proposition. In the present embodiment, a thought structure diagram in a form of "Is there the relevance between element A and element B in consideration of various peripheral information?" is generated rather than voting questioning the validity of a link in creating a thought structure diagram.

### (Link Generation Table)

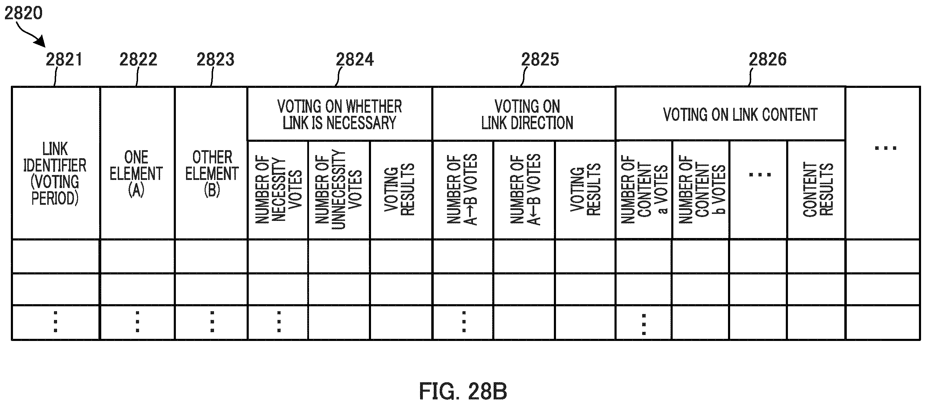

FIG. 28B illustrates link generation table 2820 according to the present embodiment. Link generation table 2820 is used to generate link 2814 between element 2812 and element 2813 within link generation frame 2811 in a case where link generation frame 2811 has been generated. This configuration of the link generation table is merely an example, and the configuration of the link generation table is not limited thereto.

Link generation table 2820 stores one element (A) 2822 and the other element (B) 2823 within the link generation frame in association with link ID (identifier) 2821, which is a voting target on whether the relevance is found. Note that, a voting period is set for voting on link generation. Alternatively, when a link is discussed permanently, the voting period is not limited. Then, for example, as the voting content, link generation table 2820 stores voting on whether link is necessary 2824 on whether a link between elements is necessary, voting on link direction 2825, and voting on link content 2826. In voting on whether link is necessary 2824, the number of votes indicating that a link is necessary, the number of votes indicating that a link is not necessary, and the voting results at the end of the voting or the current voting results are stored. Note that, in the link generation based on voting results, it may be determined based on a majority whether a link is allowed to generated, or a link with a thickness or density corresponding to a rate may be generated. Further, a link with a thickness or a density corresponding to the necessary number may be generated, or a link with a thickness or a density corresponding to the number obtained by subtracting the number of unnecessity votes from the number of necessity votes may be generated. In voting on link direction 2825, the number of votes for the direction from element A to element B, the number of votes for the direction from element B to element A, and voting results at the end of the voting or the current voting results are stored. Note that, voting 3225 on the link direction includes voting related to other shapes, such as whether the link is in an opposition relationship (□ ) or an equal relationship (□). The display of the link direction may be displayed in a manner that makes it possible to identify the certainty of the direction in which the results of the number of votes have been reflected. In voting on link content 2826, the number of votes on the link content as a, the number of votes on the link content as b, the number of votes on other contents, and the voting results at the end of the voting or the current voting results are stored. The link content may be displayed as the content with the maximum number of votes, may be as a plurality of contents in order from the top of the number of votes, or may be in another display format.

### <Processing Procedure of Information Processing Apparatus>

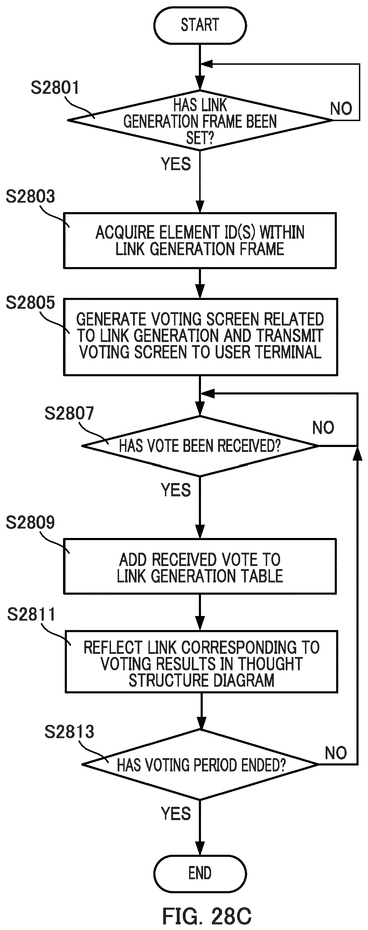

FIG. 28C is a flowchart illustrating a processing procedure of the information processing apparatus according to the present embodiment. This flowchart is executed by the CPU of the information processing apparatus using the RAM.

In step S2801, the information processing apparatus waits for whether a link generation frame has been set. In a case where a link generation frame has been set, the information processing apparatus acquires the identifier(s) (ID(s)) of an element(s) within the link generation frame in step S2803. In step S2805, the information processing apparatus generates a voting screen related to link generation and transmits the voting screen to a user terminal. Then, in step S2807, the information processing apparatus waits for the reception of a vote from the user terminal.

When the information processing apparatus has received a vote from the user terminal, the information processing apparatus adds the received vote to the corresponding number of votes in link generation table 2820 in step S2809. **In** step S2811, the information processing apparatus generates a link or does not generate a link based on voting results in link generation table 2820, and reflects the/no link in the thought structure diagram. **In** step S2813, the information processing apparatus determines whether the voting period has ended. When the voting period has not ended, the information processing apparatus returns to step S2807 and waits for the next vote. Note that, in a case of voting on the relevance with a permanent link and a voting period has not been set, step S2813 is replaced with "Is thought structure diagram viewed?", and after the end of step S2813, the processing returns to step S2807 again to wait for a vote.

According to the present embodiment, it is possible to question the relevance between elements by voting of users and to determine whether the elements are connected with a link along a theme, the linking method, and the link content.

### [Embodiment 9]

Next, an information processing system according to Embodiment 9 of the present invention will be described. The information processing system according to the present embodiment is different in terms of having, in addition to those in Embodiments 2 to 8 described above, a structure in which a window pops up that makes it possible to confirm details by clicking (or hovering the mouse over, or the like) an "element" including information such as a news node. Since the other configurations and operations are the same as those in Embodiments 2 to 8, the same reference signs are given to the same configurations and operations, and detailed descriptions thereof will be omitted. Further, the application of the technologies described in Embodiments 2 to 8 is also easily possible, and the same effects are achieved.

### (Display Screen of User Terminal)

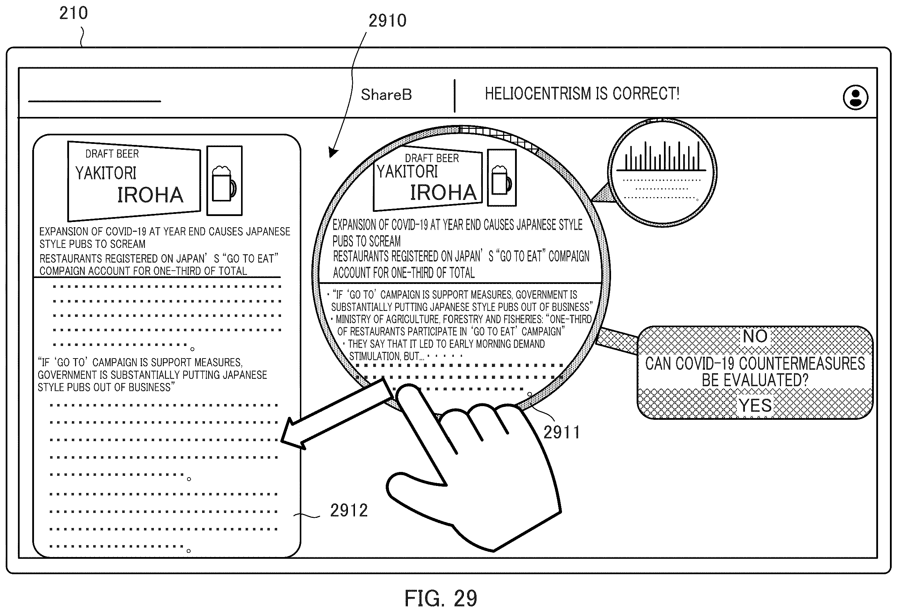

FIG. 29 illustrates display screen 2910 of user terminal 210 in the information processing system according to the present embodiment. When the mouse is hovered over (or clicking, or the like) information element 2911, window 2912 pops up that makes it possible to confirm details of an article as that on the left side of the same location. That is, the text of the article is displayed in a pop-up manner when the mouse is hovered over a node (element). Further, reactions such as those on social media may be randomly extracted and a plurality of reactions may be displayed.

According to the present embodiment, it is possible to know the content of each element in a thought structure diagram step by step. That is, even when the size of each element is reduced due to voting, it is possible to quickly know the detailed content of each element. Even in a case where the detailed information is not reduced, the original detailed information that is not omitted can be quickly confirmed.

### [Embodiment 10]

Next, an information processing system according to Embodiment 10 of the present invention will be described. The information processing system according to the present embodiment is different in terms of having, in addition to those in Embodiments 2 to 9 described above, a structure in which the entire configuration is displayed by a reduced thumbnail screen. Since the other configurations and operations are the same as those in Embodiments 2 to 9, the same reference signs are given to the same configurations and operations, and detailed descriptions thereof will be omitted. Further, the application of the technologies described in Embodiments 2 to 9 is also easily possible, and the same effects are achieved.

### (Display Screen of User Terminal)

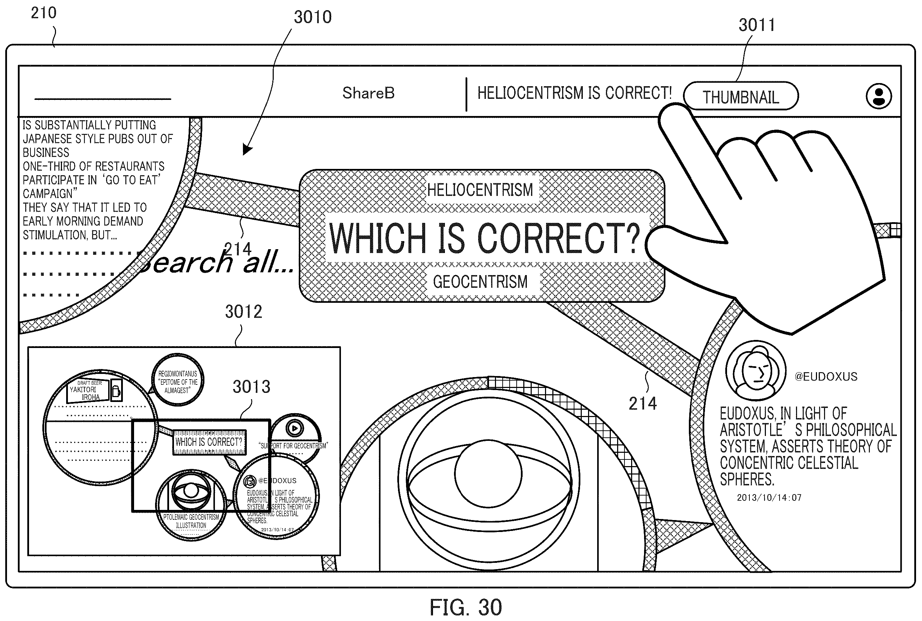

FIG. 30 illustrates display screen 3010 of user terminal 210 in the information processing system according to the present embodiment. In FIG. 30, the entire configuration is displayed by thumbnail screen 3012 which has been reduced. That is, as in FIG. 30, the entire thought structure diagram is displayed by thumbnail screen 3012 at a corner of the screen by performing an instruction of the button of thumbnail 3011 or another operation (for example, a double touch on the screen), and it is clearly indicated with, for example, red frame 3013 that "which part is displayed". Thumbnail screen 3012 may be caused to disappear by clicking (a touch operation) on the outside of frame 3013 and on the inside of thumbnail screen 3012. That is, when the canvas of a thought structure diagram (a display area of a thought structure diagram) is zoomed in, a thumbnail indicating the area, which is currently being displayed, with a red frame in the reduced overall diagram is displayed small in a corner of the thought structure diagram such that it can be understood that "which part of the entire thought structure diagram is currently being displayed".

According to the present embodiment, it is possible to freely grasp the whole or a part of a thought structure diagram. That is, it is possible to freely grasp the whole or a part of a thought structure diagram and to quickly move to a part that the user wishes to view.

### [Embodiment 11]

Next, an information processing system according to Embodiment 11 of the present invention will be described. The information processing system according to the present embodiment differs from the information processing systems according to Embodiments 2 to 10 in terms of having a structure in which a link is displayed with the direction (arrow), the shape, and/or the like, and with a comment indicating a simple link. Since the other configurations and operations are the same as those in Embodiments 2 to 10, the same reference signs are given to the same configurations and operations, and detailed descriptions thereof will be omitted. Further, the application of the technologies described in Embodiments 2 to 10 is also easily possible, and the same effects are achieved.

### (Display Screen of User Terminal)

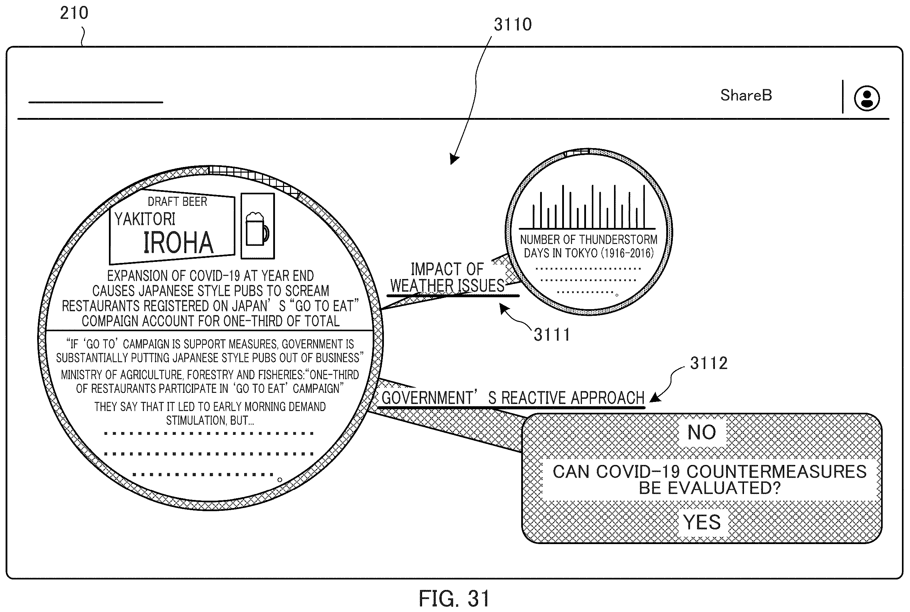

FIG. 31 illustrates display screen 3110 of user terminal 210 in the information processing system according to the present embodiment. As illustrated in FIG. 31, in the thought structure diagram of display screen 3110, links 3111 and 3112 are provided with arrows with small comments, where the arrows are given special names and special meanings. For example, it is configured such that in a case where an element is "human", the editor of the thought structure diagram gives a special meaning to links by describing "master-disciple relationship", "friendship", "married couple", and/or "former colleague". Note that, the present invention is not necessarily limited to relationships of persons, but also includes objects such as "the action of gravity", "electrical conductivity", "evolution (using a line of a triangle)", and "predator-prey relationships".

According to the present embodiment, it is possible to set a simple relevance between elements that are not necessarily related to thought.

### [Embodiment 12]

Next, an information processing system according to Embodiment 12 of the present invention will be described. The information processing system according to the present embodiment differs from the information processing systems according to Embodiments 2 to 11 in that a subject (proposition) that serves as the central element is not illustrated, and in that the information processing system has a structure in which elements are connected to each other with two or more links. Since the other configurations and operations are the same as those in Embodiments 2 to 11, the same reference signs are given to the same configurations and operations, and detailed descriptions thereof will be omitted. Further, the application of the technologies described in Embodiments 2 to 11 is also easily possible, and the same effects are achieved.

### (Display Screen of User Terminal)

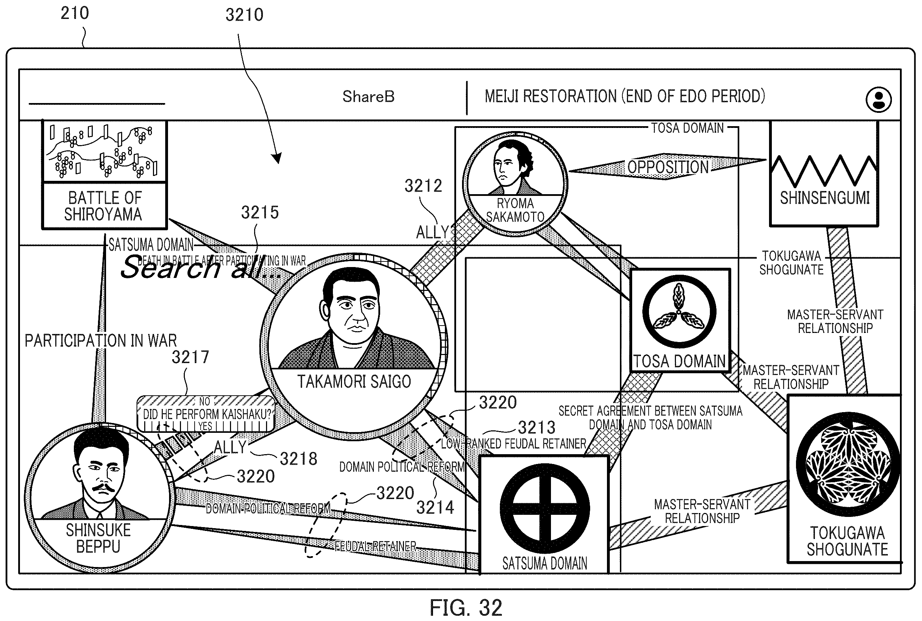

FIG. 32 illustrates display screen 3210 of user terminal 210 in the information processing system according to the present embodiment.

For example, when "Meiji Restoration (end of Edo period)" which is not displayed is the subject and "Takamori Saigo" is set as one element in FIG. 32, "Shogunate", "Emperor", "Sonno Joi Movement", "Taisei Hokan", "Restoration of Imperial Rule", "Ryoma Sakamoto", "Boshin War", "Seinan War", "Satsuma Domain", "Saigo Statue in Ueno", "Battle of Shiroyama" and the like are connected as elements with links. Inter alia, "Takamori Saigo" and "Ryoma Sakamoto" are connected with link 3212 named "alliance relationship/ally". Link 3213 from "Satsuma Domain" to "Takamori Saigo" is named "low-ranked feudal retainer", whereas link 3214 from "Takamori Saigo" to "Satsuma Domain" is named "domain political reform". This is an example in which two different types of links are connected as vectors in the reverse directions between two elements. For example, in a case where a link from "person A" to "person B" is "love" and a link from "person B" to "person A" is "indifference" or the like, a thought structure diagram thereof can be created in the present embodiment.

Further, link 3215 named "death in battle" is established between "Takamori Saigo" and "Battle of Shiroyama". This is an example in which not only a "person" and a "person" are necessarily linked, and a "person" and a "historical event" are linked here. Further, link 3217 named "performed kaishaku" is established between "Takamori Saigo" and "Shinsuke Beppu". However, there are various theories in this respect, and opinions are divided on whether "Takamori Saigo" committed suicide, so a partial voting function may be set in that part.

In this series of functions, not only a "person" or the like, but also any element, regardless of tangible or intangible, can be set as an "element". Further, a plurality of links with "vectors" can be set between two specific elements, and each link can be set with "a unique name indicating a relationship value" or the like. Although partial voting on "elements" and "links" is possible, in a case where each element does not involve voting, the size of each element can be changed according to the number of views of each element, any settings by the creator of the thought structure diagram, an automatic arrangement function for links and elements (nodes), and/or the like. That is, the function of organizing or integrating information is achieved by a thought structure diagram.

By changing the shape of each element according to the element type, it is possible to contribute to creating an easily viewable thought structure diagram. For example, in the thought structure diagram of "Takamori Saigo", displaying "elements other than persons" such as "Battle of Shiroyama" and "Satsuma Domain" in rectangles plays a significant role in creating an easily viewable thought structure diagram. Further, when creating an easily viewable thought structure diagram, links can be changed not only in shape but also in various ways of colors and other expression methods that allow visual recognition, for example, an alliance relationship may be displayed in blue, and a master-servant relationship may be displayed in red.

According to the present embodiment, it is possible to significantly expand the range of expression by a thought structure diagram without limiting the content of elements and links.

That is, in the present embodiment, an element can be a person, an animal, a phenomenon, a religion, a historical event, or any other event, rather than a question with options. Each link connecting elements can be given a name that describes the relationship between the elements. Further, it is also possible to connect two or more links between two elements. Further, it is also possible to group elements, such as "Satsuma Domain" or "Tokugawa Shogunate", by using the element grouping function. For each element, it is also possible to change the size of each element according to not voting, but according to the number of views of each element, an arbitrary setting of the creator of the thought structure diagram, an automatic arrangement function of a link or an element (node), or the like, and it is possible to create an easily viewable thought structure diagram.

### [Embodiment 13]

Next, an information processing system according to Embodiment 13 of the present invention will be described. The information processing system according to the present embodiment differs from the information processing systems according to Embodiments 2 to 12 in terms of having a structure for displaying a three-dimensional thought structure diagram. Since the other configurations and operations are the same as those in Embodiments 2 to 12, the same reference signs are given to the same configurations and operations, and detailed descriptions thereof will be omitted. Further, the application of the technologies described in Embodiments 2 to 12 is also easily possible, and the same effects are achieved.

### (Display Screen of User Terminal)

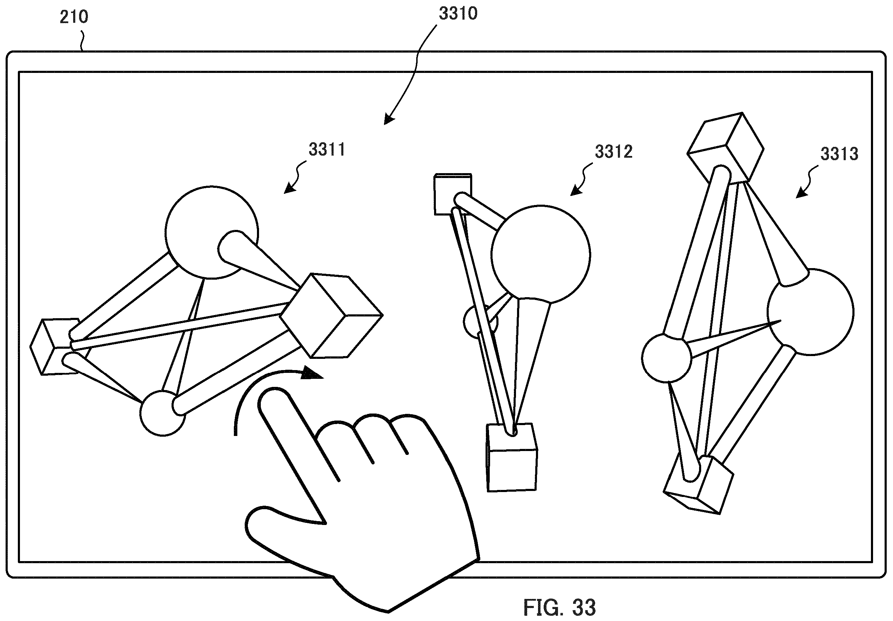

FIG. 33 illustrates display screen 3310 of user terminal 210 in the information processing system according to the present embodiment.

An element is most efficient when the element is circular, but the element does not necessarily have to be "circular". Further, a thought structure diagram is not limited to a two-dimensional expression that is viewed on a monitor or the like. As illustrated in FIG. 33, a three-dimensional display is also possible. A thought structure diagram may be displayed on a monitor using 3D CG, or may be a thought structure diagram that can be actually touched (can be operated with the sense of actual touch) using VR, AR or the like. In this case, an element may be a sphere, a hexagon, or have another shape. Monitors capable of three-dimensional display already exist, and implementation using holograms is also possible.

FIG. 33 illustrates how 3311, 3312, and 3313 in a three-dimensional thought structure diagram rotate by the user's instruction.

According to the present embodiment, it is possible to express the relevance of elements in a thought structure diagram more richly, and further, it is possible to change the viewpoint of a user. Further, in the two-dimensional display as in Embodiments 2 to 12, problems such as links crossing each other occur, but according to the three-dimensional display, a complicated thought structure diagram can be clearly expressed.

### [Embodiment 14]

Next, an information processing system according to Embodiment 14 of the present invention will be described. The information processing system according to the present embodiment differs from the information processing systems in Embodiments 2 to 13 in terms of illustrating a thought structure for policy making as another example of a thought structure diagram. Since the other configurations and operations are the same as those in Embodiments 2 to 13, the same reference signs are given to the same configurations and operations, and detailed descriptions thereof will be omitted. Further, the application of the technologies described in Embodiments 2 to 13 is also easily possible, and the same effect is achieved.

### (Display Screen of User Terminal)

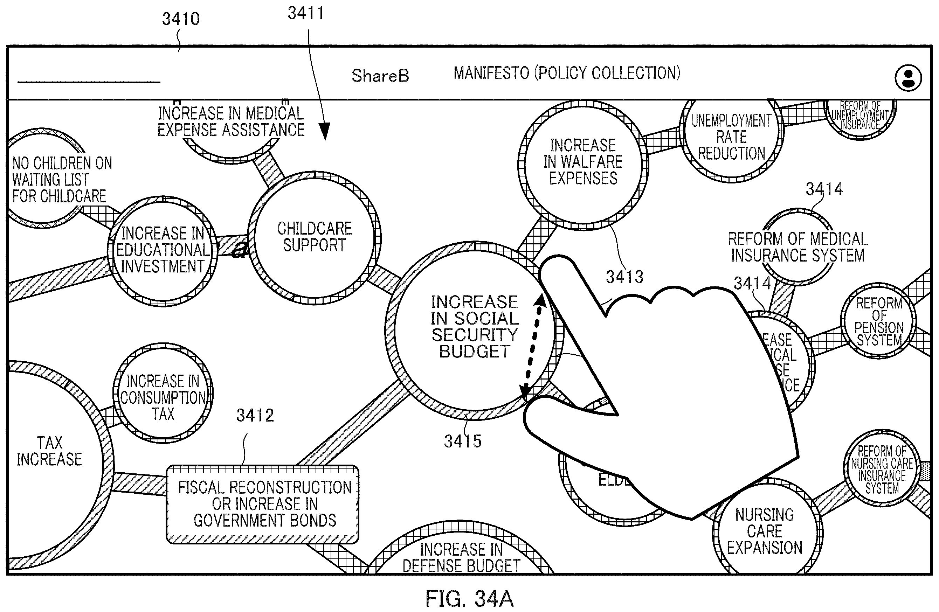

FIG. 34A illustrates a display screen of user terminal 3410 in the information processing system according to the present embodiment.

FIG. 34A is a structure diagram illustrating the relationship of each issue with one policy goal. In FIG. 34A, the "subject" in the embodiments described above corresponds to one policy goal 3412, and each "peripheral element" corresponds to each issue 3413 in the related field. Here, promotional opinions on each issue 3413 are expressed by lattice pattern 3414 (corresponding to "support: affirmative opinion"), and suppression opinions thereon are indicated by slanted line pattern 3415 (corresponding to "denial: negative opinion"). These promotional opinions and suppression opinions are expressed by user voting in Embodiment 3. In FIG. 34A, the degree of reflection of voting results on a lower-level issue in a higher-level issue may be set arbitrarily by the user or automatically at the time of generation or editing of the thought structure diagram. Further, the reflection degree may be adjusted in real time when opinions are aggregated.

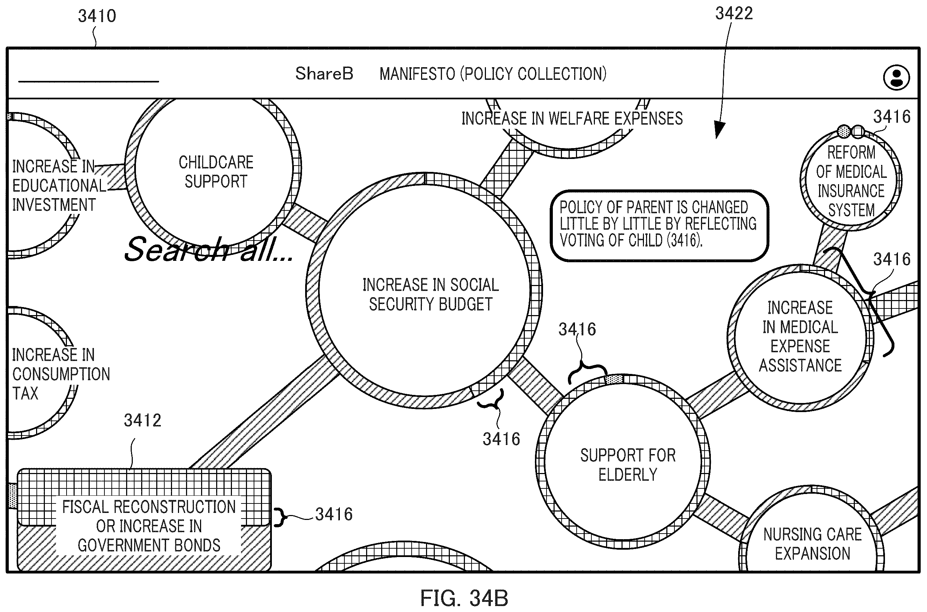

FIG. 34B illustrates another display screen 3422 of user terminal 3410 in the information processing system according to the present embodiment. Display screen 3422 of user terminal 3410 illustrates how voting results 3416 on lower-level issues are reflected in higher-level voting. The reflection in the voting results becomes smaller as the level of an issue becomes higher.

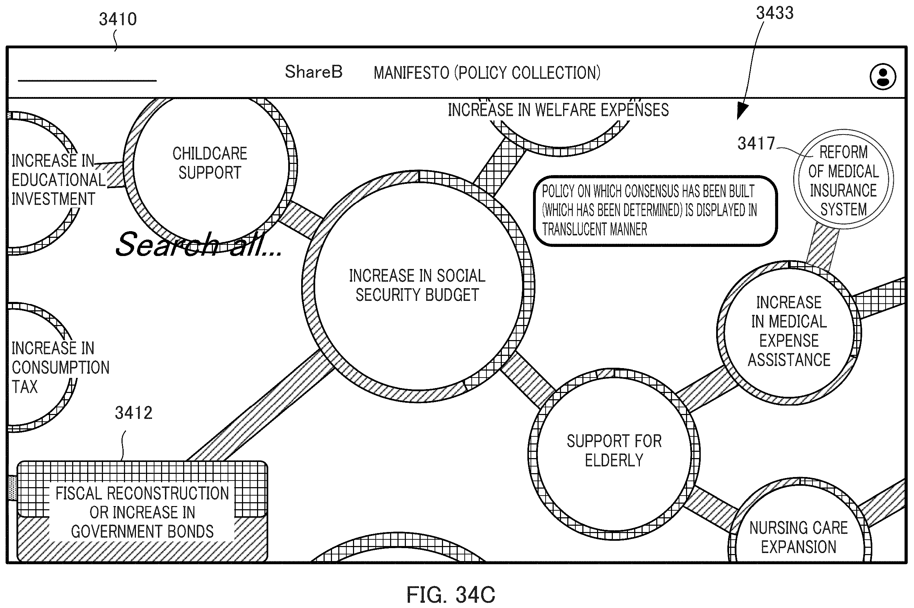

FIG. 34C illustrates another display screen 3433 of user terminal 3410 in the information processing system according to the present embodiment. Display screen 3433 of user terminal 3410 illustrates a case where a consensus has been built on one issue 3417. Note that, the consensus building may maintain the original issue or may change the issue. In a case where an issue is changed, its link(s) with a higher-level issue(s) is/are also modified. Issue 3417 determined by consensus building or majority vote is displayed in an identifiable manner (in the present embodiment, the issue is displayed in a translucent manner, but the display form is not limited as long as the issue can be clearly distinguished from unachieved tasks).

Note that, when the filtering function described in Embodiment 3 is used in the present embodiment; for example, it is assumed that in the case of a thought structure diagram related to a political party's manifesto, a policy such as "Let's pay childbirth and childcare allowances" is an element; when filtering for "female" on "gender of the voter" is performed or the filtering target is limited to the younger generation, the element is displayed very largely. Alternatively, it is assumed that there is an element of "pension policy" and when Party XX has expressed the intention to "increase the pension payment amount", performing the filtering only for the elderly results in a significantly increased number of votes for "this element is in support of Party XX", which is displayed as an element of "support for Party XX". However, performing the filtering only for the younger generation results in a significantly increased number of votes for "this element is non-support for Party XX", which is re-displayed as an element of "non-support for Party XX".

According to the present embodiment, the technical idea of the present invention can be applied to structuring in other fields, such as policy making. Note that, in the present embodiment, policy making has been described, but the present invention is not limited thereto as long as management of information or a thought that branches from a large item to a small item is involved. For example, a mind map may be used for budget management or for an individual. According to the present embodiment, by classifying information by category, it is possible to organize the information in an easily visible manner such that users can understand complex information at a glance.

### [Embodiment 15]

Next, an information processing system according to Embodiment 15 of the present invention will be described. The information processing system according to the present embodiment differs from the information processing systems according to Embodiments 2 to 5 in that the technical idea of the present invention is applied to task management (control) such as grasping the progress situation of development. Since the other configurations and operations are the same as those in Embodiment 2, the same reference signs are given to the same configurations and operations, and detailed descriptions thereof will be omitted.

### <Display Screen of User Terminal>

### (Progress Situation of Development)

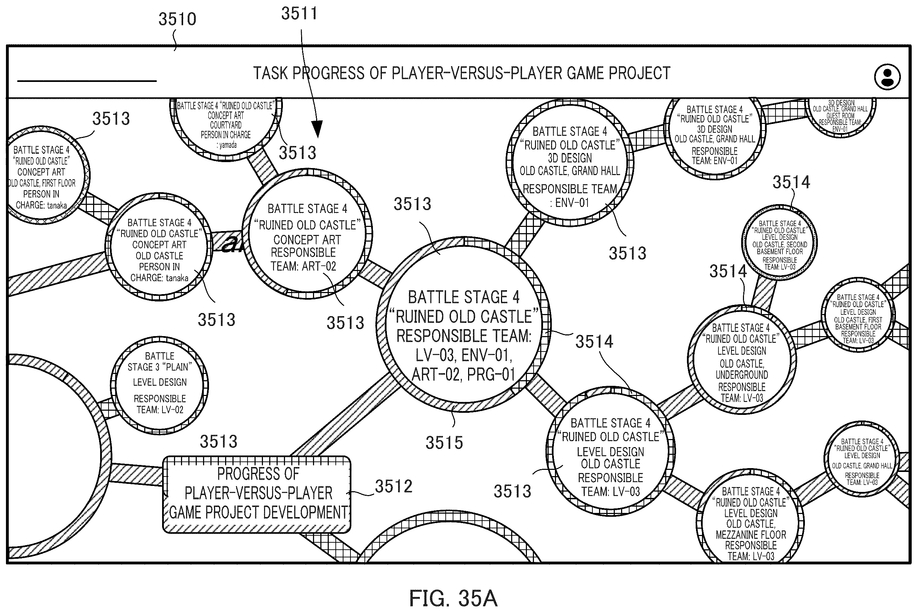

FIG. 35A illustrates display screen 3511 of user terminal 3510. Display screen 3511 displays a structure diagram indicating a progress situation of a player-versus-player game development project. Progress situation icon 3512 for the entire project is displayed as the "subject", and tasks 3513 of groups and members responsible for developing specific elements are displayed as "peripheral elements", respectively. The progress degrees of tasks 3513 for each group or member are indicated by lattice pattern 3514 (corresponding to "affirmative: achievement degree") or slant line pattern 3515 (corresponding to "negative: non-achievement degree"). The progress degree of a lower-level task directly affects the progress degree of a higher-level task. That is, higher-level development tasks are completed at the point when the development of all lower-level tasks has been completed.

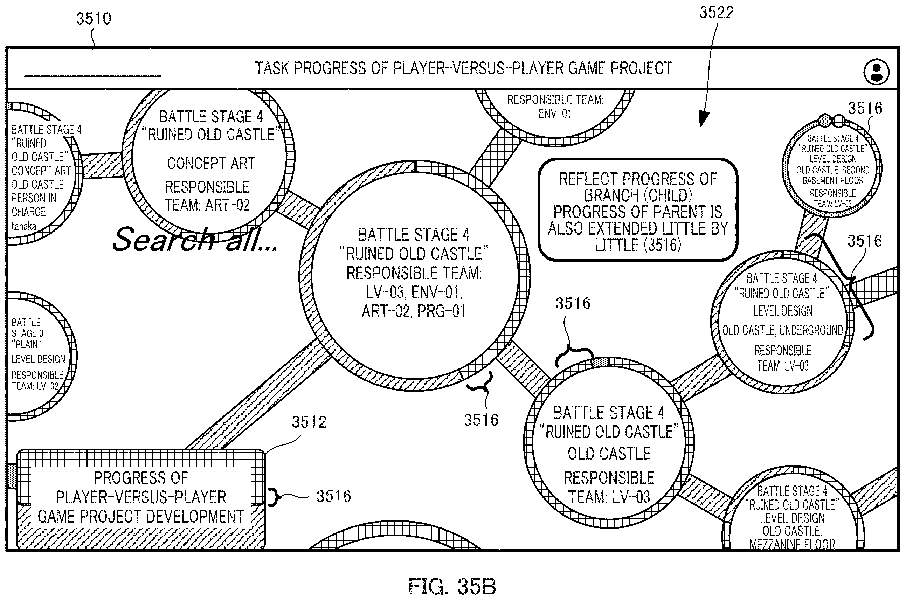

FIG. 35B illustrates display screen 3522 of user terminal 3510 in the information processing system according to the present embodiment. Display screen 3522 of user terminal 3510 illustrates how increase 3516 in the progress degree of a lower-level issue is reflected in a higher-level progress situation. The reflection in a progress degree becomes smaller as the level of a task becomes higher.

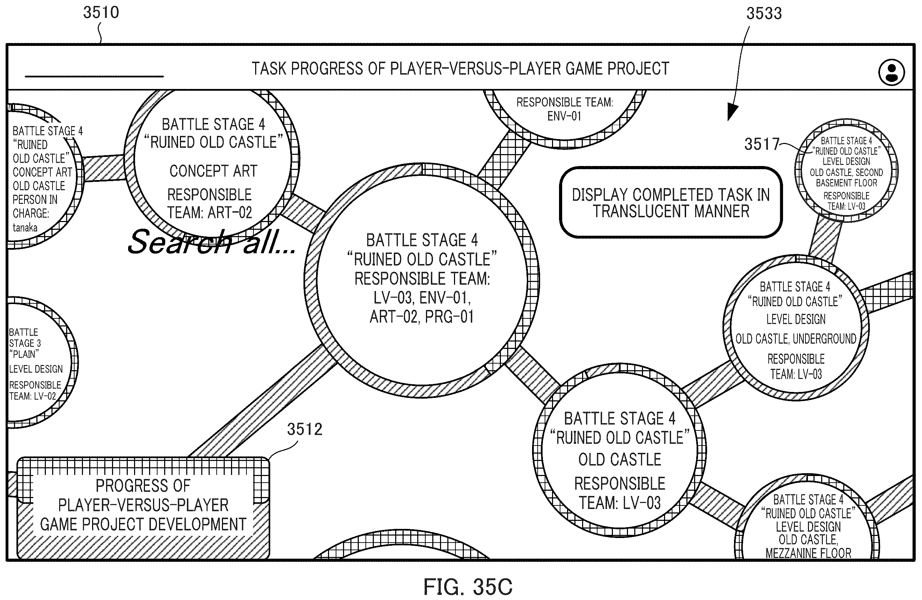

FIG. 35C illustrates display screen 3533 of user terminal 3510 in the information processing system according to the present embodiment. Display screen 3533 of user terminal 3510 illustrates a case where the progress degree of task 3517 of one group (member) is 100% (complete). Completed task 3517 is displayed in an identifiable manner. In the present embodiment, the task is displayed in a translucent manner, but the display form is not limited as long as the task can be clearly distinguished from unachieved tasks.

According to the present embodiment, the progress situation of a project can be easily visualized.

### [Embodiment 16]

Next, an information processing system according to Embodiment 16 of the present invention will be described. The information processing system according to the present embodiment differs from the information processing systems according to the embodiments described above in terms of visualizing relative evaluations of companies. Since the other configurations and operations are the same as those in the other embodiments, the same reference signs are given to the same configurations and operations, and detailed descriptions thereof will be omitted.

### <Display Screen of User Terminal>

### (Evaluation of Company)

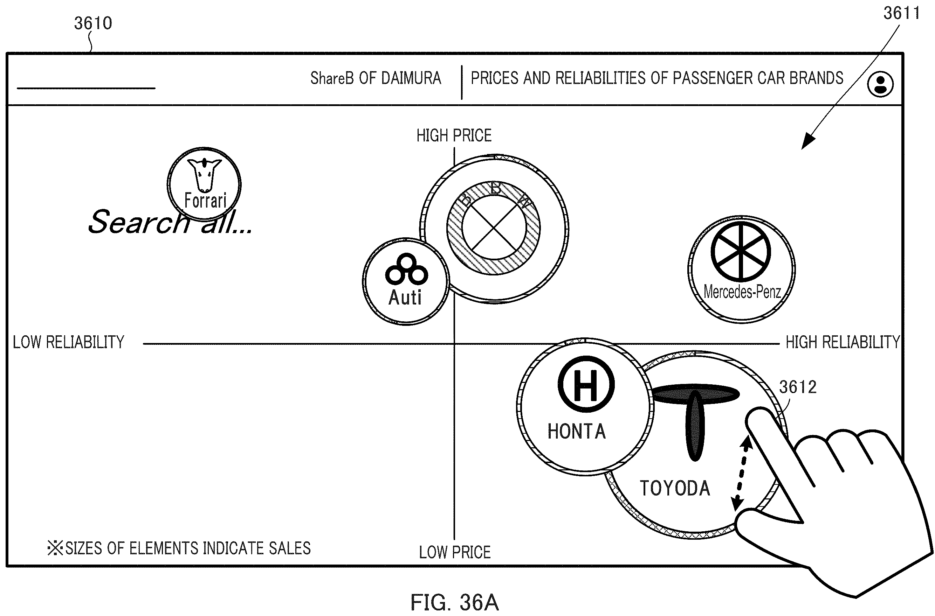

FIG. 36A illustrates display screen 3611 of user terminal 3610, which indicates a comparison of evaluation results of a plurality of companies in the information processing system according to the present embodiment.

Display screen 3611 is a two-dimensional graph in which the evaluation results of the prices and reliabilities of a plurality of passenger car brands are elements and are disposed on the vertical axis and the horizontal axis, respectively. Further, the sizes of the elements of the respective passenger car brands indicate sales thereof.

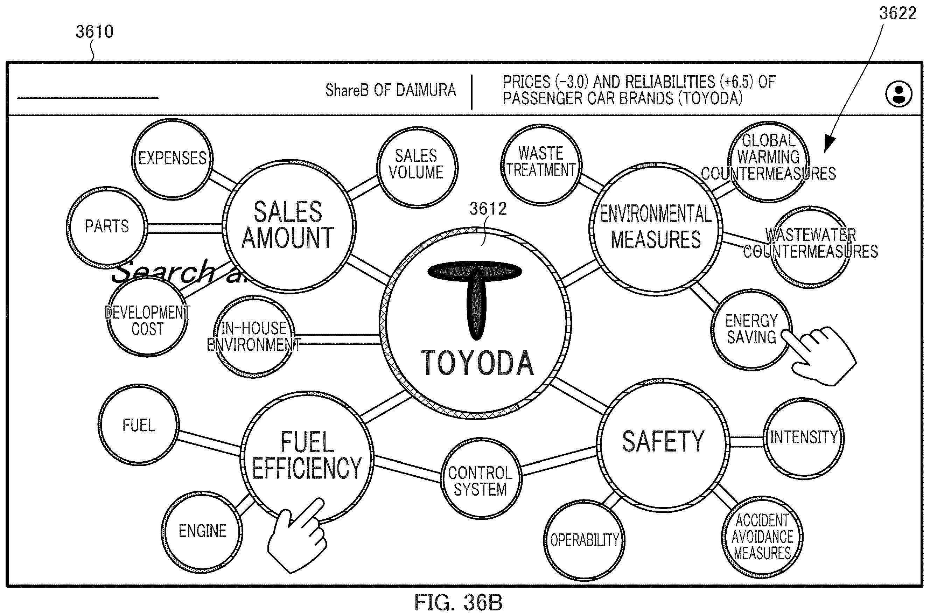

On display screen 3611, when company icon 3612, which is one of the elements of the plurality of passenger car brands, is clicked, display screen 3622 in FIG. 36B is displayed.

Display screen 3622 indicates evaluations of the selected company in a thought-structural manner. On display screen 3622, as an example, five large elements (sales amount, fuel efficiency of cars, safety, environmental measures, and in-house environment) are linked as elements that determine the evaluations of the company. Further, small elements related to the large elements are linked. On display screen 3622, only three layers of the passenger car brand element (subject), the large elements, and the small elements are illustrated, but more detailed elements may be linked in multiple layers.

The operability, ride comfort, ease of work for employees, and the like are affected by aggregation results of votes for positive or negative evaluations of each element from user terminal 3610. The determination is not necessarily made based on voting and may be made based on other factors such as statistics.

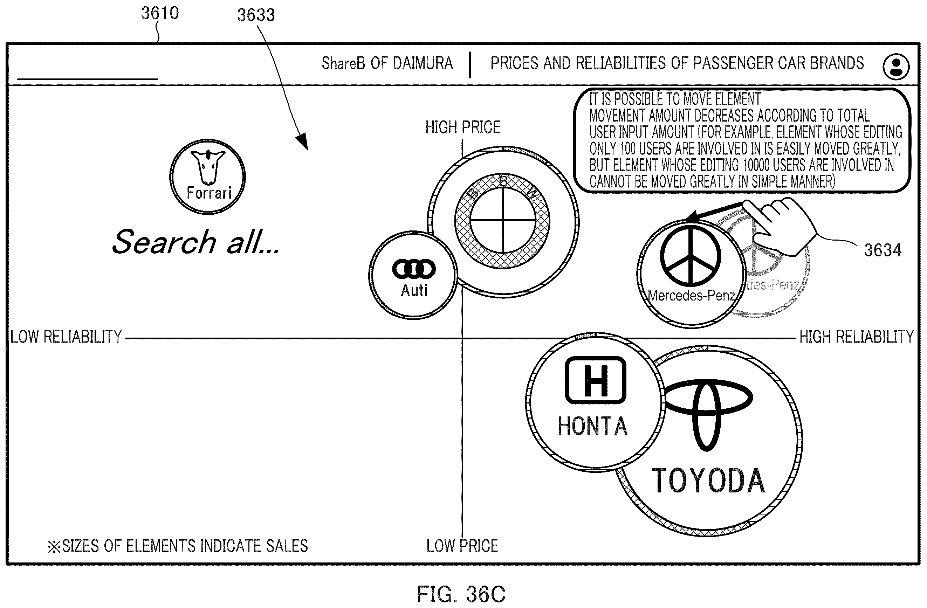

FIG. 36C illustrates an example of a modification operation of an evaluation result on display screen 3633 of user terminal 3610 according to the present embodiment.

On display screen 3633, it is possible to move the position of a passenger car brand element on the two-dimensional graph to change the price and reliability thereof. However, the movement distance is inversely proportional to the total number of votes on the passenger car brand element. As described above, even in a configuration in which fine evaluation elements as in FIG. 36B are aggregated, the configuration may be such that the overall evaluation (voting) is reflected in the passenger car brand element as illustrated in FIG. 36C.

Note that, in the present embodiment, the evaluations of companies have been described, but the evaluation targets are not limited thereto as long as the evaluation targets have the same attributes as the evaluations of companies. For example, the evaluation targets may be foodstuffs or drugs. According to the present embodiment, each peripheral element that appears is compared, parameterized, and organized in an easily visible manner such that users can understand complex information at a glance. Further, the embodiments illustrated in FIGS. 36A and 36B need not necessarily be used as a set, and each can be used alone. For example, FIG. 36B can be applied to structuring in household management and the like by the use thereof alone.

### [Embodiment 17]

Next, an information processing system according to Embodiment 17 of the present invention will be described. The present embodiment is different in terms of having a structure of "central element (subject, proposition) → option ← peripheral element" while Embodiments 2 to 7 described above have a structure of "central element (subject, proposition) ← peripheral element". Since the other configurations and operations are the same as those in Embodiments 2 to 7, the same reference signs are given to the same configurations and operations, and detailed descriptions thereof will be omitted.

### <Display Screen of User Terminal>

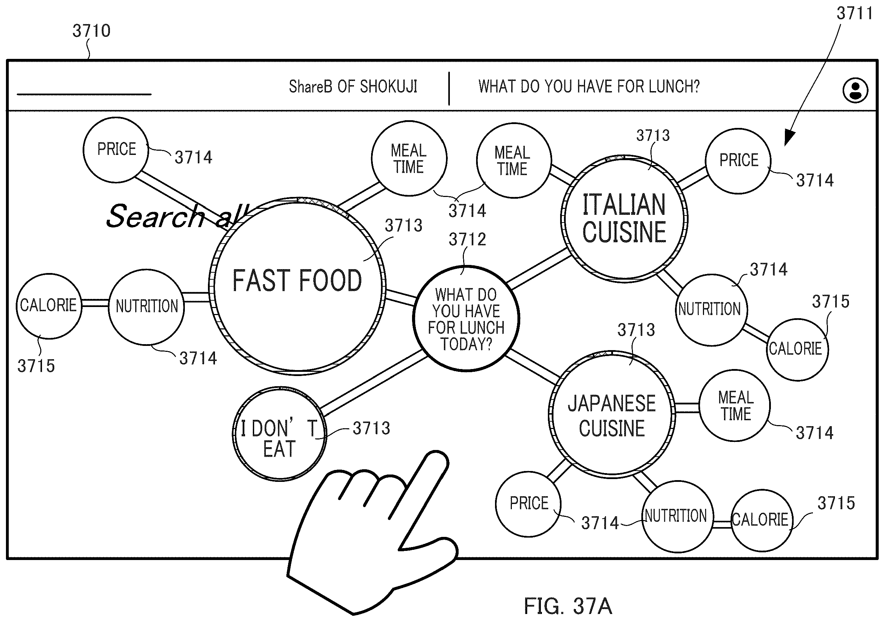

FIG. 37A illustrates display screen 3711 of user terminal 3710. Display screen 3711 illustrates an initial thought structure diagram.

On display screen 3711, when four options 3713 are generated around subject ("What do you have for lunch today?") 3712, common peripheral elements common to four options 3713 are automatically generated and displayed. On display screen 3711, options 3713 are four options: "Italian cuisine", "fast food", "Japanese cuisine", and "I don't eat". On display screen 3711, "meal time", "price" and "nutrition" are common peripheral elements 3714, and "calorie" is automatically displayed as common peripheral element 3715 under "nutrition". By the configuration in this manner, operations by a user who creates a thought structure diagram are simplified. A common peripheral element(s) may be added or deleted at the user's discretion.

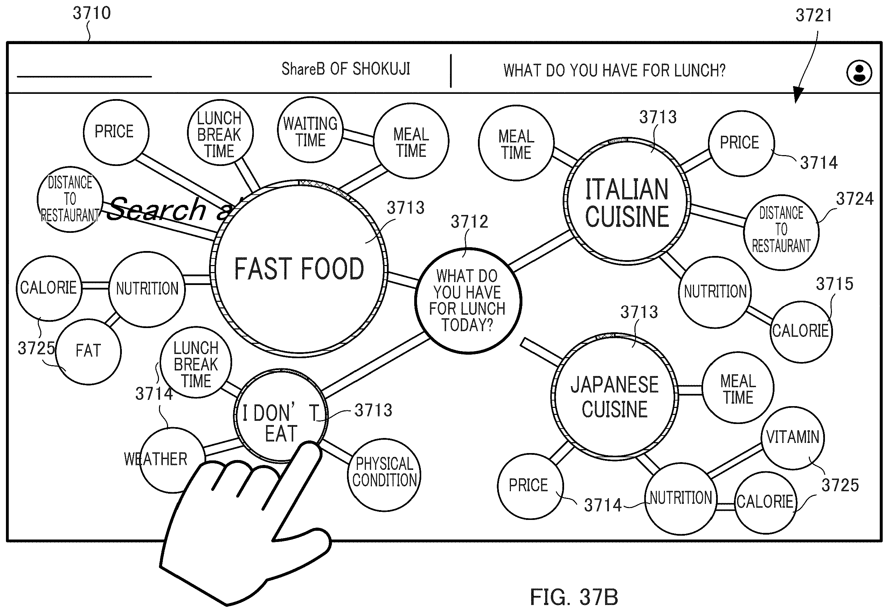

FIG. 37B illustrates display screen 3721 on which the thought structure diagram at the time of completion is displayed. On display screen 3721, peripheral element 3724 indicating the distance to the restaurant or the like is added and displayed as a unique peripheral element that is uniquely linked to each option 3713. Further, as peripheral element 3724, "nutrition (information from a nutritional point of view)", "mood of the day", "type of meal on the previous day", "length of lunch break time allocated for a meal", "advantages of Italian cuisine", "quick preparation time of fast food", and/or the like may be added. Peripheral element 3724 may be further linked to lower peripheral element 3725. On display screen 3721, for example, "nutrition" which is peripheral element 3714 is linked to "calorie", "fat" and "vitamin" and the like which are lower peripheral elements 3725. The user refers to display screen 3721 and casts a vote on option 3713. At that time, the user refers to peripheral element(s) 3714, which provide(s) information linked with 1813, and further refers to lower peripheral element(s) 1815. Voting results on option 3713 are expressed by the size of option 3713, which is namely the structure of "central element (subject, proposition) → option ← peripheral element".

As described above, in the case of a "central element (subject, proposition) → option ← element" type thought structure diagram of the present embodiment, it is possible to include "independent, exclusive peripheral element(s) 3714" for each option 3713. For example, when there is a peripheral element "Olives are good for the body", this peripheral element is clearly related to only the option "Italian cuisine". Therefore, the thought structure diagram is easier to be viewed when peripheral element 3714 "Olives are good for the body" is directly connected to option 3713 "Italian cuisine". Further, it is possible to compare the same elements, display the ranking, and display specific parameters, enabling visually efficient comparison.

According to the present embodiment, as "common peripheral elements", options that are supposed to include a plurality of common parameters can be connected as child elements of each "option element" and can be compared and discussed. **In** the case of another thought structure diagram, it is not common for each option to include a plurality of common parameters. For example, it is difficult to imagine a situation in which "Heliocentrism is correct!" and "Geocentrism is correct!" compete with each other for the same parameter, although there are separate peripheral elements that support each opinion. This point will differentiate the present embodiment from the other embodiments.

**In** the present embodiment, the screen is composed of the following four types of nodes and links.
Central element which corresponds a matter to be discussed or agenda
Option element which indicates an option according to the matter to be discussed of the central element
Common peripheral element which indicates a category common to each option element
Unique peripheral element which is a specific element that can be applied only to the option element

It is desirable that the colors and shapes of these four types of elements (nodes) differ according to the respective types, resulting in an easily viewable thought structure diagram. For the common peripheral elements, it may be configured such that different colors or shapes are assigned to "price", "nutritional balance", "waiting time", and the like, respectively, and can be compared and discussed at a glance. The same peripheral elements should be present and should be compared in each option. It is possible to compare and discuss the same peripheral elements for a common parameter(s) such as "price", "nutritional balance", "taste", "distance to restaurant", "waiting time", "physical condition", "likes and dislikes", and the like.

With respect to the same peripheral elements, when the mouse is hovered over one peripheral element, another/other similar peripheral element(s) is/are also highlighted. The display is performed as the size (not necessarily the size) of a peripheral element or parameters quantified in a pie chart around the peripheral element. For example, it is possible to use the size as indicating "the importance of the element in the matter to be discussed" and to use the pie chart as indicating "quantified parameters" (for example, the element "price" is important and therefore relatively large, and the pie chart indicates an "average price", and/or the like). It may be configured such that when a peripheral element is clicked, the ranks of option elements in the peripheral element are displayed. Alternatively, the color(s) and shape for each peripheral element may be determined for each object (common peripheral element) having the same content (for example, the node "meal time" is yellow), and a specific numerical value may be input into each node. A score according to the rank may be set for each peripheral element having the same content, and the total value of scores according to the rank may be displayed.

When the thought structure diagram of the present embodiment is created, a plurality of common peripheral elements is automatically generated around each option element. The content input into one of the peripheral elements (here, the content refers to a common category such as "price", "nutritional balance", "taste", or the like, and is not a "value" stored in the element) is also input into the same peripheral element connected to another option element. For example, when it is considered that a thought structure diagram in which a matter to be discussed: "today's lunch" is taken as the central element is created, an automatically created blank common peripheral element is given the category content "price". In this manner, the category content "price" is also assigned to a common peripheral element connected to another option element, which corresponds to the common peripheral element. A unique peripheral element is connected as a child element of a peripheral element labeled as a "unique element (which may alternatively be expressed as an advantage of ∘∘)". It may be set at the time of generating a thought structure diagram whether a unique peripheral element is a positive element or a negative element, and the evaluation of each option element may be affected based on voting results on "high degree of influence"/"low degree of influence" to be described later.

The degree of influence may be determined by voting (the degree of influence is clearly indicated in a visual manner by a method such as the size of the element). That is, by allowing voting on the options of "high degree of influence"/"low degree of influence", the degree of influence of each peripheral element may be determined, and may be reflected in the size of the peripheral element. Since the portions of the pie chart indicate the values of the parameters, it may be configured such that numerical values are actually directly input, a five-stage evaluation of "A to E" (the evaluation may not be necessarily a five-stage evaluation, and may be a six-stage or three-stage evaluation) is input (for example, a five-stage evaluation is more preferred for "nutritional balance"), or the like. The meal time, the price and the like are fixed amounts, and are therefore displayed in a pie chart around the element (the numerical values thereof may be displayed in each node). In the case of the nutritional balance, five-stage evaluations of "A to E" may be displayed in a pie chart (for example, an arc is divided into five parts, and the proportion of the color of "affirmation" increases as the rank increases).

For each peripheral element, it is possible to consider both a case where each peripheral element includes a fixed parameter according to its category or nature and a case where a parameter of each peripheral element is determined by voting of viewing users. For example, in the case of a peripheral element in the category "price", it is sufficient to input the average meal price at the restaurant, which becomes a fixed parameter since there is no room for discussion among viewing users. On the other hand, in the case of a peripheral element in the category "taste", the evaluation of each viewing user for each restaurant naturally varies, and in such a case, it is conceivable that each viewing user inputs a five-stage evaluation of "A to E" (the evaluation may not be necessarily a five-stage evaluation, and may be a six-stage or three-stage evaluation) as an option and the input five-stage evaluations are aggregated to determine a parameter. Degree of influence × Value stored in a pie chart around each peripheral element = Score of the peripheral element

In the aggregation of voting results/parameters of hierarchized peripheral elements, a method may be used in which the results for a lower-level peripheral element affect a higher-level peripheral element (however, the degree of influence thereof decreases as the level becomes higher), such as task management.

The total value of scores of each peripheral element is reflected in the size of each option element. In addition, depending on the matter to be discussed, voting by viewing users may be performed on each option element, which is indicated in a pie chart at the outer circumference. Conversely, as a matter of course, the size may represent the voting results, and the pie chart may represent the total value of scores of each peripheral element.

It is also possible to convert information described in a thought structure diagram into a table. Conversely, a table may be first created and may be automatically converted into a thought structure diagram. For example, it may be configured such that a thought structure diagram is automatically created by inputting a table as follows.

| Subject | Option Element | Evaluation Item |
|---|---|---|
| | | |
| What do you have for lunch today? | Italian cuisine | Nutrition |
| | Fast food | Price |
| | Japanese cuisine | Waiting time |
| | | Distance to restaurant |

### [Embodiment 18]

Next, an information processing system according to Embodiment 18 of the present invention will be described. The information processing system according to the present embodiment differs from the information processing systems according to the embodiments described above in that an option element is disposed. Since the other configurations and operations are the same, the same reference signs are assigned to the same configurations and operations, and detailed descriptions thereof will be omitted.

### <Functional Configuration of ShareB Server>

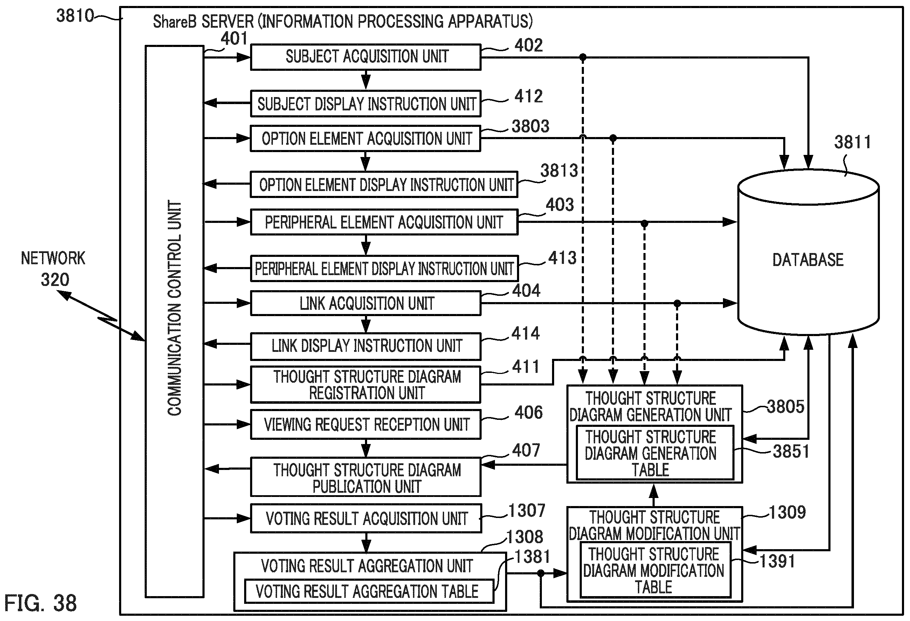

FIG. 38 is a block diagram illustrating a functional configuration of ShareB server 3810 as an information processing apparatus according to the present embodiment.

ShareB server 3810 includes option element acquisition unit 3803, option element display instruction unit 3813, database 3811, and thought structure diagram generation unit 3805. Option element acquisition unit 3803 receives and acquires an option element input by a user through the user terminal of the user, and stores the option element in association with the subject, in database 3811. Option element display instruction unit 3813 instructs a user terminal to display an acquired option element in a position linked to the display position of the subject as the central element with a link. Database 3811 stores, in addition to the content of database 311, option elements. Thought structure diagram generation unit 3805 includes thought structure diagram generation table 3851, and generates a thought structure diagram by associating a subject, an option element(s), a peripheral element(s), and a link(s) and disposing the subject, the option element(s), the peripheral element(s), and the link(s).

Note that, in the present embodiment, an option element has been described as being distinguished from a peripheral element, but an option element may be regarded as a first peripheral element that is linked to a subject as the central element, and a peripheral element that is linked to the option element may be regarded as a second peripheral element. In that case, the contents expressed by the thought structure diagrams are different, but the structures of each element with the central element, the first peripheral element, and the second peripheral element may be regarded as the same.

### (Thought Structure Diagram Generation Table)

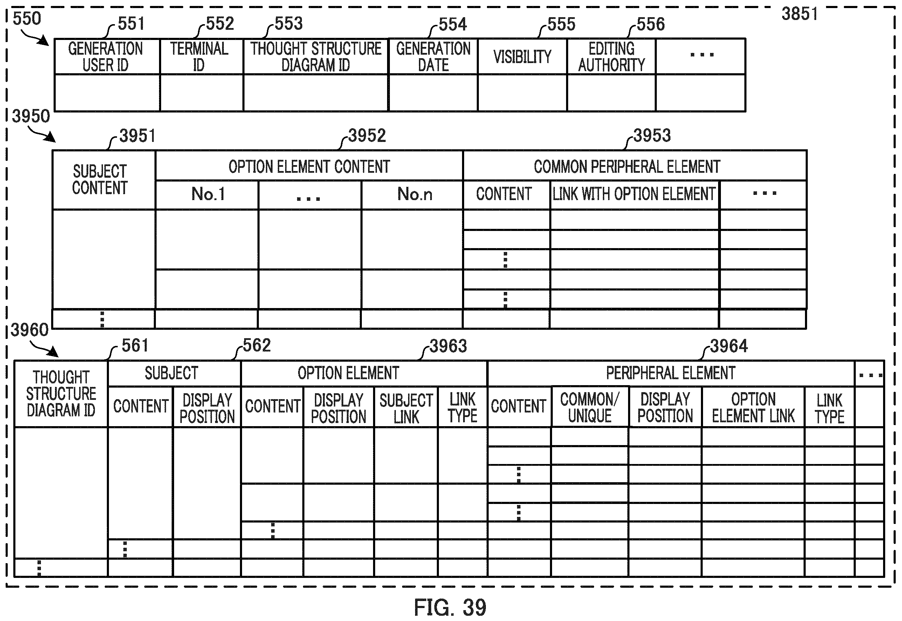

FIG. 39 illustrates a configuration of thought structure diagram generation table 3851 according to the present embodiment. Thought structure diagram generation table 3851 includes common element table 3950 that stores common peripheral elements and configuration table 3960 that indicates the configuration of a thought structure diagram.

Common element table 3950, which stores common peripheral elements, is used to generate and display common peripheral elements related to a plurality of option elements. Common element table 3950, which stores common peripheral elements, stores set 3952 of option elements in association with subject content 3951. Then, common peripheral element(s) 3953 is/are stored in association with each set 3952 of option elements. Common peripheral element 3953 includes the content of a peripheral element and a link of the peripheral element with an option element.

Configuration table 3960 stores, in association with thought structure diagram ID 561, subject 562 as the central element, option element 3963 related to subject 562, and peripheral element 3964 related to option element 3963. Option element 3963 includes the content of an option element, the display position of the option element, and a link of the option element with the subject. Peripheral element 3964, which is referred to in the selection of an option element, includes the content of a peripheral element, the display position of the peripheral element, and a link of the peripheral element with an option element.

### (Procedure of Thought Structure Diagram Generation Processing)

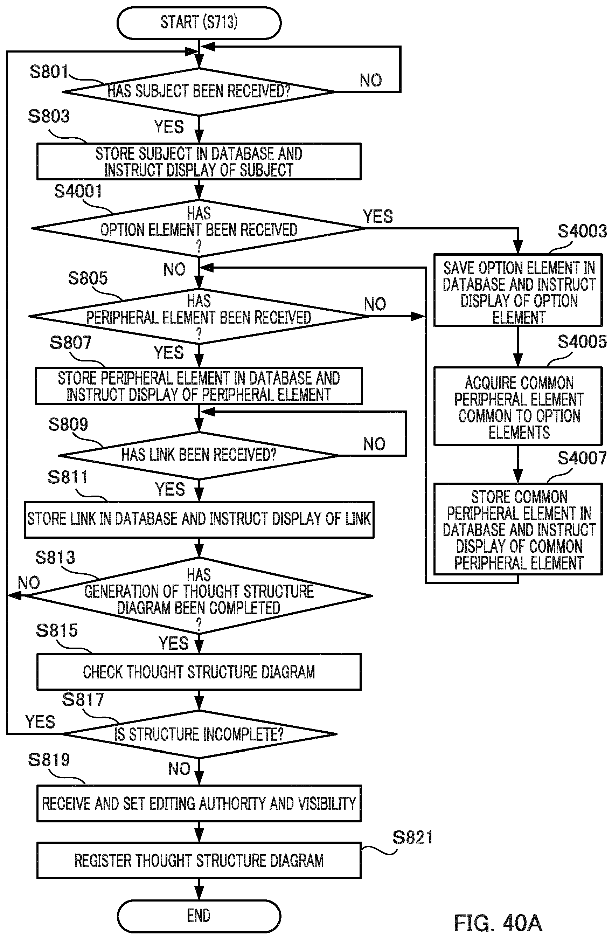

FIG. 40A is a flowchart illustrating a procedure of a thought structure diagram generation processing according to the present embodiment. In step S4001, ShareB server 3810 determines whether the setting of an option element has been received. In a case where the setting of an option element has been received, ShareB server 3810, in step S4003, sets the option element, saves the option element in the database, and instructs the user terminal, through which the option element has been set, to perform the additional display of the option element in the thought structure diagram. In step S4005, ShareB server 3810 searches whether a common peripheral element common to a plurality of the option elements is stored in common element table 3950, and, when a common peripheral element is stored therein, acquires the common peripheral element and links between the common peripheral element and each option element. Then, in step S4007, ShareB server 3810 stores the common peripheral element and the links between the common peripheral element and each option element in configuration table 3960 of thought structure diagram generation table 3851, saves the common peripheral element and the links in the database, and instructs the user terminal, through which the option element has been set, to perform the additional display of the common peripheral element and the links in the thought structure diagram.

### (Procedures of Voting Result Aggregation Processing and Reflection Processing in Thought Structure Diagram)

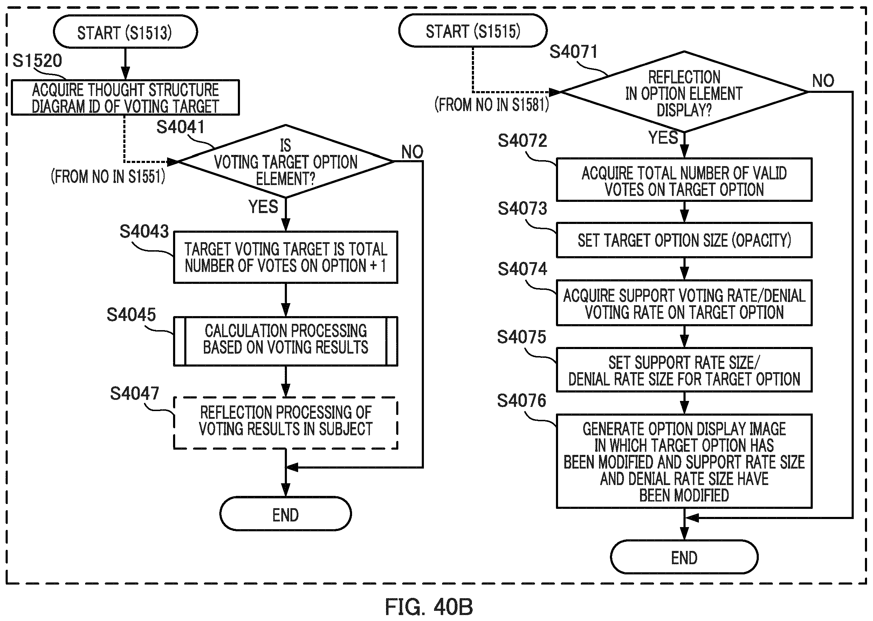

FIG. 40B is a flowchart illustrating a procedure of voting result aggregation processing and a procedure for reflection processing in a thought structure diagram according to the present embodiment (corresponding to S1513 and S1515 in FIG. 15A).

In step S4041, ShareB server 3810 determines whether the voting target is an option element. When the voting target is an option element, ShareB server 3810 adds 1 to the total number of votes on the option element, which is the target element, in step S4043. Next, in step S4045, ShareB server 3810 performs, on the option element, the same processing as the processing in steps S1525 to S1537. In step S4047, ShareB server 3810 may perform reflection processing of the voting results on the option element in the subject. Note that, with respect to the reflection processing, it may be determined whether the reflection is performed at the time of generation or editing of a thought structure diagram, or the like.

In step S4071, ShareB server 3810 determines whether the voting is voting on an option element and whether the voting is reflected in the display of the option element. In a case where the voting is reflected in the display of the option element, ShareB server 3810 acquires the total number of valid votes on the option element, which is the target element, in step S4072. Then, in step S4073, ShareB server 3810 sets the display size or opacity of the target option element corresponding to the total number of valid votes. In step S4074, ShareB server 3810 acquires the affirmative voting rate and the denial voting rate on the target option element. Then, in step S4075, ShareB server 3810 sets the display size of the affirmative rate and the display size of the denial rate on the target option element. In step S4076, ShareB server 3810 modifies the display size of the target option element, modifies the display size of the affirmative rate and the display size of the denial rate on the target option element, and generates a display image of the target option element.

According to the present embodiment, a user can organize information at a glance from a thought structure diagram and grasp the thought tendency thereof. In particular, providing "option elements" and "common peripheral elements" helps organize, compare and discuss information on a plurality of options, which shares the same parameter and has similar properties.

Note that, it is possible to create an easily viewable thought structure diagram by assigning different shapes and/or colors to each element according to the types thereof. With respect to common peripheral elements, it may be configured such that when the mouse is hovered over one of those that are the same, the same common peripheral element(s) connected to another/other option element(s) may also be highlighted together (for example, when the mouse is hovered over a peripheral element "price" connected to fast food, peripheral elements "price" connected to Italian cuisine and Japanese cuisine are also highlighted together). For example, it is possible to use the size of an element as indicating "the importance of the element in the matter to be discussed" and to use the pie chart as indicating "quantified parameters". When a common peripheral element is clicked, the ranks of option elements in the common peripheral element may be displayed. The color(s) and shape for each peripheral element may be determined for each object (common peripheral element) having the same content (for example, the node "meal time" is yellow), and a specific numerical value may be input into each node.

A score according to the rank is set for each common peripheral element, and the total value of scores according to the rank and the total value of scores set to a unique peripheral elements may affect the size of an option element or the pie chart. **In** a case where common peripheral elements are generated not automatically, but at a user's discretion; when a category theme "price" is input into one common peripheral element, the same category theme "price" is input in the same manner into the same common peripheral element(s) connected to another/other option element(s). It may be set at the time of generating (editing) a thought structure diagram whether a unique peripheral element is a positive element or a negative element, and the evaluation of each option element may be affected based on voting results on "high degree of influence" / "low degree of influence" to be described later.

### [Other Embodiments]

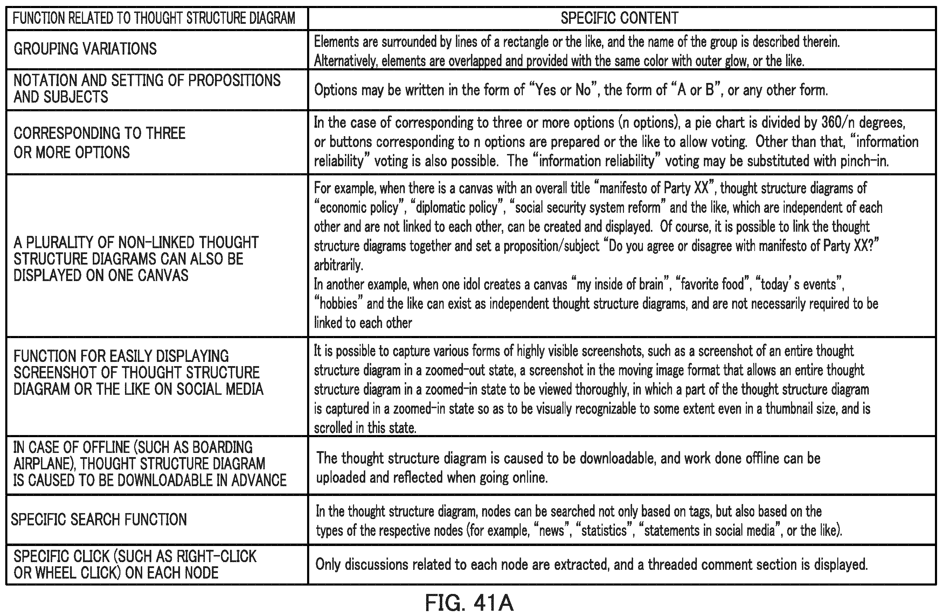

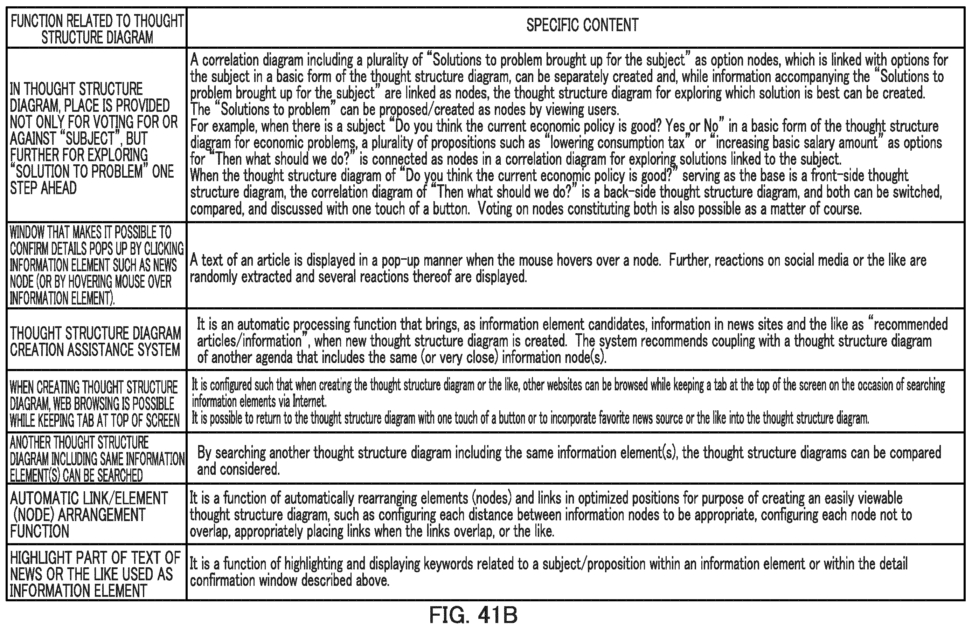

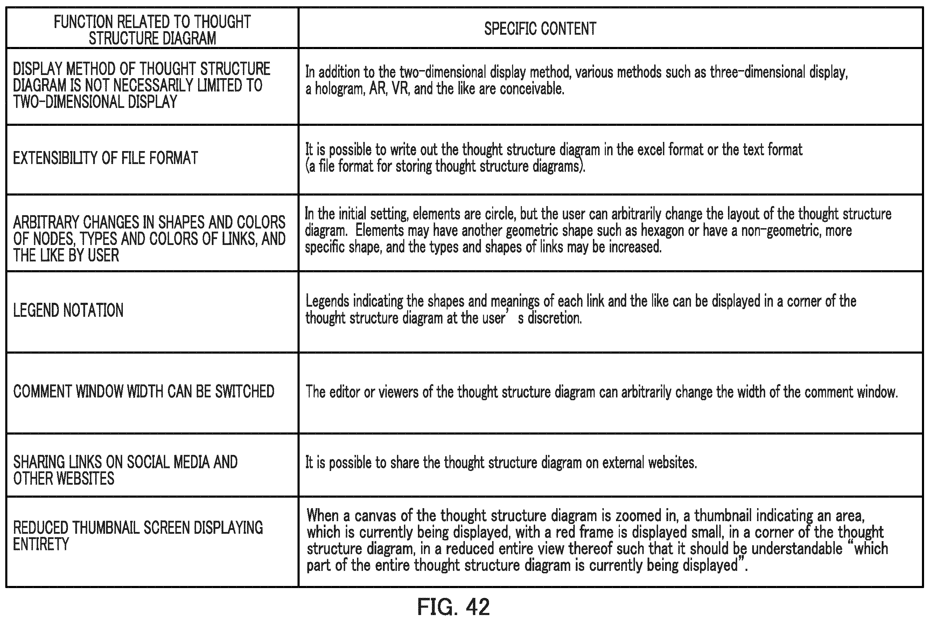

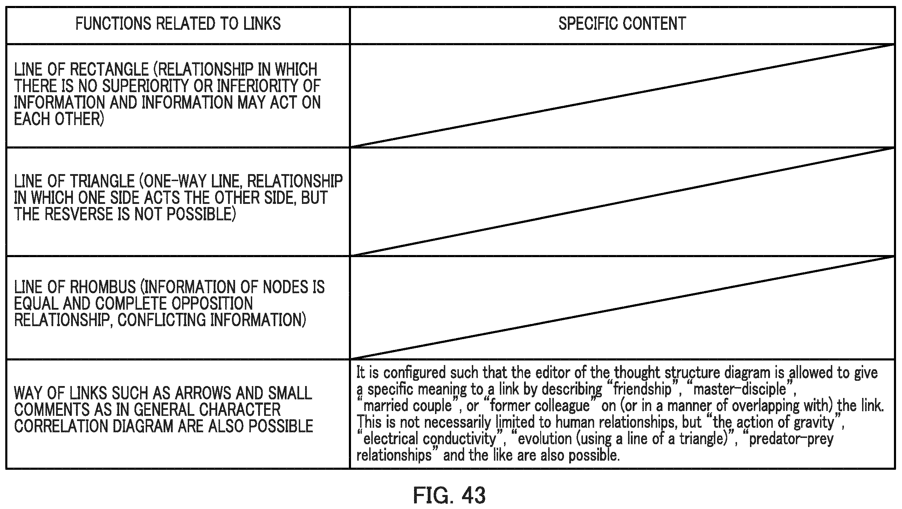

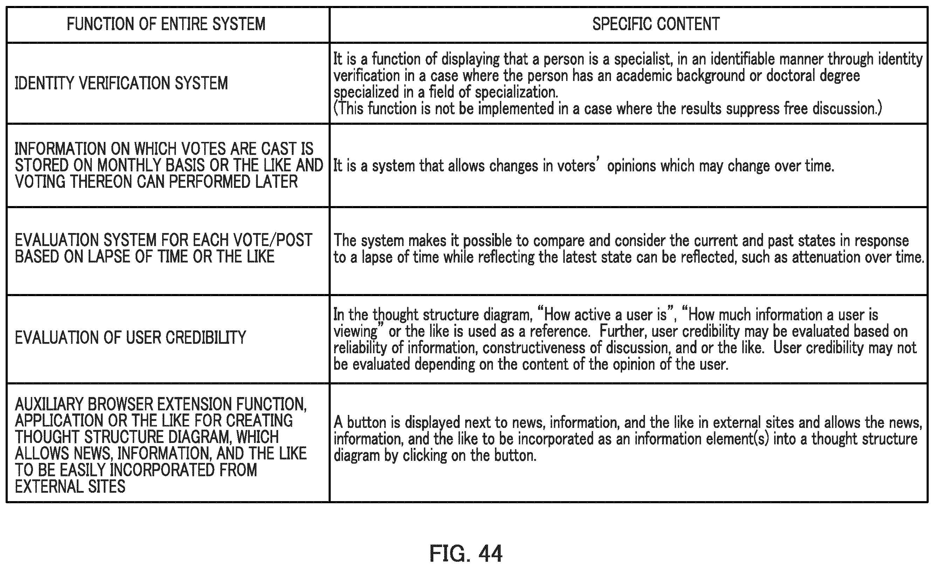

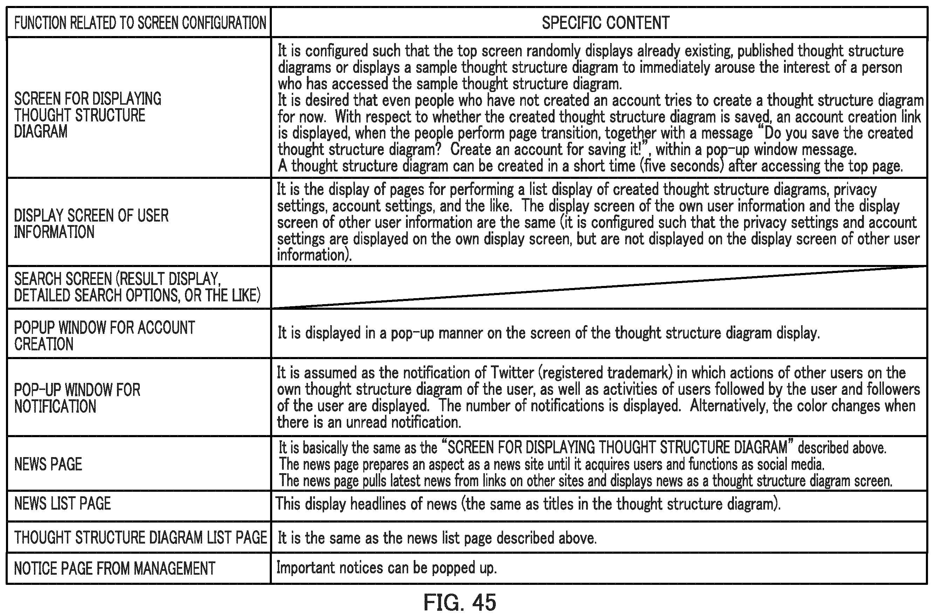

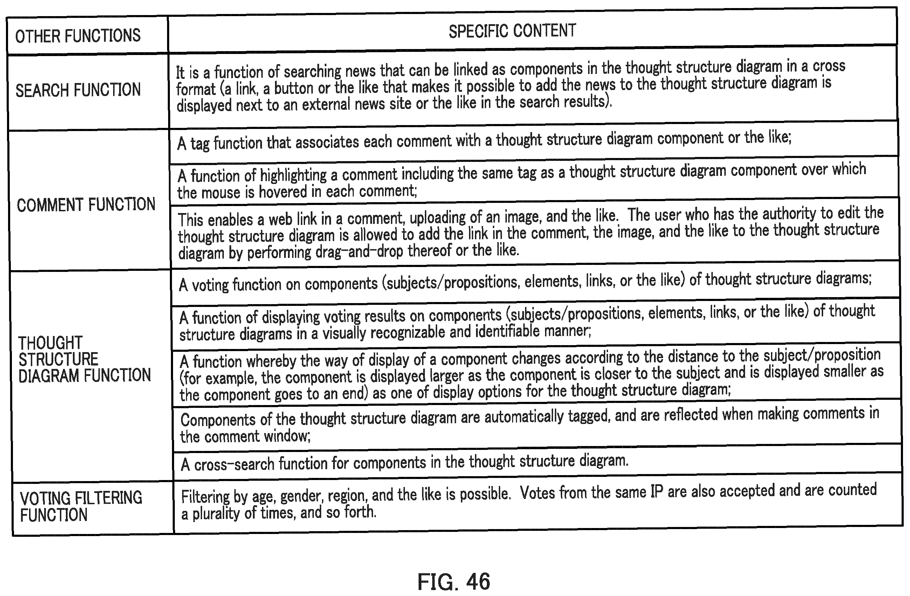

Note that, in the embodiments described above, a peripheral element not necessarily needs to be circular, a central element also not necessarily needs to be a rounded rectangle, and various shapes can be adopted. However, it is desirable that each element be easily visible and identifiable according to its function within the thought structure diagram, such as the shapes of the peripheral element and the central element. A line (link) connecting each element (node) not necessarily needs to be a straight line as illustrated in the embodiments described above. In a situation in which the line is a curved line, lines intersect with each other, or the like, a specific line shape or a specific form is used for the shape, the display method, and the like of a link, in response to the behavior of the mouse of a user. For example, when the mouse is hovered over a specific node, all possibilities are conceivable, such as the transparency of links other than a link(s) connected to the node increases, or the link(s) connected to the node is/are highlighted, and the like. Further, a link may have a "Y-shape", a "cross-shape", a "large-shape" or the like that connects three or more elements. FIGS. 41A to 41C are tables summarizing functions related to the thought structure diagram and specific contents thereof. FIGS. 42 to 46 are tables summarizing other functions of the above system and specific contents thereof.

It may be configured such that a group of peripheral elements that have been grouped may be considered as one large peripheral element, and voting or the like may be performed for each group. In a case where there are three or more options, in addition to selecting only one as in "A, B, or C", the order of A, B, and C may be determined. A pie chart may be divided by 120 degrees, and voting may be performed (in this case, it is configured such that "information reliability" voting is possible in a lower portion thereof, or pinch-in is performed). The thought structure diagram also corresponds to three or more options (four, five, six ...). It is also possible to display a plurality of thought structure diagrams on one canvas. The thought structure diagrams not necessarily need to be linked. It is also possible to link the thought structure diagrams together and set a large proposition/subject. A function of easily displaying a screenshot of the thought structure diagram or the like on other social media may be provided. Nodes may be searched not only based on tags, but also based on the types of the nodes. A function of searching thought structure diagrams having the same or similar nodes in the thought structure diagrams may be provided. A function of searching and comparing the same or similar thought structure diagrams may be provided. A function of, when a specific click is performed on each node, extracting only discussions related to each node and displaying a threaded comment section may be provided.

The thought structure diagram itself can also be stored as the central element or a peripheral element in another thought structure diagram. A detail confirmation window (with reactions on social media or the like) may be displayed by clicking on a node, hovering the mouse over a node, or the like. An automatic processing function may be provided that brings, as information element candidates, information in news sites and the like as "recommended articles/information", when new thought structure diagram is created, and coupling, comparison, reference or the like with a thought structure diagram of another agenda that includes the same (or very close) information node(s) may be recommended. Each information element may be cross-searchable. A function of automatically arranging links and elements (nodes) may be provided. A part of a text of news or the like used as an information element may be highlighted. The display method of the thought structure diagram is not necessarily limited to a two-dimensional display. A three-dimensional display, or a display using a hologram, VR, AR, or the like may be performed. Function of returning to the thought structure diagram with one touch of a button and incorporating a favorite news source by using a browser extension function or an application may be provided.

Different publication settings may be possible for each thought structure diagram, and the access authority for each thought structure diagram may be managed. A comment posting function in a thread format that is opened only to registered users (viewing is possible even for non-registered users), a tag function that associates each comment with a thought structure diagram component, and the like may be provided. Further, a function of highlighting a comment including the same tag as a thought structure diagram component over which the mouse is hovered or the like in each comment (conversely, when the mouse is hovered over (or the like) a component, a comment corresponding to the component is highlighted) may be provided.

A function of enabling a web link in a comment, uploading of an image, and the like may be provided, where the user who has the authority to edit the thought structure diagram is allowed to add the link in the comment, the image, and the like to the thought structure diagram by performing drag-and-drop or clicking a "button for performing addition to the thought structure diagram".

It may be possible to convert drag-and-drop of an image, a URL, or the like from outside the screen into a component. When a plurality of images is drag-and-dropped simultaneously, it may be possible to select whether "to cause the plurality of images to be a single peripheral element" or "to cause each of the plurality of imaged to be an independent peripheral element". A function in which the component is displayed larger as the component is closer to the subject and is displayed smaller as the component goes to an end may be provided. A function in which components of the thought structure diagram are automatically tagged, and are reflected when making comments in the comment window may be provided. A function of making comments on components in the thought structure diagram (the comments are displayed in a comment thread on the right side of the screen), and a function in which, when the mouse is hovered over a component (or a component is long pressed) or the like, a comment on the component is displayed in a pop-up manner, and when the displayed comment is clicked, the screen scrolls to the corresponding comment in the comment thread on the right side of the screen may be provided.

A function may be provided in which, when a component is clicked or the like, a detail confirmation window for the component opens, and at the same time, comments other than those with tags for the component are omitted in the comment section, and only comments posted by viewing users on the component are displayed (in addition, comments with tags corresponding to the subject itself may also be displayed simultaneously; what is important is that comments related to the component are extracted and the display of other comments are temporarily omitted).

In the case of zooming out, each thought structure diagram is basically reduced in a common manner, and when it is reduced to a certain extent or more, the subject/group name(s) and the like in each thought structure diagram are displayed. A function may be provided in which, in that state, each thought structure diagram is regarded as a component and is connected to another/other thought structure diagram(s), thereby enabling an edit of a thought structure diagram on a large scale. Votes from the same IP may also be accepted by age, gender, region, and the like and counted a plurality of times. However, an option of "counting votes from the same IP as one" may be prepared in the filtering function. A function of grouping voting users according to the voting content (for or against) and highlighting the groups may be provided.

The processing in various fields to which the present invention is applied and the effects thereof have been described based on the embodiments described above. However, the present invention is also applicable to, for example, generation of an assembly drawing, organization of materials on an image board, creation of a flowchart, and the like, and the same effects are achieved thereby.

The present invention has been described above with reference to embodiments, but the present invention is not limited to the embodiments described above. Various changes understandable by those skilled in the art within the technical scope of the present invention can be made to the configurations and details of the present invention. The technical scope of the present invention also includes a system or an apparatus that somehow combines different features included in the respective embodiments.

Further, the present invention may be applied to a system including a plurality of devices or may be applied to a single apparatus. Further, the present invention is also applicable even where an information processing program for implementing the functions of the embodiments is supplied to the system or apparatus and is executed by a built-in processor. A program installed in a computer to implement the functions of the present invention on the computer, a medium storing the program, a server for downloading the program, and a processor for executing the program also fall within the technical scope of the present invention. In particular, at least a non-transitory computer-readable medium storing a program that causes a computer to execute processing steps included in the embodiments described above falls within the technical scope of the present invention.

This application claims priority to Japanese Patent Application No. 2022-137221, filed on August 30, 2022, the entire disclosure of which is incorporated herein by reference.

## Claims

1. An information processing apparatus, comprising:
a central element acquisition unit that acquires a central element which is central to thought;
a central element display instruction unit that issues an instruction to a user terminal to perform a display of the central element;
a peripheral element acquisition unit that acquires a first peripheral element related to the central element;
a peripheral element display instruction unit that issues an instruction to the user terminal to perform a display of the first peripheral element around the central element;
a link acquisition unit that acquires a first link between the central element and the first peripheral element; and
a link display instruction unit that issues an instruction to the user terminal to perform a display of the first link between the central element and the first peripheral element.

2. The information processing apparatus according to claim 1, wherein
the central element includes a subject or a proposition, the subject or the proposition being central to the thought.

3. The information processing apparatus according to claim 1, wherein:
the peripheral element acquisition unit further acquires a second peripheral element related to the first peripheral element,
the peripheral element display instruction unit further issues an instruction to the user terminal to perform a display of the second peripheral element around the first peripheral element,
the link acquisition unit further acquires a second link between the first peripheral element and the second peripheral element, and
the link display instruction unit further issues an instruction to the user terminal to perform a display of the second link between the first peripheral element and the second peripheral element.

4. The information processing apparatus according to claim 3, wherein
the first link and the second link include a plurality of types of links.

5. The information processing apparatus according to claim 4, wherein
the plurality of types of links includes a link indicating a parent-child relationship, a link indicating an equal relationship, and a link indicating an opposition relationship.

6. The information processing apparatus according to claim 1, further comprising:
a publication unit that publishes, in response to a viewing request from the user terminal, a display screen of a thought structure diagram to the user terminal, the thought structure diagram including the central element, at least one of a plurality of the first peripheral elements, and at least one of a plurality of the links, the at least one of the plurality of links connecting the central element and the at least one of the plurality of first peripheral elements;
a storage unit that stores information on visibility in association with the thought structure diagram, the visibility restricting viewing of the thought structure diagram by the user terminal; and
a restriction unit that restricts, based on the information on the visibility, publication of the thought structure diagram by the publication unit.

7. The information processing apparatus according to claim 1, further comprising:
a voting result acquisition unit that acquires a vote from a user with respect to the central element; and
a voting result display instruction unit that instructs the user terminal to display a voting result on the central element, the voting result being a voting result in which the vote with respect to the central element has been collected.

8. The information processing apparatus according to claim 1, further comprising:
a voting result acquisition unit that acquires a vote from a user with respect to the first peripheral element; and
a voting result display instruction unit that issues at least one of an instruction to the user terminal to display a voting result on the first peripheral element and/or an instruction to the user terminal to display a voting result on the central element or a voting result on another peripheral element, the voting result on the first peripheral element being a voting result in which the vote with respect to the first peripheral element has been collected, the voting result on the central element or the voting result on the other peripheral element being a voting result in which reflection of the voting result on the first peripheral element has been performed in a destination of the first link.

9. The information processing apparatus according to claim 7 or 8, further comprising:
a voting result acquisition unit that acquires a vote from a user with respect to the first link; and
a voting result display instruction unit that instructs the user terminal to reflect a voting result on the first link and display the first link, the voting result being a voting result in which the vote with respect to the first link has been collected.

10. The information processing apparatus according to claim 9, wherein
the voting result display instruction unit causes a voting result to be reflected and generates the first link, the voting result being a voting result on whether the first link is generated between two elements.

11. The information processing apparatus according to claim 7, further comprising:
a condition acquisition unit that acquires a filtering condition for filtering the voting result; and
a filtering reflection unit that searches the voting result meeting the filtering condition and reflects the voting result, which has been searched, in at least one of the display of the central element, the display of the first peripheral element, and/or the display of the first link.

12. The information processing apparatus according to claim 8, wherein
the reflection of the voting result is indicated by at least one of a size change, a color change, a transparency change, a shape change, and/or a surrounding color change in at least one of the display of the central element, the display of the first peripheral element, and/or the display of the first link.

13. The information processing apparatus according to claim 1, further comprising:
a comment acquisition unit that acquires a comment from a user on one of the central element, the first peripheral element, the first link, and a thought structure diagram, the thought structure diagram including the central element, the first peripheral element, and the first link; and
a comment display instruction unit that instructs the user terminal to display the comment.

14. The information processing apparatus according to claim 13, wherein
the comment display instruction unit instructs the user terminal to display in an identifiable manner on which of the central element, the first peripheral element, and the first link the comment is.

15. The information processing apparatus according to claim 3, further comprising
an editing unit that modifies one of a plurality of the instructions to the user terminal to perform the display corresponding to the one of the plurality of instructions, in response to an instruction to perform a change in the first peripheral element or the second peripheral element, an instruction to perform addition of a third peripheral element related to the central element, an instruction to perform addition of a fourth peripheral element related to the first peripheral element or the second peripheral element, an instruction to perform addition of a third link between the central element and the third peripheral element, or an instruction to perform addition of a fourth link between the first peripheral element or the second peripheral element and the fourth peripheral element, from the user terminal.

16. The information processing apparatus according to claim 15, wherein
the editing unit includes an editing authority confirmation unit that confirms whether a user who has issued the instruction to perform the change or one of a plurality of the instructions to perform the addition corresponding to the one of the plurality of instructions has editing authority.

17. The information processing apparatus according to claim 16, wherein
in a case where the user has limited editing authority in which the editing authority is limited, the editing authority confirmation unit approves or rejects an edit by the user who has issued the instruction to perform the change or the one of the plurality of instructions to perform the addition corresponding to the one of the plurality of instructions, in accordance with voting results for approval by a plurality of other users.

18. An information processing method, comprising:
acquiring a central element which is central to thought;
instructing a user terminal to display the central element;
acquiring a first peripheral element related to the central element;
instructing the user terminal to display the first peripheral element around the central element;
acquiring a first link between the central element and the first peripheral element; and
instructing the user terminal to display the first link between the central element and the first peripheral element.

19. An information processing program causing a computer to execute:
acquiring a central element which is central to thought;
instructing a user terminal to display the central element;
acquiring a first peripheral element related to the central element;
instructing the user terminal to display the first peripheral element around the central element;
acquiring a first link between the central element and the first peripheral element; and
instructing the user terminal to display the first link between the central element and the first peripheral element.

20. An information processing apparatus, comprising:
an acquisition unit that acquires an information correlation diagram from a first user terminal operated by a first user, the information correlation diagram including at least two graphic elements and expressing a comment of the first user, the at least two graphic elements indicating a difference in importance of information in an identifiable manner; and
a display instruction unit that instructs a second user terminal to display the information correlation diagram in order to transmit the comment to a second user, the second user terminal being operated by the second user.

21. An information processing apparatus, comprising:
an acquisition unit that acquires a comment of a first user from a first user terminal operated by the first user;
a generation unit that generates an information correlation diagram, the information correlation diagram including at least two graphic elements and expressing the comment, the at least two graphic elements indicating a difference in importance of information in an identifiable manner based on an analysis of the comment; and
a display instruction unit that instructs a second user terminal to display the information correlation diagram in order to transmit the comment to a second user, the second user terminal being operated by the second user.
